(19) Europäisches Patentamt
European Patent Office
Office européen des brevets

(11) EP 1 387 421 A1

(12) **EUROPEAN PATENT APPLICATION**
published in accordance with Art. 158(3) EPC

(43) Date of publication:
**04.02.2004 Bulletin 2004/06**

(21) Application number: **02707211.5**

(22) Date of filing: **28.03.2002**

(51) Int Cl.[7]: **H01M 4/60**, H01M 10/40, C08G 75/14

(86) International application number:
**PCT/JP2002/003053**

(87) International publication number:
**WO 2002/082569 (17.10.2002 Gazette 2002/42)**

(84) Designated Contracting States:
**AT BE CH CY DE DK ES FI FR GB GR IE IT LI LU MC NL PT SE TR**

(30) Priority: **30.03.2001 JP 2001102704**

(71) Applicants:
- **Naoi, Katsuhiko**
  **Koganei-Shi, Tokyo 184-8588 (JP)**
- **Naoi, Kenzo**
  **Takamatsu-Shi, Kagawa 760-0080 (JP)**
- **Aoi Electronics Company Limited**
  **Takamatsu-shi, Kagawa Prefecture (JP)**

(72) Inventors:
- **NAOI, Katsuhiko, c/o Tokyo University**
  **Koganei-Shi, Tokyo 184-8588 (JP)**
- **SUEMATSU, Shunzo, c/o Tokyo University**
  **Koganei-Shi, Tokyo 184-8588 (JP)**
- **WAKABAYASHI, Toshiki, c/o Tokyo University**
  **Koganei-shi, Tokyo 184-0012 (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

# (54) ENERGY STORING DEVICE MATERIAL FROM HETEROCYCLIC ORGANIC SULFUR COMPOUND AND METHOD OF DESIGNING IT

(57) A guide in exploring a high-performance heterocyclic organosulfur compound oriented for practical use. A novel energy storage device material produced from the heterocyclic organosulfur compound and having a higher specific capacity and a higher power density.

A method of designing a novel compound characterized by combining an increase in disulfide part and polysufidation for an increase in theoretical specific capacity when designing an energy storage device material from a heterocyclic organosulfur compound. Increasing of electron attraction of an organic part and decreasing of electron density in disulfide bonds are combined for an increase in electrode reaction rate. The method is characterized by employing a concept of producing a supramolecule to increase a specific capacity and power density. An energy storage device material obtained from a heterocyclic organosulfur compound designed by the above method.

Fig.27

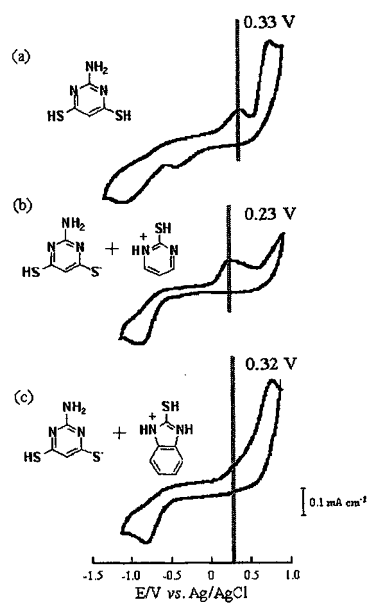


EP 1 387 421 A1

## Description

Technical Field

The present invention relates to an energy storage device material produced from a heterocyclic organosulfur compound and having a higher specific capacity and a higher power density, and also relates to a method of producing the material.

Background Art

Presently, with remarkable development of the electronics technology, we are in an era where people cannot live without products using batteries, such as pocketsize calculators, word processors, personal computers, liquid crystal TVs, and cellular phones. Along with the LSI technology, batteries take a primary role in this mobile era.

The history of batteries is coincident with development of electronics equipment in which the batteries are used. In addition, the batteries have been developed while being greatly affected by the social environment from time to time. In the history of batteries, a period of about 20 years after 1960 is called an era of first battery revolution. During that period, a preceding era of manganese dry cells and lead-acid batteries has ended, while an era of not only primary batteries, such as alkaline manganese batteries, mercury batteries, silver oxide batteries and various lithium batteries, but also NiCad batteries has begun. Lithium primary batteries have been mainly developed in the form of coil-type batteries for use as memory backups. Since about 10 years ago, however, a lithium primary battery having a tubular external appearance and an internal structure with spiral thin-film electrodes has become prevalent as power sources for full automatic cameras, and has established a large market.

Also, since about 15 years ago, information terminal devices have spread from offices to a personal level with a tendency toward portable and personal units, and a demand for a reduction of size and weight and a longer service time has increased. Correspondingly, the secondary battery revolution has begun, and nickel-hydrogen batteries and lithium ion secondary batteries, which are rechargeable and have a high energy density, have been put into practice one after another. As compared with the lead-acid batteries and the NiCad batteries, the nickel-hydrogen batteries and the lithium ion secondary batteries have a higher energy density and their markets have greatly increased in recent years.

At present, research of batteries using metals lithium has been vigorously conducted with the view of improving the performance and reducing the size and weight of the secondary batteries. Lithium metals enable much larger energy to be taken out than the other types of secondary batteries. While the secondary batteries using lithium metals as anodes (negative electrode) have not yet been practiced from the standpoints of cycle characteristic and safety, they are greatly expected as ultimate batteries.

After being put into practice in 1991, the lithium ion secondary batteries exhibiting a very high energy density have showed a drastic increase in volume of production in these several years and are now at a top rank of various small-sized secondary batteries. Those lithium ion secondary batteries are primarily used as power sources of small-sized portable devices represented by notebook type personal computers and cellular phones, while their development is also vigorously conducted in pursuit of other applications such as electric cars.

At the beginning, studies have been primarily focused on batteries using a lithium metal itself as an anode active substance. The reason is that, among metals, lithium has the basest potential (- 3.045 V on the basis of a standard hydrogen electrode) and a very large theoretical specific capacity of 3860 Ah $kg^{-1}$, and therefore it is expected to provide a larger energy density than other conventional batteries using, as an anode, heavy metals such as lead, cadmium and zinc. However, the lithium metal secondary batteries have problems that, since lithium is precipitated in the form of a very active dendrite (arborescent crystal), a utilization rate of the anode is reduced and a sufficient cycle life cannot be obtained, and that internal short-circuiting and a reduction of safety may occur. Thus, the development of lithium secondary batteries has begun in 1960's in USA for space research and military purposes, but widespread use of the lithium secondary batteries has not been realized because of limits in service life and safety.

A recent tendency toward smaller-sized, more lightweight and portable units of various electronic equipment has promoted development of high-performance secondary batteries, i.e., safe and long-life lithium secondary batteries, instead of disposable primary batteries, from the viewpoints of economy, environment friendliness, and convenience. Then, as cathode (positive electrode) active substances, compounds having a tunnel structure and a layered structure each allowing lithium ions to associate with and dissociate from it, substances having an amorphous structure, etc. have been studied, and many expectable substances have been developed. As anode active substances, various lithium alloys have been studied instead of lithium. However, there is still left a problem in ensuring the cycle life and safety in the event of a battery abnormality.

Under that situation, studies have begun in pursuit of utilizing the lithium in the stable form as a lithium ion by occluding lithium in a host substance. A lithium secondary battery was publicized in 1990 and has been put into

markets for cellular phones from 1991. In the lithium ion secondary battery, a lithium compound of transition metal oxide represented by lithium cobalt oxide ($LiCoO_3$) is used as a cathode, a carbon material with lithium ions occluded therein is used as an anode, and an organic solvent added with a lithium salt is used as an electrolytic solution. Lithium cobalt oxide allows lithium to freely go into and out of gaps between crystal layers, and carbon also allows lithium to freely go into and out of gaps between crystal layers. In a stage after assembly of the battery, all of lithium is held in the cathode active substance, and no lithium is present in the anode carbon; namely, the battery is in a discharged state. Once the battery is charged, the lithium present in the cathode is taken into the anode carbon. When the battery is discharged, some lithium is fixed in the carbon. In other words, lithium is not all returned to the lithium cobalt oxide and a part of lithium is left in the carbon. Subsequently, charge and discharge are repeated in such a condition.

The biggest merit of the lithium ion battery resides in that it has succeeded in almost perfectly solving the dendrite problem mentioned above. The dendrite problem is not specific to lithium, and always occurs with metal precipitation from metal ions. A similar problem also occurs in cadmium as well. It has been tried to use, as an anode of the secondary battery, zinc having a higher energy density than cadmium, but such a try is not yet succeeded because of the dendrite problem. Thus, since the lithium ion secondary batteries have advantages of high energy density, high safety and long life, their applications as power sources for small-sized portable equipment have rapidly increased.

In addition to the lithium cobalt oxide, lithium nickel oxide ($LiNiO_2$), spinel type lithium manganese oxide ($LiMn_2O_4$), composite oxides of them, etc. are primarily used as cathode active substances in the lithium ion secondary batteries. The reason why $LiCoO_2$ has been first commercialized resides in that it is easier to synthesize, has a longer charge/discharge cycle life, and is relatively easy to handle. However, because cobalt is expensive and produced in limited districts, replacement by any other more suitable compound is also considered. $LiNiO_2$ has a higher capacity and is more inexpensive than $LiCoO_2$, but it is not easy to produce. $LiMn_2O_4$ is most inexpensive and highly expected in future, but it is disadvantageous in that the discharge capacity is small and the charge/discharge cycle life, in particular, at high temperatures tends to be shorter than the other materials.

4 V batteries have been primarily studied from the standpoint of energy density. In consideration of stability of an organic electrolytic solution and lowering of the driving potential of electronic circuits, such as LSI circuits, however, there is a possibility of development of batteries operating at 3 V or lower voltages.

As cathode materials having high specific capacities, manganese oxide ($LiMn_2O_4$), vanadium oxides ($V_3O_8$, $V_2O_5$ and $V_6O_{13}$), etc. are developed. It is also confirmed that sulfides, such as titanium disulfide ($TiS_2$), iron disulfide ($FeS_2$) and molybdenum disulfide ($MoS_2$), exhibit satisfactory charge/discharge cycle life. Further, various studies are conducted on utilizing reduction/oxidation reactions of organic compounds. For disulfide compounds of organic compounds containing sulfur, electrode reactions are based on that the compound polymerizes with the oxidation reaction during charge, and depolymerizes with the reduction reaction during discharge. The lithium ion secondary batteries are products developed not so long time ago, and a pursuit of various cathode compounds is still continued.

The term "polymer lithium secondary batteries" means all kinds of batteries in which a high-molecule material, i.e., a polymer, is used as at least one of three battery elements, i.e., a cathode, an anode, and an electrolyte. The polymer lithium secondary batteries are classified depending on which one of the three elements is made of a polymer. A battery using a polymer as an anode is not yet put into practice. Although such a battery is feasible from the principle point of view and has been proposed in the past, it is not included in batteries much talked at present. A major object in using a polymer as the electrolyte is to perfectly prevent an electrolytic solution from leaking, and a minor object is to realize a smaller thickness and to provide more flexibility in shape. On the other hand, an object in using a polymer as the cathode is to increase an energy density. A battery with a cathode made of conductive high molecules first came on a market about 1980. That battery was developed in view of a high ion-doping amount of conductive high molecules and was intended to realize a high-energy density battery, but it has totally went down at the end of 1980s because of facing a big deadlock. An intrinsic polymer electrolyte battery and a gel polymer electrolyte battery are intended to reduce a battery thickness and to a high-safety battery free from a solution leakage by employing a polymer as the electrolyte. The intrinsic polymer electrolyte battery is made up of only a polymer and an electrolyte salt, and its application as a battery operating at high temperatures is studied because of having a low ion conductivity. The gel polymer electrolyte battery is intended to increase the ion conductivity by adding a plasticizer to an intrinsic polymer, and its application to consumer-oriented equipment is expected in near future as the type operating at the normal temperature. Each of the intrinsic polymer electrolyte battery and the gel polymer electrolyte battery was first proposed about the middle of 1970s earlier than the battery with the cathode made of conductive high molecules, but it has really become the topic of interest in era from the latter half of 1980s to the beginning of 1990s. A battery with a cathode made of a sulfur polymer is one using a polymer of a sulfur-based compound as the cathode and is apparently expected to provide a much higher energy density than levels of currently available batteries. However, such a battery has many problems to be solved in, e.g., cycle characteristic, load characteristic, and temperature characteristic. The following description is made in more detail of the battery with the cathode made of conductive high molecules and the battery with the cathode made of a sulfur polymer, which are both classified as polymer cathode batteries.

As to the cathode made of conductive high molecules, it was found and reported in 1977 that when cis-polyacetylene synthesized using an improved Ziegler-Natta catalyst ($Ti(OC_4H_9)$-$Al(C_2H_5)_3$-based catalyst) was exposed to oxidizing gas, e.g., $AsF_5$, high molecules themselves were easily oxidized and became a high molecule material having a high electrical conductivity at a level unexpected from the chemical common knowledge so far prevailed (Wakabayashi, et al., "Proceedings of 2000-year *Denkikagaku Shuki Taikai* (Electrochemical Autumn Meeting)", 1G22, p.109(2000)). Then, it was discovered in 1979 that, as a result of examining electrochemical characteristics of a platinum electrode, which was coated with polyacetylene, in a non-aqueous electrolytic solution, polyacetylene was able to oxidize or reduce electrochemically and to become p- and n-type conductive high molecules, and that respective reversed reactions of those reactions were able to take place electrochemically (L. Brunsveld et al., MRS BULLETIN, APRIL, 49(2000). This discovery started, as described above, a new era of "polymer batteries" using an organic substance (particularly conductive high molecules) as an active substance of a secondary battery. At that time, because practically available secondary batteries were only ones using heavy metals, such as NiCad batteries and lead-acid batteries, the advent of a lightweight and harmless active substance, i.e., a polymer, gave a big impact upon the battery industries.

Polyacetylene, polyaniline, polypirrole, polythiohene, and poly(p-phenylene) are typical π-conjugated conductive high molecules. Examples of normal chain π-conjugated high molecules subjected to chemical doping include polyacetylene (PA), poly(p-phenylene) (PPP), and so on. For polyacetylene, n-type conductive high molecules are formed by electrochemical oxidation and p-type conductive high molecules are formed by electrochemical reduction, as mentioned above. In some era, therefore, studies were also made on construction of a perfect polymer battery using high molecules as both electrodes, i.e., employing the former oxidation reaction for the cathode and the latter reduction reaction for the anode [3,4]). From the practical point of view, i.e., for the reasons of a low output voltage and a low energy density, however, main endeavors have shifted toward studies on lithium polymer batteries using lithium as an anode and polyacetylene as a cathode.

Polypirrole (PPy), polyaniline (PAn), polythiohene (PT), etc. are π-conjugated high molecules produced by electrochemical polymerization and doping. For polypirrole and polyaniline, only p-type conductive high molecules are electrochemically formed. Therefore, although some studies have been conducted on a battery using the same high molecule as both the cathode and the anode, a secondary battery using lithium as the anode has been primarily developed of necessity. For polythiohene, similarly to polyacetylne, n- and p-type conductive high molecules can be both formed. However, studies on utilizing, as the anode reactions, the formation of the n-type conductive high molecules by reduction and the oxidation reaction of those conductive high molecules are hardly reported.

Those conductive high molecules are advantageous in that start materials are safe, inexpensive and stably supplied. It is therefore doubtless that, if those conductive high molecules are used in large amount in various fields, a great practical value is ensured. Accordingly, studies on using the conductive high molecules as cathode active substances in modified batteries and ultra-miniature batteries have also been recently conducted in addition to the lithium secondary batteries. In particular, the conductive high molecules require no baking unlike inorganic compounds (especially metal oxides) used as active substances, and can be produced by electrolytic polymerization or coating. It is hence easier to incorporate the conductive high molecules in electronic devices in practical use. Presumably, establishment of such technology is usefully applicable to not only batteries for memory backups whose development has already been started, but also to power sources for driving micromachines in future. For that reason, it is an important theme to develop the techniques capable of easily manufacturing miniature batteries for the present, taking into account a combination of the anode and the electrolyte as well. While there are several problems to be overcome, development of large-sized batteries using the conductive high molecules will also have to be made as a matter of course in consideration of the advantage of the conductive high molecules, i.e., stable supply of start materials.

As to a sulfur-based cathode, sulfur (S) reacts with lithium to produce $Li_2S$. This lithium sulfide is an interesting material having a very high specific capacity of 1165 Ah $kg^{-1}$ and exhibiting an energy density of 2330 Wh $kg^{-1}$, which is 17 times 137 Wh $kg^{-1}$ of $LiCoO_2$, when an voltage is assumed to be 2 V. In the past, as batteries using inorganic sulfur as an electrode active substance, there was well known a sodium - sulfur battery operating at high temperatures and utilizing a combination of sulfur and sodium. The sodium - sulfur battery was publicized in 1966 from one of the Big Three, i.e., Ford Motor Co. in USA, and employed molten metal sodium (Na) as an anode, molten sulfur as a cathode, and β-alumina-(β-$Al_2O_3$) having sodium ion conductivity as an electrolyte. From the electromotive equation, a theoretical energy density was 760 Wh $kg^{-1}$.

Recently, in addition to the above sodium - sulfur battery, other studies have also been made on batteries with attention focused on sulfur. Sulfur-based compounds used in those batteries are mainly grouped into active sulfur, polycarbon sulfides, and organic disulfide compounds. Those three typical sulfur-based compounds also exhibit theoretical specific capacities in the range of 3 times to 13 times at maximum as compared with general conductive high molecules and various lithium metal oxides.

The term "active sulfur" means an electrochemically active simple sulfur, and a battery using the active sulfur is proposed by Poly Plus Co. in USA. The electrochemical equivalent of simple sulfur is 16 and has a very high theoretical specific capacity of 1675 Ah $kg^{-1}$. Then, the active sulfur is obtained through the steps of dissolving simple sulfur and a polymer electrolyte or a gel polymer electrolyte in a diluent, e.g., acetonitrile, mixing carbon black and DMcT in the diluted solution, stirring the mixture for a long time to prepare a homogeneous slurry, and then casting and drying the slurry. When the active sulfur is combined with metallic lithium, a voltage of 1.8 to 2.6 V is produced.

Because the simple sulfur has no electronic conductivity, a large amount of carbon conductivity aids are required in an electrode and the sulfur amount is restricted to about 50 %. In spite of such a restriction, the specific capacity of 800 Ah $kg^{-1}$ (electrode) is obtained and a high utilization rate of 90 % is achieved even with the use of intrinsic SPE under discharge of 0.1 mA $cm^{-2}$ at 90 °C. When such a battery is used at 30 °C using gel SPE, the specific capacity of 1000 Ah $kg^{-1}$ (S) is obtained at 0.02 mA $cm^{-2}$ and the specific capacity of 700 Ah $kg^{-1}$ (S) is obtained at 0.1 mA $cm^{-2}$. For the battery operating at 90 °C, data of cycle characteristic shows that the end-point voltage does not change consistently at 400 Ah $kg^{-1}$ (S) until 37 cycles. However, the depth of charge (DOC) is merely 25 % and the techniques capable of performing charge and discharge at a larger depth are not yet realized at present. Another problem is that the simple sulfur produces $Li_2S_x$ during charge and the produced $Li_2S_x$ is dissolved into the electrolyte.

As to batteries using polycarbon sulfides, Moltech Corporation in USA studies a battery using, as a cathode, a composite electrode made of a polycarbon sulfide compound $[(CS_x)_{n]}$, in which R of $(SRS)_n$ is carbon (C), and π-conjugated conductive high-molecules, i.e., polyaniline. $(CS_x)_n$ develops charge and discharge while keeping a high-molecular state and is expected to provide an energy density of at least 680 Ah $kg^{-1}$ that is twice or more as compared with general oxide electrodes. While there are various polycarbon sulfide compounds, a larger value of y/x in $C_xS_y$ is more advantageous from the standpoint of energy density.

Lately, Moltech Corporation also reports a polycarbon sulfide having an even higher energy density, which is called a conjugate carbon sulfide.

In the conjugate carbon sulfide, a carbon chain is made up of conjugate double bonds coupled to each other and a number 10 to 20 of S are coupled in the ring form to each of the double bonds. It is theoretically said that S dissociates from the ring during discharge to form $Li_2S_x$, which is dissolved into the electrolyte, but the dissociated S couples again in the ring form to the main chain duirng charge. In practice, however, the charge efficiency is fairly low and a satisfactory cycle characteristic is not yet obtained at present.

As to organic disulfide compounds, the group of S. J. Visco et al. in Lawrence Berkeley National Laboratory, California University in USA thought that, when an organosulfur compound (mercaptan or thiol) having a mercapto (sulphydryl) group (-SH group) was oxidized, a disulfide bond (-S-S-) was formed, and when it was reduced, thiol was restored again, and that those oxidation and reduction reactions were applicable to storage of energy. Based on that idea, the group proposed the use of an organosulfur compound as a cathode material of a lithium secondary battery by applying the creation of the S-S bond due to the oxidation reaction to charge of the battery and the cleavage of the S-S bond due to the reduction reaction to discharge of the battery.

The organic disulfide compounds can be said as being highly expectable as materials of high-energy-density secondary batteries because the theoretical energy density is in the range of 650 to 1240 Wh $kg^{-1}$, i.e., one order of magnitude higher than that of the lead-acid battery and the NiCad battery, and start materials are inexpensive and harmless.

Visco et al. fabricated polymer lithium batteries using various organic disulfide compounds as cathode active substances, and evaluated charge and discharge characteristics of the fabricated batteries.

As a result, it is reported that, for 2,5-dimethylcapto-1,3,4-thiadiazole (DMcT) and trithiocyanuric acid (TTCA) each having a carbon atom in the α site, a satisfactory cycle characteristic (80 to 350 cycles) is obtained by the measurement at temperatures from 80 °C to 100 °C.

On the other hand, it is also reported that tetrathioethylene-diamine having a nitrogen atom at the α site of a sulfur atom decomposes when repeatedly subjected to charge and discharge, and therefore it is not suitable as the cathode material.

Further, Visco et al. examined an electrode reaction rate as a factor affecting important parameters of battery characteristics, i.e., the power density and the cathode utilization rate, by using various organic disulfide compounds. More specifically, analysis was carried out from the viewpoint of chemical kinetics by utilizing cyclic voltammetry (CV), rotary electrodes, chronoamperometry, chronocoulometry, etc. From the analysis, it was apparent that the electrode reaction rate was dependent on the type of an atom near the disulfide bond in an organic skeleton. In particular, it is reported that the atom having large electron attraction imposes a large influence and the reaction rate is increased with nitrogen, sulfur, fluorine or the like occupying the α and β sites of the disulfide bond.

While the organic disulfide compounds are interesting because of having the above-mentioned characteristics, especially a high discharge capacity, several problems still remain in realizing applications to practical batteries.

First Problem: The electrode reaction rate of the organic disulfide compound is increased near at the room temperature or in a lower temperature range with the effect of substitution groups having large electron attraction, but it is not yet satisfactory at present. The electrode reaction rate must be further increased to realize the practical use as the battery material.

Second Problem: Oligomers (thiolate anions) generated during reduction (discharge) migrate toward the anode side and react with a lithium metal, whereby the cathode utilization rate is reduced. Hence, the thiolate anions must be surely fixed to the cathode.

Third Problem: Because the organosulfur compound is an insulator in itself, a conductor, e.g., carbon, must be added, thus resulting in a reduction of the specific capacity of the cathode itself. Therefore, the organosulfur compound is required in itself to have an even higher specific capacity. Also, it must be taken into consideration to prevent polarization during quick charge and discharge when carbon is added.

Although the organic disulfide compounds face the various problems to be overcome for realizing the practical use as described above, energy storage materials using organic materials, especially organosulfur compounds having high specific capacities, are thought as being indispensable in future, taking into account the modern society in which a further reduction in size and weight of the energy storage materials is demanded and great importance is placed on protection of the global environment. In order to overcome the above-mentioned problems, various studies have been conducted in recent years. Several examples of the approach for practicing the organic disulfide compounds are described below.

Lately, regarding a DMcT - polyaniline composite electrode, Koyama et al. found that polyaniline as a $\pi$-conjugated conductive high molecule had a catalyst action for increasing the reduction/oxidation reaction rates of DMcT, and also showed a possibility that DMcT having a higher energy density can be used as a cathode active substance of a secondary battery operating at the normal temperature by forming a composite of DMcT and polyaniline. In the DMcT - polyaniline composite electrode, polyaniline functions as a catalyst for increasing the reduction/oxidation reaction rates of DMcT, as a molecule collector for giving conductivity to the cathode material, and as a cathode active substance. However, even when DMcT and polyaniline are mixed in a powder state, molecules are not all allowed to take part in the reaction because DMcT has no conductivity, and hence a sufficient energy density cannot be obtained. In view of the above, Koyama et al. has succeeded in obtaining a charge/discharge capacity with a theoretical value of not less than 80 % by dissolving polyaniline in N-methylpyrrolidone (NMP) along with DMcT, coating the resulting solution over a collector, and evaporating the solvent to form a film so that DMcT and polyaniline are mixed with each other at a molecule level.

Further, one thiol group of DMcT acts as a very strong acid. In other words, DMcT serves as a proton source to provide protons to polyaniline, and hence takes a role to prevent polyaniline form losing activity due to deprotonation. It is also reported that, when using copper as the collector, a discharge current can be drastically increased, a flatter discharge voltage can be obtained, and a cycle characteristic of not less than 250 cycles can be realized at a high current density of 1 to 0.5 C. The mechanism providing such a result is not yet clarified, but it presumably resides in that the interaction between copper ions and thiols or the formation of a complex enables electrons to be quickly transferred at a certain potential.

When using the organic disulfide compound as the cathode material of the lithium battery for achieving a higher energy density with polysulfidation, as described above, a major drawback is experienced in that, because the organic disulfide compound is an insulator, a conductivity aid must be added and hence a great advantage, i.e., a high specific capacity, is impaired. To overcome the drawback, Naoi et al. tried to design and synthesize a compound (organic polysulfide compound) having a high specific capacity by expanding the concept of disulfide creation and cleavage reactions and polysulfidating the disulfide bond into tri- and tetra-sulfide bonds, for example. It is then clarified that, for all of organic disulfide compounds, as the disulfide bond is polysulfidated into tri- and tetra-sulfide bonds, the theoretical specific capacity increases in a trisulfide compound to a level about 1.8 times that of the disulfide compound, and in a tetrasulfide compound to a level 2 - 2.5 times that of the disulfide compound.

For focusing attention to change of the specific capacity with an increase in the number of sulfur atoms, particularly, Naoi et al. also tried to polysulfidate a dimer, i.e., 5-methyl-1,3,4-thiadiazole-2-thiol (MTT), as a model compound. Fig. 35 shows cyclic voltammograms of disulfide, trisulfide and tetrasulfide compounds of MTT. A large reduction peak appears near - 0.1 V for all of the disulfide, trisulfide and tetrasulfide compounds, and two new reduction peaks appear in the more negative potential side for the trisulfide and tetrasulfide compounds. With the appearance of those two reduction peaks, the discharge capacity increases in the trisulfide compound to a level 1.23 times that of the disulfide compound, and in a tetrasulfide compound to a level1.33 times that of the disulfide compound.

Also, it is tried to polymerize DMcT, as a typical organic disulfide compound, so as to include disulfide, trisulfide and tetrasulfide bonds, and to make a discharge test on them. As a result, it is reported that the discharge capacity (energy density) of poly(DMcT) disulfide is 154 Ah $kg^{-1}$ (385 Wh $kg^{-1}$), while it increases with an increase in the number of sulfur atoms, i.e., 236 Ah $kg^{-1}$ (590 Wh $kg^{-1}$) for the trisulfide and 280 Ah $kg^{-1}$ (700 Wh $kg^{-1}$) for the tetrasulfide compound.

As to fixing of an organosulfur compound into a basic polymer matrix, it is reported so far from various analyses of the disulfide creation and cleavage mechanisms for DMcT that the electrode reaction rate of DMcT on the oxidation side is increased by forming a basic atmosphere. Such an increase in the oxidation reaction rate of DMcT is confirmed, for example, by adding various basic compounds (pyridine, imidazole and di-n-butylamine) to a solution of 10 mM

DMcT + 0.2 M $LiClO_4$/PC. Among those systems, the pyridine added system shows the best symmetry and a narrow peak separation in the cyclic voltammogram. In view of that result, Naoi et al. tried to overcome the above-described problems as to the organic disulfide compound, i.e., the slow electrode reaction rate and the migration of reductants in the form of olygomers toward the anode side, by employing a vinyl polymer having pyridine groups with the intent to increase the electrode reaction rate of DMcT with the aid of the basic interface and to fix the olygomers into a polymer matrix.

In Fig. 36, (a) shows a cyclic voltammogram of DMcT coated on a BPG electrode in a stationary state, (b) shows a cyclic voltammogram measured after immersing a polyvinylpyridine (PVP) coated electrode in the solution of 10 mM DMcT + 0.2 M $LiClO_4$/PC for 30 minutes, and (c) shows a cyclic voltammogram measured after immersing that electrode in the same solution for 60 minutes. In the typical cyclic voltammogram [Fig. 36(a)] of DMcT, an oxidation peak $P_a$I corresponds to creation of a radical species (-S·) from -SH (partially - $S^-$) which induces creation of the disulfide bond, and an oxidation peak $P_c$I corresponds to cleavage of the disulfide bond. On the other hand, in the cyclic voltammograms of DMcT on the PVP coated electrode, there occur an increase of current value during both the reduction and the oxidation and a decrease of peak separation. [See Figs. 36(b) and 36(c)] Such an increase of current value indicates that DMcT molecules are concentrated and fixed in a PVP film. Regarding the oxidation peak potential, $P_a$II and $P_a$III for the DMcT/PVP systems are shifted about 400 mV toward the negative side as compared with $P_a$I for the uncoated electrode. This shift is thought as being attributable to the effect of forming the basic atmosphere. Further, looking at $P_c$III in Fig. 36(c), it is shifted about 100 mV toward the positive side as compared with $P_c$I. It is thus understood that PVP promotes not only the creation of the disulfide bond, but also the cleavage reaction of it. According to the review by Naio et al., such a result is caused depending on the immersion time and an increase in affinity of PVP (concentration effect).

Based on the above experiment results, Naoi et al. reports a model of the reduction/oxidation mechanism of DMcT in the PVP film. Two thiol groups of DMcT have different values of pKa. In a monomer, a thiolate anion produced from one thiol group having a smaller value (= 2.5) of pKa and quaternized pyridine form an ion pair, and δ- of a thionic group produced from the other thiol group develops electrostatic interaction (coordination) with δ+ of a pyridine group. Presumably, those effects serve to suppress migration of oligomers as reductants. It is also thought that, in a high polymer, a thionic group at the end of the polymer exists while coordinating with a pyridine group. The above-described reaction mechanism increases the electrode reaction rate of DMcT and promotes fixing of oligomers in the PVP film. However, the coexistence of PVP as the cathode active substance reduces the specific capacity, and hence the organic disulfide compound is required in itself to have an even higher specific capacity.

Regarding novel conductive high molecules having disulfide bonds, Naoi et al. pay attention to, as a novel active substance, poly(2,2'-dithiodianiline)[poly(DTDA)] and reports electrochemical characteristics of it. Poly(DTDA) is a compound having various advantages, i.e., (1) a high theoretical specific capacity in the range of 231 Ah $kg^{-1}$ (when doped with dopants) to 330 Ah $kg^{-1}$ (self-doping type), (2) having electronic conductivity, (3) suppression of migration of reductants which are also high polymers, (4) an increased electrode reaction rate (catalyst effect of polyaniline). A point to be particularly noted is that, while the conventional sulfur compounds each creates (polymerize) or cleaves (monomerize) the disulfide bond with incidental structural change of a molecule main chain, poly(DTDA) does not accompany a major structural change with the coupling and cleavage because the disulfide bond exists as a side chain of the polymer.

In a non-aqueous solution, poly(DTDA) exhibits relatively high values as reduction and oxidation potentials of the disulfide bond, i.e., the reduction potential of 3.0 V vs. Li/Li* and the oxidation potential of 3.3 V vs. Li/Li*. Also, from measurement results of a UV spectrum and a surface enhanced Raman spectrum, it is thought that, in a most oxidized state, poly(DTDA) is present with a main chain having a positively charged quinoid structure in which anions are partly doped, and a side chain having a disulfide bonded structure. When reducing poly(DTDA) in that state, charges of the main chain are first decreased, whereupon the compensating anions are de-doped. Almost at the same time, the disulfide bond cleaves to produce thiolat anions. It is estimated that the produced thiolat anions are compensated by lithium ions in the electrolytic solution, or form an intermediate including self-doping to compensate for positive charges of the π-conjugated system. Also, presumably, as the negative potential increases, the main chain becomes neutral and the anions are completely de-doped so that the self-doped thiolate anions are compensated by the lithium ions in the solution.

Further, from a discharge test using poly(DTDA) as the cathode active substance, a lithium metal as the anode, and a polyacrylonitrile-based gel electrolyte as the electrolyte, superior voltage flatness (about 2.5 V) is resulted at a current density of 0.05 mA $cm^{-2}$ and a very high specific capacity of 270 Ah $kg^{-1}$ (energy density; 675 Wh $kg^{-1}$, cathode utilization rate; 81 %) is obtained. The obtained specific capacity is much higher than the theoretical specific capacity of polyaniline, and the resulting voltage flatness is also excellent. It is hence thought that the cleavage reaction of disulfide and the redox reaction of the π-conjugated system having the polyaniline structure take place substantially at the same potential.

Disclosure of the Invention

An object of the present invention is to provide a guide in exploring a high-performance heterocyclic organosulfur compound oriented for practical use. Another object of the present invention is to provide a novel energy storage device material produced from the heterocyclic organosulfur compound and having a higher specific capacity and a higher power density.

The present invention resides in a method of designing a novel compound wherein, when designing an energy storage device material from a heterocyclic organosulfur compound, an increase in disulfide part and polysufidation are combined for an increase in theoretical specific capacity.

Also, increasing of electron attraction of an organic part and decreasing of electron density in disulfide bonds are combined for an increase in electrode reaction rate. In this case, the present invention resides in a method of designing a novel compound wherein, when designing an energy storage device material from a heterocyclic organosulfur compound, an increase in disulfide part and polysufidation are combined for an increase in theoretical specific capacity, and wherein increasing of electron attraction of an organic part and decreasing of electron density in disulfide bonds are combined for an increase in electrode reaction rate.

Further, the present invention is featured by employing a concept of producing a supramolecule to increase a specific capacity and power density. In this case, the present invention resides in a method of designing a novel compound wherein, when designing an energy storage device material from a heterocyclic organosulfur compound, a concept of producing a supramolecule is employed to increase a specific capacity and power density, and an increase in disulfide part and polysufidation are combined for an increase in theoretical specific capacity, and wherein, as required, increasing of electron attraction of an organic part and decreasing of electron density in disulfide bonds are combined for an increase in electrode reaction rate.

In addition, the present invention resides in an energy storage device material obtained from a heterocyclic organosulfur compound designed by the method set forth above.

Brief Description of the Drawings

Fig. 1 shows reduction products of MTT-3S primarily present at different depths of discharge. Fig. 2 shows results (Li 1S spectra and S 2P spectra) of analysis of surface compositions using XPS. Fig. 3 shows a model of a surface film of lithium metal in a solution of 5 mM MTT-3S + 0.1 M $LiCF_3SO_3$/PC. Fig. 4 is a graph plotting frequency change obtained by immersing an electrode, which is prepared by precipitating lithium on a nickel QCM electrode base, in a solution of 5 mM MTT-3S (0 % $\leq$ DOD $\leq$ 50 %) + 0.1 M $LiCF_3SO_3$/PC and measuring a resonance frequency in an open circuit condition. Fig. 5 shows results (Li 1S spectra and S 2P spectra) of analysis of surface compositions using XPS. Fig. 6 is a graph plotting frequency change obtained by immersing an electrode, which is prepared by precipitating lithium on a nickel QCM electrode base, in a solution of 5 mM MTT-3S (50 % $\leq$ DOD $\leq$ 75 %) + 0.1 M $LiCF_3SO_3$/PC and measuring a resonance frequency in an open circuit condition. Fig. 7 shows results (Li 1 S spectra and S 2P spectra) of analysis of surface compositions using XPS. Fig. 8 is a graph plotting frequency change obtained by scanning a potential from 4.0 V vs. Li/Li* in the solution of 5 mM MTT-3S + 0.1 M $LiCF_3SO_3$/PC. Fig. 9 is an illustration for explaining reactivity of MTT-3S reductants with respect to a lithium metal and a lithium ion. Fig. 10 is an illustration for explaining a reaction in which an electron is withdrawn from a thiolate anion and a radical is produced, i.e., an oxidation reaction. Fig. 11 is an illustration for explaining a reaction in which a disulfide bond accepts an electron and produces a thiolate ion, i.e., a reduction reaction. Fig. 12 is an illustration for explaining comparison between HOMO energy in an oxidation state and HOMO energy in a reduction state of the thiolate anion. Fig. 13 is an illustration showing change of an electrochemical window resulting from change in kinds of heteroatoms in an organic skeleton. Fig. 14 is an illustration showing change of an electrochemical window resulting from change in the number of heteroatoms in an organic skeleton. Fig. 15 is an illustration showing change of an electro- chemical window resulting from change in positional relationship between heteroatoms and disulfide bond site in an organic skeleton. Fig. 16 is an illustration showing the structure of a compound expected to have an electrochemical window in the more positive side and an electrochemical window resulting from MOPAC calculations based on Figs. 13 and 14. Fig. 17 is an illustration showing the structure of a compound expected to have an electrochemical window in the more negative side and an electrochemical window resulting from MOPAC calculations based on Figs. 13 and 14. Fig. 18 shows NMR spectra of ADCP and ADMP in comparison with each other. Fig. 19 shows Raman spectra of (a) DBTD and (b) DBOD. Fig. 20 shows cyclic voltammograms of DBTD and DBOD obtained at a scan rate of 50 mV $s^{-1}$. Fig. 21 shows cyclic voltammograms of various heterocyclic organodisulfide compounds. Fig. 22 is an illustration for explaining calculation of an electrode reaction rate constant $k^0$ during reduction and oxidation of the disulfide bond based on the Allen-Hickling equation. Fig. 23 shows respective values of the electrode reaction rate constant $k^0$ of various organosulfur compounds. Fig. 24 is an illustration for explaining that new reduction peaks are detected in the cyclic voltammograms of DBTD and DBOD obtained at a scan rate of 50 mV $s^{-1}$. Fig. 25 shows cyclic voltammograms of MBI and MP each having one

mercapto group, and of ADMP having two mercapto groups. Fig. 26 is an illustration showing a state in which a proton transfers between ADMP and a nitrogen site in MBI or MP, and a thiolate anions and quaternized MBI or MP forms an ion pair in the solution. Fig. 27 shows cyclic voltammograms of ADMP having two thiol groups and respective composite network polymers. Fig. 28 shows a cyclic voltammogram of ADMP present in the form of a thiolate anion in comparison with those of the respective composite systems. Fig. 29 shows respective values of the electrode reaction rate constant $k^0$ of ADMP, MBI and MP, as well as ADMP + MBI and ADMP + MP which are composite systems, the constant values being calculated in the same manner as for DBTD and DBOD. Fig. 30 shows respective reaction mechanisms in an organic disulfide cathode and a lithium metal anode during discharge and charge. Fig. 31 shows respective discharge curves of lithium/polysulfides (DMcT). Fig. 32 shows a Raman spectrum of poly(ADMP-2S). Fig. 33 shows respective charge curves in the first cycle at the depth of charge (DOC) of 40 % under conditions of 0.5 C, 1.0 C and 5.0 C. Fig. 34 shows a Lagone plot in comparison with general energy devices. Fig. 35 shows cyclic voltammograms of disulfide, trisulfide and tetrasulfide compounds of MTT. Fig. 36(a) shows a cyclic voltammogram of DMcT coated on a BPG electrode in a stationary state, Fig. 36(b) shows a cyclic voltammogram measured after immersing a polyvinylpyridine (PVP) coated electrode in a solution of 10 mM DMcT + 0.2 M $LiClO_4$/PC for 30 minutes, and Fig. 36(c) shows a cyclic voltammogram measured after immersing that electrode in the same solution for 60 minutes. Fig. 37 shows a model of reduction/- oxidation mechanism of DMcT.

Best Mode for Carrying out the Invention

In order to utilize an organosulfur compound as a cathode material of a lithium secondary battery, as described above, various problems must be overcome and many approaches are vigorously conducted from all angles.

In the following description of the present invention, with those approaches in mind, evaluation is first made in Example 1 on reactivity between a lithium metal anode and an organic polysulfide compound which is designed and synthesized aiming at a higher theoretical specific capacity. In the organic polysulfide compound, reduction reactions take place in multiple stages unlike an organic disulfide compound. Many reduction products are therefore produced. If those reduction products migrate to the anode and react with a lithium metal to form a passive film, a great reduction of the cathode utilization rate and lowering of the cycle characteristic are caused even with the use of an organic polysulfide compound having a high theoretical specific capacity. Therefore, the reactivity between various reduction products of the organic polysulfide compound and the lithium metal is analyzed, and a potentiality of the organic polysulfide compound being used as a cathode active substance is discussed. In Example 2, attention is focused on an organic skeleton of a heterocyclic organosulfur compound, and the relationship between the organic skeleton and an electrochemical window of a disulfide bond is clarified based on MOPAC calculations. An energy density of the compound increases in proportion to a specific capacity and a working voltage. When a heterocyclic organopolysulfide compound having a high specific capacity is employed as a cathode material of a lithium secondary battery, therefore, that compound is expected to have an even higher energy density by designing an organic site capable of causing an electrochemical window to locate in the more positive side. Also, it is estimated that a high energy device using organic materials as both of the cathode and the anode will be required in future because the lithium metal is limited resource and sufficient safety must be ensured. Accordingly, there is a possibility that an organic material becomes usable as an anode material of a high energy storage device using no lithium by designing an organic site capable of causing an electrochemical window to locate in the more negative side on the contrary to the above case. Thus, compounds expected to provide electrochemical windows in the more positive or negative side are designed and selected, following which monomers, disiulfide and trisulfide compounds are produced from the selected compounds. The produced compounds are subjected to characterization by using various kinds of spectrometry. In Example 3, electrochemical characteristics of the compounds produced in Example 2 are evaluated in a non-aqueous solution. In Example 4, attention is focused on compounds having electrochemical windows in the more negative side, network polymers are synthesized by polymerization with disulfide bonds, and a potentiality of the network polymers being used as anode materials of high energy devices is evaluated by charge/discharge tests. Based on those electrochemical studies, it is intended to provide a guide in exploring a high-performance heterocyclic organosulfur compound oriented for practical use.

Electrochemical behaviors of heterocyclic organopolysulfide compounds and its potentiality of being used as an energy device are as follows.

Up to now, the inventors have focused attention on heterocyclic organosulfur compounds as energy storage device materials, and have conducted molecule design aiming at a higher specific capacity and a higher power density. An approach expectable to provide a higher specific capacity has been tried by making polysuldifation of disulfide bonds and addition of plural disulfide bond sites [K. Naoi et al., J. Electrochem. Soc., 144, L170(1977)]. Also, an approach expectable to provide a higher power density and a higher cycle characteristic has been tried by designing a compound having a disulfide bond in a side chain and a conductive high molecule as a main chain [K. Naoi et al., J. Electrochem. Soc., 144, L173(1977)], and by designing a novel compound while employing the concept of supramolecule.

In the present invention, to design organic polysulfide compounds each having a high capacity and a high power density, various model compounds are selected based on five determination criteria, i.e., (1) a larger electric negativity of heteroatoms, (2) a larger number of heteroatoms in an organic skeleton, (3) the presence of heteroatoms near disulfide bond sites, (4) polysulfidation of disulfide bonds, and (5) conversion of an organic skeleton into conductive high molecules. Basic electrochemical characteristics of the selected model compounds are evaluated.

Regarding various heterocyclic organodisulfide compounds, LUMO energy of a sulfur site in the cleavage reaction of the disulfide bond and HOMO energy of a sulfur site in the oxidation reaction of the disulfide bond are calculated based on molecular orbital calculations (MOPAC97, PM3 method) to estimate electrochemical windows. Also, an activation energy $\Delta G$ is calculated to estimate magnitudes of the electrode reaction rate. Further, compounds each having a higher working voltage and a higher electrode reaction rate are produced, and the electrochemical windows and the electrode reaction rates of the produced compounds are determined with cyclic voltanmetry.

In addition to the electrochemical windows estimated by the MOPAC calculations, electrochemical windows of 2.2'-dithiodianiline [DTDA] and poly(DTDA) are plotted from experiments. As the number of heteroatoms increases, the electrochemical windows shift toward the positive side. Comparing 2,2'-diimidazolinyl disulfide [DBID], 2,2'-dibenzothiazolyl disulfide [DBTD], and 2,2'-dibenzoxazolyl disulfide [DBOD], their electrochemical windows shift toward the positive side as the electron attraction of heteroatoms increases. Also, those compounds are expected to provide the electrochemical windows comparable to that of poly(DTDA) having a relatively high working voltage.

In Examples, electrochemical characteristics of DBTD, DBOD and DBID actually measured with experiments are compared with each other. Further, a detailed description is made of polymerization of an organic skeleton expected for a shift of its electrochemical window toward the more positive side, and is made of design and evaluation of a novel supramolecular energy storage material expected to have a higher cathode utilization rate and a higher cycle characteristic.

Moreover, the inventors have paid attention to heterocyclic organodisulfide compounds having high theoretical specific capacities (360 to 580 Ah/kg) as a novel cathode material among materials of various energy storage devices including polymer - lithium batteries. Then, the inventors have searched heterocyclic organodisulfide compounds having a higher working voltage and a higher electrode reaction rate based on MOPAC calculations, aiming at a higher energy density and a higher power density (Wakabayashi, et al., "Proceedings of 2000-year *Denkikagaku Shuki Taikai* (Electrochemical Autumn Meeting)", 1G22, p.109(2000)). However, those organic disulfide compounds still have a problem that, because reductants in the form of oligomers migrate toward the anode side, the system is electrochemically quasi- reversible and the cycle characteristic is low.

In view of the above-described problems, the present invention proposes a novel energy storage device material adopting the concept of supramolecule. Supramolecules are formed with collection of molecules caused by, e. g., $\pi$-$\pi$ stacking, coordinate bonds, and hydrogen bonds [L. Brunsveld et al., MRS BULLETIN, April, 49(2000)]. The formation of the supramolecules serves to suppress migration of reductants toward the anode side and contributes to realizing a satisfactory cycle characteristic.

In the present invention, 2,4,6-trimercaptobenzothiazole (TMBT) and 2,4,6-trimercaptobenzoxazole (TMBO) are synthesized as compounds expectable to exhibit a high energy density and a high power density, and are mixed with a melamine having amino groups in a solution, thereby producing a supermolecule that is self-assembled with hydrogen bonds. Then, basic electrochemical behaviors of those compounds are analyzed by using the electrochemical quartz crystal microbalance (EQCM) method and the cyclic voltanmetry (CV).

TMBT or TMBO is dissolved in an NMP solution and cast on a QCM electrode, followed by vacuum drying. That electrode is moved into another kind of solution and melamine is added in equivalent mol to the solution so that self-collection of molecules is caused to form a supramolecule coated electrode. At that time, the formation of supramolecules is confirmed by measuring a frequency change at the QCM electrode. Further, the electrochemical characteristics and the cycle characteristic of the supramolecules are studied with CV by using, as a working electrode, the supramolecule coated electrode in a solution of 0.2 M $LiCF_3SO_3/\gamma$-BL.

In addition, electrochemical windows of 2,2'- dibenzothiazolyl disulfide (DBTD) and 2,2'-dibenzoxazolyl disulfide (DBOD) selected as compounds expectable to exhibit a higher working voltage and a higher electrode reaction rate based on MOPAC calculations, as well as cyclic voltammograms and values of the electrode reaction rate constant $k^0$ both obtained for those compounds from experiments are shown in Examples. Both of DBTD and DBOD have electrochemical windows comparable to values obtained with the MOPAC calculations and, in particular, DBOD has a high reduction potential value of + 3.05 V vs. $Li/Li^+$. Also, DBTD and DBOD have relatively high $k^0$ values among various disulfide compounds and are confirmed as having a high working voltage and a high electrode reaction rate.

Experiment results of the electrochemical behaviors and the cycle characteristic measured for supramolecules with CV and reviews on the results are also discussed in detail. Cyclic voltammograms of trisulfide compounds produced aiming at an even higher energy density are compared with those of disulfide compounds. For trisulfide compounds of both DBTD and DBOD, new reduction peaks appear in the more negative side and the reduction capacity is about 1.3 times that of the disulfide compounds. Thus, an increase in discharge capacity of those trisulfide compounds is

confirmed.

Based on MOPAC calculations, it is estimated that, in spite of the reduction/oxidation reactions of the same sulfide bonds, the organic sites, the electrochemical windows, and the electrode reaction rates of organic disulfide compounds are affected so as to generate a difference of about 1 V by changing the kind and number of heteroatoms or the disulfide bond sites. Accordingly, compounds locating in the relatively low potential side can be developed into anode materials of electrochemical capacitors, etc. by making molecule design of those compounds so as to realize a shift toward the more negative side. The compounds locating in the relatively high potential side, which are searched in the present invention, can be developed into cathode materials of, e.g., polymer -lithium batteries and electrochemical capacitors.

DBOD having the electrochemical window in the highest potential side is selected as a model compound and is developed into a cathode material of a polymer - lithium battery. DBOD itself has a lower specific capacity than other disulfide compounds, and its cycle characteristic is also low because reductants migrate toward the anode side during reduction. One conceivable solution is to increase the number of disulfide bond sites and to form a network polymer. This solution is effective for the reasons that the theoretical energy density is as high as 1150 Ah/kg, and that as the number of disulfide bond sites increases, the frequency of creation of disulfide bonds is also increased and hence the cycle characteristic is improved. Other various developments are also conceivable in the following points. A further increase of energy density is obtained by using, as a base, the network polymer polymerized with disulfide bonds, and converting the disulfide bonds into trisulfide bonds. A further improvement of the cycle characteristic is obtained by introducing another kind of compound having an amino group to form a hydrogen bond between NH and S during reduction, thereby suppressing migration of reductants.

Organic disulfide compounds, for which the reduction/oxidation reactions of their disulfide bonds are expected for applications to charge/discharge of devices, are interesting compounds because of having high specific capacities, being inexpensive, and being friendly to the global environment, and have been so far studied as cathode materials of lithium - polymer batteries. However, the organic disulfide compounds still have several problems when employed as the cathode materials.

First Problem: The reduction/oxidation reactions of the disulfide bonds are quasi-reversible from the view point of chemical kinetics, and the electrode reaction rate is low even near the room temperature. Hence, the organic disulfide compounds are not sufficiently adaptable for high-speed charge/discharge in some cases.

Second Problem: Reductions in the form of oligomers migrate in the electrolytic solution and a satisfactory cycle characteristic cannot be obtained in some cases. This problem is presumably attributable to that, unlike intercalation materials, disulfide-based compounds cause change (reaction) of their active substances themselves during charge/discharge and affect the energy storage mechanism.

Third Problem: Because the organic disulfide compound is an insulator in itself, a considerable amount of conductor must be mixed when the organic disulfide compound is used as an electrode material, thus resulting in a reduction of the net specific capacity.

An approach for overcoming those problems has been tried by the laboratory, to which the inventors belong, by polysulfidating disulfide bonds into tri- and tetra-disulfide bonds to increase the number of reactive electrons so that the active substance has in itself a higher specific capacity.

In Example 1 of the present invention described later, attention is focused on the reaction between reduction products of organic polysulfide compounds and lithium, which is one factor impeding realization of a satisfactory cycle characteristic, and by using MTT-3S as a model compound, the reactivity of reduction products of MTT-3S with respect to a lithium metal anode is evaluated. Then, it is suggested from results of QCM and XPS measurements that, even when disulfide anions and thiolate anions, i.e., first reduction products of MTT-3S, and thiolate anions as second reduction products of MTT-3S, which exist at the discharge depth of not more than 75 %, migrate up to the surface of the lithium metal anode, they are merely adsorbed onto the lithium metal surface and cause chemical reactions with a small possibility. The reason is presumably in that reduction products and an adsorbed layer of $CF_3SO_3^-$ (triflate anion) serving as a support electrolyte are preferentially formed and exist in a stable state. On the other hand, it is clarified that, when the discharge depth is not less than 75 % and sulfur dianions are produced, they react with lithium ions in the solution and form a passive film (lithium sulfide) on the cathode. To achieve a further increase of the cathode utilization rate for the organic polysulfide compounds, it is conceivable to repeat charge/discharge at such a discharge depth as producing no sulfur dianions, or to promote development of the organic polysulfide compounds for use in non-lithium-based energy devices.

In Example 2, electrochemical windows of various heterocyclic organodisulfide compounds are estimated based on MOPAC calculations, aiming at development of the heterocyclic organodisulfide compounds exhibiting the chemically or electrochemically stable redox to cathode materials of lithium - polymer batteries or to electrode materials of high energy storage devices. As a result, it is clarified that, as the electric negativity of heteroatoms and the number of heteroatoms in a heterocycle increases and as the disulfide bond site approaches the heteroatom, the electrochemical windows shift toward the more positive side. Thus, DBTD and DBOD are selected and produced as compounds

expected to have electrochemical windows in the more positive side, and ADMP, MBI and MP are selected and produced as compounds expected to have electrochemical windows in the more negative side, by controlling the kind, number and position of the heteroatoms in a heterocycle.

In Example 3, electrochemical characteristics of DBTD, DBOD and trisulfide compounds thereof, as well as of ADMP, MBI and MP, all produced in Example 2, are evaluated. For DBTD and DBOD both having electrochemical windows estimated to locate in the more positive side, cyclic voltammetry is carried out by using a lithium salt as the support electrolyte and a lithium metal as the reference electrode. As a result, it is proved for DBOD to have a reduction peak potential of + 3.05 V vs. $Li/Li^+$, i.e., a value in the most positive side as compared with the heterocyclic organodisulfide compounds studied in the past, and to have an electrode reaction rate constant $k^{0'}$ of $9.80 \times 10^{-9}$ cm $s^{-1}$, i.e., a maximum value as compared with them. Therefore, development of DBOD as a base to cathode materials of lithium - polymer batteries is conceivable. One example of the development is an application, to the electrode material, of DBOD in the form of a network polymer obtained by increasing the number of disulfide bonds of DBOD and polymerizing it. In that example, the working voltage is about 3.0 V vs. Li/Li* lower than those of general lithium ion batteries. However, when DBOD has three reaction sites, it has a very high theoretical specific capacity of 379 Ah $kg^{-1}$, and an energy density of 1000 Wh $kg^{-1}$ is expected. Further, because DBOD has a high electrode reaction rate and the frequency of creation of disulfide bonds increases with an increase of reaction sites, DBOD is also expectable as a material having a higher power density than those of the organic disulfide compounds studied in the past. Additionally, although an increase of discharge capacity is confirmed for the trisulfide compounds of both DBTT and DBOT, a satisfactory oxidation reaction is not obtained due to the effect of high reactivity of sulfur dianions, which are produced at the third reduction peak, and lithium ions.

On the other hand, for ADMP, MBI and MP estimated to have electrochemical windows in the more negative side, cyclic voltammetry is carried out under a basic atmosphere in a non-lithium-based solution. As a result, it is proved for ADMP to have an oxidation peak potential of + 0.27 V vs. Ag/AgCl, i.e., a value in the most positive side, and to have the constant $k^{0'}$ of $7.16 \times 10^{-4}$ cm $s^{-1}$, i.e., a value about three orders of magnitude larger than those of MBI and MP. Therefore, development of ADMP as a base to anode materials of non-lithium-based high energy storage devices is conceivable.

In Example 4, therefore, poly(ADMP) polymerized with disulfide bonds is synthesized and a potentiality of poly(ADMP) being used as anode materials of non-lithium-based high energy storage devices is evaluated by charge/discharge tests. As a result of measuring an initial charge capacity under a condition at the depth of charge of 40 %, a capacity of 136 Ah $kg^{-1}$(capacity development rate of 100 %) is obtained at 0.5 C. Then, as the C rate increases, the capacity development rate decreases, but a relatively high value, i.e., 88.4 Ah $kg^{-1}$(capacity development rate of 65 %), is still obtained at 5 C in spite of the organic disulfide compound. Further, poly(ADMP) is expected to have a working voltage of 1 to 1.3 V in combination with the conductive high molecule having an electrochemical window in the more positive side, and is suggested as having a possibility to exhibit an energy density of not lower than 100 Wh $kg^{-1}$ and a power density of not lower than 600 W $kg^{-1}$ under a condition at the depth of charge of 40 %.

In the present invention, it is intended to realize development of heterocyclic organodisulfide compounds to not only cathode materials of lithium - polymer batteries, but also cathode and anode materials of various high energy storage devices, and to endeavor material design at a molecule level. It is also clarified that reduction/oxidation potentials of disulfide bonds can be shifted to the more positive or negative side by, particularly, changing the kind, number and position of heteroatoms in a heterocycle. The designed compounds is actually produced, and heterocyclic organodisulfide compounds having electrochemical windows in the more positive or negative side are confirmed from experiments.

Details of the present invention will be described below in connection with Examples. Note that the present invention is in no way limited by the Examples.

Example 1

One of the problems about organic disulfide compounds is a risk that reductants in the form of oligomers migrate to the anode side and react with a lithium metal anode. This risk may cause adverse effects such as self-discharge and lowering of cycle characteristic of batteries. Also, it is reported that, during discharge, DMcT as a typical example of the organic disulfide compounds is a tetramer at average even when oxidized at 75 %, and there is a possibility of migration of oxidants. Therefore, chemical stability of the organosulfur compounds and the lithium metal in the oxidized state is also essential.

In this Example, a trisulfide dimer (Chemical Formula 1) of 5-mercapto-1,3,4-thiazole-2-thiol (MTT) was used as a model compound of organic polydisulfide compounds, and chemical stability of MTT and the lithium metal in the oxidized state was first evaluated. Further, because the organic polysulfide compounds show multi-stages of reduction reaction and MTT - trisulfide dimer also shows three stages of reduction reaction, it is thought that there are many intermediates and reductants in a cathode and a bulk solution. Accordingly, reactivity between various reduction products of the MTT - trisulfide dimer and the lithium metal was evaluated. In addition, a possibility of the organic polydisulfide compounds being used as cathode materials of lithium secondary batteries was studied as described below in detail.

Chemical Formula 1

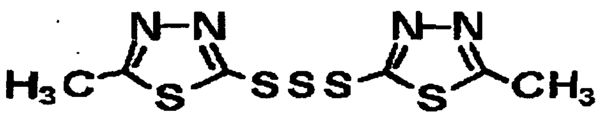

<Reduction Mechanism of Organic Polysulfide Compound>

Reduction mechanisms of organic polysulfide compounds are clarified so far by using various electrochemical methods (CV, bulk electrolysis and rotary electrodes) and spectroscopic methods [in-situ ultraviolet and visible absorption spectrum method (in-situ UV-vis spectrometry)]. An MTT trisulfide dimer first undergoes 2-electron reduction at the first reduction peak such that one of two equivalent S-S bonds cleaves and produces a disulfide anion and a thiolate anion. It is thought that a part of the disulfide anions produce thiolate anions and sulfur through chemical equilibrium. Then, at the second reduction peak, the disulfide anions produce radical ions of sulfur and thiolate anions through 1-electron reduction. Further, $S_3$ radical anions are produced through chemical equilibrium of those radical anions and sulfur. Subsequently, at the third reduction peak, the existing radical anions undergo 1-electron reduction and produce sulfur dianions. In this way, various intermediates and reductants are present in the cathode through those three stages of electrochemical reactions and the subsequent chemical reactions.

<Measurement Theory>

1) Electrochemical Quartz Crystal Microbalance (QCM) Method

The QCM (Quartz Crystal Microbalance) method using a quartz crystal is a method for measuring very small mass in nano-gram order. A quartz has no point symmetric crystal structure. Therefore, when quartz is cut in a predetermined direction and a compressive force is applied to the cut-out quartz sandwiched between two electrodes, electric charges accumulate on the electrode surface and generate an electric field. Conversely, when an expansive force is applied to the cut-out quartz, the direction a generated electric field is reversed. This is called a piezoelectric effect. The intensity of the electric field is in proportion to the mechanical stress applied. The Quartz Crystal Microbalance (QCM) method is carried out based the piezoelectric effect by coating both surfaces of the quartz with gold, platinum, nickel or the like so as to serve as electrodes,

The relationship between frequency change and mass change is expressed as the following mathematical formula 1 by Sauerbrey:

Mathematical Formula 1

$$\Delta f = - C_f \cdot m_f$$

In this formula, $\Delta f$: frequency change, $C_f$: mass sensitivity of the used quartz crystal (1.07 ng $Hz^{-1}$ for 9 MHz AT-cut), and $m_f$: mass per unit area of a thin film. When the quartz crystal is immersed in a solution, the magnitude of oscillations greatly attenuates in the vicinity of the crystal surface and the oscillations reach over a range of several thousands angstroms. Since the oscillating solution layer works as a mass load for the quartz crystal, the frequency change resulting in the case of immersing the quartz crystal in the solution is decided depending on factors such as the density and viscosity of the solution. Even when the quartz crystal is immersed in the solution, the relationship expressed by the following mathematical formula 2 holds between mass change $\Delta m$ (g) of the quartz crystal caused by the thin-film coating and change $\Delta F$ (Hz) of the resonance frequency:

Mathematical Formula 2

$$\Delta F = - F_0^2 \, \Delta m / N\rho A$$

In this formula, $F_0$ is the basic oscillation frequency (MHz), N is the crystal constant ($1.67 \times 10^5$ Hz cm) of the AT-cut quartz, ρ is the quartz density (2.65 g $cm^{-3}$), and A is the electrode area ($cm^2$). From the above relation formula, when the quartz crystal is oscillated at $F_0$ = 9 MHz, the mass sensitivity is in 1 ng order at frequency change of 1 Hz. Then, from the following mathematical formula 3, $M_{eq}$ representing what amount (g $mol^{-1}$) of material has been precipitated on or dissolved from the electrode per 1F can be estimated based on charges passed Q(C) obtained integrating a current value, measured at the same time, with respect to time and Δm determined from the mathematical formula 3:

Mathematical Formula 3

$$M_{eq} = \Delta m / (Q/nF)$$

In this formula, n is the number of reactive electrons, and F is the Faraday's constant (96485 C $mol^{-1}$). By employing the mathematical formula 3, it is possible to identify what kind of material has been precipitated (adsorbed) or dissolved (desorbed), or what kind of material drifts in the coated thin film.

2) X-ray Photoelectron Spectrometry (XPS)

XPS is one kind of electron spectrometry for analyzing constituent elements of a solid surface and the chemical bonded state thereof. When an X-ray is irradiated to the surface of a solid sample, a photoelectron is emitted from an atom excited by the irradiated X-ray. By measuring kinetic energy of the emitted photoelectron, the electron binding energy in the atom, i.e., energy required for kicking out an inner shell electron bonded to an atomic nucleus, can be measured because energy of the irradiated X-ray is constant. The bondng energy of the inner shell electron has a specific value (for example, 532 eV for an $O_{1S}$ electron and 686 eV for an $F_{1S}$ electron). Accordingly, identification of constituent elements can be performed by observing a photoelectron spectrum. Also, if an atom has different chemical bonded states (e.g., depending on Al having which one of the forms of metal Al, $Al_2O_3$, $AlF_3$, etc.), a value of the binding energy varies several eV in many cases. Therefore, the chemical bonded state can be evaluated from such a value (called chemical shift) of change in the binding energy. Although various information regarding the sample electrode surface can be obtained with XPS as described above, XPS is one kind of ex-situ measurement and hence caution should be paid to analysis of the sample surface having high reactivity. For materials with their surfaces having very high reactivity, such as lithium-based electrode materials, it is general that a sample is put in a transfer vessel under dried air or inert gas (e.g., argon or helium) and is moved into an XPS chamber.

By using XPS, the kinetic energy of a photoelectron is measured and the binding energy is decided in accordance with the following mathematical formula 4:

Mathematical Formula 4

$$E_k = h\nu - E_b$$

An observed electron energy distribution can provide information regarding inner shells and valence bands of a material. From the mathematical formula 4, therefore, the binding energy $E_b$ can be determined because hv is constant. Also, since the binding energy of each orbital electron differs for each element, element identification can be easily made by measuring $E_{kin}$. When deciding $E_b$ based on the mathematical formula 4 by actual measurement, charge-up of a sample raises a problem. When a photoelectron is kicked out of the sample, the number of electrons is reduced and hence a decrease in the number of electrons must be compensated. In the case of the sample having a low electronic conductivity, however, the decrease in the number of electrons cannot be fully compensated and the sample is charged up. A lithium metal has electronic conductivity, but its surface is covered with a coating having no electronic conductivity. This means importance in obtaining a result after remedying such a charge-up phenomenon of the sample, and hence the necessity of charge-up correction. A value of the energy shift caused by the charge-up phenomenon varies depending on the state and kind of the sample, performance of the measuring device, etc. It is thus understood that change in the charge-up state apparently invites a great influence in estimating the constraining energy of an electron.

From various research reports publicized up to date, the estimated binding energy deviates about 1 to 3 eV with charge-up for the lithium metal. The charge-up correction can be performed by using the C 1 S spectrum of carbon, or by vapor-depositing a small amount of gold and indium on the sample surface to intentionally form an internal reference sample. However, the method of forming an inner reference sample in analysis of electrode materials, such as lithium metals and carbon, cannot be said as being appropriate. Kanemura et al. report that it is effective to utilize hydrocarbon, which remains in the XPS chamber and is adsorbed onto the sample surface, for making correction with the C 1S peak of the hydrocarbon assumed to be 285.0 eV.

While the binding energy can be decided by using the method described above, there is another problem that the sample is damaged upon irradiation of an X-ray or an electron beam. Such a damage is estimated to easily occur, in particular, when measuring the cathode active substance as the battery material, the substance produced on the collector surface, or the substance produced on the anode material surface. For example, when analyzing the surface of the lithium metal by XPS, the above-mentioned effect is a problem that must be always taken into consideration. From results of experiments conducted by Kanemura et al., it is clarified that spectra of lithium carbonate, lithium hydroxide and so on are changed to some extent. It is also reported that a substance is changed with argon ion sputtering used for analysis in the depth direction.

<Experiment>

1) Reagents and Apparatus

A trisulfide compound (MTT-3S) (made by Nagase & Co., Ltd. R&D center) of 5-methyl-1,3,4-thiadiazole-2-thiol (MTT) was used after subjecting it, as pretreatment, to vacuum drying at 40 °C for 24 hours. Lithium trifluoro acid ($LiCF_3SO_3$) (made by Tomiyama Pure Chemical Industries, Ltd.) was used as the support electrolyte, and propylene carbonate (PC) (available as Sollyte from Mitsubishi Chemical Corporation) was used as the solvent. Lithium metal foils used here were all (99.97 %) made by Kyokuto Metal Co., Ltd.

Constant-potential electrolysis was performed in a 3-electrode system using HABF501S made by Hokuto Denko Corporation. Glassy carbon (ϕ = 3 mm, made by BAS Co., abbreviated as "GC" hereinafter) was used as the working electrode, and lithium metal foils were used as both the counter electrode and the reference electrode.

In the QCM measurement, a potential was scanned by using Model 263 (made by EG&G Princeton Applied Research) as the potentiostat/galvanostat, and frequency was monitored by using a frequency counter (QCA917 made by SEICO EG&G). A computer, DESKPRO EN Series made by COMPAQ, was used for control and recording. The QCM measurement was carried out in a glove box (MO-40M made by VAC Co.) in which an argon atmosphere containing $H_2O$: not more than 1.5 ppm and $O_2$: not more than 0.5 ppm was sustained.

The XPS measurement was performed by using ESCA-3200 made by Shimadzu Corporation. The Mg Kα line (2 kV, 20 mA) was used as an excitation source.

2) Measuring Method

The working electrode (electrode area: 0.2 $cm^2$) used in the QCM measurement was prepared by sputtering Ni (300 nm), being hard to form an alloy with lithium, on a quartz crystal electrode (QCE) and precipitating lithium in a solution of 0.1 M $LiCF_3SO_3$/PC at a current density of 0.1 mA $cm^{-2}$ with 250 mC $cm^{-2}$. The counter electrode and the reference electrode were each made of a lithium metal. Then, under various conditions, i.e., at the depth of discharge (DOD) = 0 %, 0 % ≤ DOD ≤ 50 %, 50 % ≤ DOD ≤ 75 %, and 75 % ≤ DOD, the QCM measurement was performed by using an open circuit in the solution containing reduction products of MTT-3S which are present in the cathode or near the cathode interface. Fig. 1 shows the reduction products of MTT-3S which are primarily present at the respective depths of discharge.

To minimize an influence of the existing coating, the lithium metal used in the XPS measurement was subjected to anode dissolution in a solution of 0.1 M $LiCF_3SO_3$/PC at a current density of 1.0 mA $cm^{-2}$ with 1 C $cm^{-2}$. Then, the lithium metal was immersed for 3 days in respective electrolytic solutions under the same conditions as the above DOD conditions. The lithium samples thus obtained were cleaned with 2-Me THF and were vacuum dried ($3 \times 10^{-5}$ Pa, 30 min.). Subsequently, the lithium samples were each cut through to form a disk (1 cmϕ), which was fixed to a sample folder by using a carbon-based double face tape (STR conductive tape made by Shinto Paint Co., Ltd.). To minimize contact between lithium and air, transport of the lithium sample from the globe box to a sample introducing chamber of an XPS measuring apparatus is performed under an argon gas flow by mounting a polypropylene-made globe box so as to surround the sample introducing chamber and by replacing an inner atmosphere with argon gas. Measured spectra were all compensated with the charge-up correction on the basis of the peak of 285.0 eV representing hydrocarbon at the C 1S spectrum.

<Results and Review>

First, chemical reactivity of the MTT trisulfide dimer at the depth of discharge of 0 %, i.e., in the most oxidized state, with respect to the lithium metal and the lithium ion was evaluated. For the evaluation, the electrode prepared by precipitating lithium on the nickel QCM electrode was immersed in a solution of 5 mM MTT-3S + 0.1 M $LiCF_3SO_3$/PC, and the measurement was performed in the open circuit state. Frequency change over time was plotted (not shown). After 8 hours, frequency change was hardly found as compared with the result measured at the start of the measurement. It is hence thought that a possibility of reaction of MTT-3S with the lithium metal or a possibility of MTT-3S being adsorbed on the lithium metal is low. For further qualitative evaluation of chemical stability between MTT-3S and the lithium metal, analysis of surface composition was made with XPS. In order to judge whether the composition of a lithium metal surface film is dominated by MTT-3S, the support electrolyte or the solvent ($LiCF_3SO_3$ and PC), the measurement was performed on two samples, i.e., (a) lithium metal immersed in a solution of 5 mM MTT-3S + 0.1 M $LiCF_3SO_3$/PC for 3 days, and (b) lithium metal immersed in the solution of 0.1 M $LiCF_3SO_3$/PC for 3 days. Fig. 2 shows respective Li 1 S spectra and S 2P spectra. Looking at first the Li 1 S spectra of lithium immersed in the solution containing MTT-3S, it is understood that the outermost surface is covered with lithium fluoride (56.0 eV) and lithium carbonate (55.0 eV). When the sample was then subjected to argon etching at intervals of 5 minutes, the peak of lithium fluoride disappeared after 5 minutes. It is also understood that, as the depth of discharge further increases, the peak gradually shifts to those of lithium hydroxide (54.6 eV) and lithium oxide (53.7 eV) which are general surface coatings of the lithium metal. Next, looking at the S 2P spectra of the sample immersed in the same solution, a large peak can be observed near 170.0 eV. From the various results of the XPS measurements reported in the past, it is confirmed that a peak depending on adsorption of $CF_3SO_3^-$ (trifrate anion) of $LiCF_3SO_3$ as the support electrolyte appears at 169.5 eV. However, since XPS spectrum data regarding sulfur has been hardly reported, it cannot be definitely judged in this stage that the observed peak depends on adsorption of $CF_3SO_3^-$. In consideration of the above, the sample was immersed in the solution of 0.1 M $LiCF_3SO_3$/PC not containing MTT-3S, and Li 1S spectra and S 2P spectra measured in a similar manner were compared with each other. As a result, both the spectra are substantially the same as those previously obtained for the sample immersed in the solution including MTT-3S. Particularly, a large peak can also be confirmed in the S 2P spectra near 170.0 eV. From those results, it can be judged that, for both the samples (a) and (b), the peak in the S 2P spectra near 170.0 eV depends on adsorption of $CF_3SO_3^-$ (trifrate anion). Further, since a broad peak in the S 2P spectra near 163.0 eV appears for both the samples, that peak is estimated to have no relations to MTT-3S.

Fig. 3 shows a model of a surface film of lithium metal in the solution of 5 mM MTT-3S + 0.1 M $LiCF_3SO_3$/PC, which is derived from the results of the QCM and XPS measurements. It is thought that the lithium metal is covered with existing coatings, such as lithium oxide, lithium carbonate and lithium hydroxide, and in both the cases of using the solution containing MTT-3S and the solution not containing it, lithium fluoride and lithium carbonate, as the reduction products of $CF_3SO_3^-$ (trifrate anion), form a relatively stable surface film on the outermost surface with priority from the viewpoint of chemical kinetics. It is also thought that, because $CF_3SO_3^-$ (trifrate anion) is adsorbed on the outermost surface, chemical reactivity between MTT-3S and the lithium metal anode is low.

Next, the reactivity of the reduction products of MTT-3S with respect to the lithium metal and the lithium ion was evaluated in a similar manner using QCM and XPS.

<0 % ≤ DOD ≤ 50 %>

First, the evaluation was made at the DOD of not more than 50 %, i.e., for the reactivity of the disulfide anion and the thiolate anion of MTT with respect to the lithium metal. The QCM measurement was performed in the solution, in which the disulfide anion and the thiolate anion were present, by using in the open circuit state, as the working electrode, the electrode prepared by precipitating lithium on the Ni-QCM electrode. As a result, a frequency decrease $\Delta f$ of 128 Hz per 1 hour was confirmed. (See Fig. 4) This result can be estimated as indicating a possibility that the disulfide anion and the thiolate anion, i.e., the first reduction products of MTT, react with the lithium metal or are adsorbed on it. Therefore, the XPS measurement was performed for qualitative evaluation of the composition of the surface film. From measured Li 1 S spectra and S 2P spectra (Fig. 5), it can be confirmed that, similarly to the case of DOD = 0 %, the surface of the lithium metal immersed for 5 hours in the solution, in which the disulfide anion and the thiolate anion of MTT are present, is covered with not only lithium fluoride and lithium carbonate, but also an adsorbed layer of $CF_3SO_3^-$ (trifrate anion). In the S 2P spectra, however, there appears a peak near 167 eV, which is not detected in the previous case. Because there is no change in the Li 1 S spectra, such a peak is thought as being dependent on not the chemical reaction between the reduction products of MTT and the lithium metal, but on the adsorption of the disulfide anion and the thiolate anion. Further, from a similar tendency in the XPS spectra after immersion for 3 days as compared with that after immersion for 5 hours, it was confirmed that the lithium surface film was made of lithium fluoride, lithium

carbonate, and an adsorbed layer of various anions. Accordingly, it can be considered that, even under the condition of DOD of not more than 50 %, a possibility of the chemical reaction between the reduction products of MTT-3S and the lithium metal anode is small.

<50 % ≤ DOD ≤ 75 %>

Next, the evaluation was made at the DOD of not less than 50 % and not more than 75 %, i.e., for the reactivity of the thiolate anion and sulfur anions with respect to the lithium metal. With the QCM measurement, similarly to the case of the DOD being not more than 50 %, a frequency decrease Δf of 110 Hz per 1 hour was observed (see Fig. 6). Thus, a possibility of the second reduction products of MTT reacting with the lithium metal or being adsorbed on it was confirmed. Furthermore, with the XPS measurement, Li 1S spectra and S 2P spectra similar to those obtained at the DOD of not more than 50 % were measured and a peak depending on adsorption of the thiolate anion was also detected in both the cases of immersing the sample for 5 hours and for 3 days (Fig. 7). In addition, new peaks depending on the various sulfur anions were not found in both the Li 1S spectra and the S 2P spectra. This result can be estimated as indicating a low possibility that the various sulfur anions react with the lithium metal or are adsorbed on it. Accordingly, it can be considered that, even under the condition of DOD of not less than 50 % and not more than 75 %, a possibility of the chemical reaction between the reduction products of MTT-3S and the lithium metal anode is small, and that the frequency decrease Δf resulting with the QCM measurement is also dependent on adsorption of the thiolate anion.

<75 % ≤ DOD>

Under this condition, an abrupt frequency decrease Δf was also confirmed even when the Ni-QCM electrode, on which no lithium was precipitated, was used to apply a working voltage. As shown in Fig. 8, when the potential was scanned toward the negative side from 4.0 V vs. $Li/Li^+$ in the solution of 5 mM MTT-3S + 0.1 M $LiCF_3SO_3$/PC, an abrupt frequency decrease Δf occurs as soon as the DOD exceeds 75 %. In other words, it is estimated that the various sulfur dianions, i.e., third reduction products of MTT-3S, are deposited on the Ni-QCM electrode as a result of adsorption or reaction with other ions. However, because the sulfur dianions were deposited or adsorbed on the working electrode as soon as they were created, it was impossible to fabricate a sample for the XPS measurement and to conduct a qualitative experiment. For that reason, the molecular weight of a compound deposited or adsorbed on the Ni-QCM electrode was estimated from the slope of Δf obtained with the QCM measurement by using the equation for $M_{eq}$ shown in Fig. 8. The estimated molecular weight was 46.7 g $mol^{-1}$. Taking into account the ions which are present in the solution at the DOD of not more than 75 %, the deposited compound is thought as being lithium sulfide (45.6 g $mol^{-1}$).

The results obtained in this Example were summarized in Fig. 9. The results of the QCM measurement and the XPS measurement suggest that, even when the disulfide anion and the thiolate anion, i.e., the first reduction products of MTT-3S, and the thiolate anion, i.e., the second reduction product of it, which are present at the DOD of not more than 75 %, migrate up to the lithium metal anode surface, those anions are merely adsorbed on the lithium metal surface and a possibility of chemical reaction of those anions with the lithium metal surface is small. Presumably, this is attributable to that the reduction products (lithium fluoride and lithium carbonate) of $CF_3SO_3^-$ (trifrate anion), serving as the support electrolyte, are preferentially formed on the lithium metal surface, and an adsorbed layer of $CF_3SO_3^-$ (trifrate anion) is also formed on it, the formed layers being present stable. To further achieve a further increase in anode utilization rate of organic polysulfide compounds, it is thought as being important to repeat charge/discharge at the depth of discharge at which the sulfur anions are not created, and to suppress the lithium sulfide created at the DOD of not more than 75 % in this Example.

Example 2

Sulfur is in the second row of a periodic table of elements and belongs to the same family as oxygen. Therefore, a sulfur atom and a selenium atom located just below it in the periodic table have similar electron arrays in common to an oxygen atom. Also, pairs of 2-coordination compounds having two ligands, such as alcohol and mercaptan or selenol, ethel and sulfide, ketone and thioketone, or peroxide and disulfide, exhibit very similar physiochemical properties in common. However, those compounds also differ from each other in fundamental points. For example, there are no stable compounds having chain polyoxide bonds (- On-), while there are stable compounds having chain polysulfide bonds (- $S_n$-). Oxygen compounds having three ligands are present, but unstable as seen from an oxonium ion as a representative example. In other words, isolated oxygen compounds having three ligands are very few. Also, there is no example of isolated oxygen compounds having four ligands. On the other hand, sulfur has not only stable 3-coordination compounds, such as sulfoxide and sulfilimine, but also more stable 4-coordination compounds having

four bonds, such as sulfone and sulfoximine. Selenium is very similar to sulfur in those points, but 3- and 4-coordination compounds of selenium have lower stability than the corresponding compounds of sulfur presumably because of the fact that central selenium atoms are slightly too large.

Next, attention is paid to the bonding distances of disulfide bonds. As with C-S and C-O bonds, the bonding distance of an S-S (disulfide) bond greatly changes depending on differences in oxidized state of a sulfur atom at the end or in substitution group. Usually, the S-S bonding distances of dialkyl disulfides, $S_8$, etc. are in the range of 2.04 to 2.06 Å, while the S-S bonding distance of $S_2F_2$ is very short, i.e., 1.88 Å. This is may be because the S-S bond of $S_2F_2$ has properties of a double bond at a larger proportion. On the other hand, a dithionite ion ($^-O_2S-SO_2^-$) has a very long S-S bonding distance of 2.39 Å. This is may be because the bond is extended and becomes weaker due to repulsion between negative charges at two ends. The dithionite ion is known as easily cleaving and producing $-SO_2^-$ radicals. From various study results reported so far, the S-S bond energy is in inverse proportional to the cube of the bonding distance.

With recent development of computers, physiochemical properties regarding the binding/dissociating energy and the bonding angles of the sulfur bond and other bonds have been computed and reported based on molecular orbital calculations. In this Chaper, by employing MOPAC calculations, the HOMO energy of the thiolate anion and the LUMO energy of the disulfide bond were calculated, and the electrochemical windows of various compounds were estimated. Then, the relationship between organic site structures and electrochemical windows of heterocyclic organodisulfide compounds, which exhibit relatively stable reduction/oxidation reactions and have a 5-membered ring, a 6-membered ring or a condensed ring thereof in an organic site, was clarified. Further, it was intended here to design and synthesize compounds having the electrochemical windows in the more positive or negative side and higher electrode reaction rates.

1) Regarding MOPAC Calculations

Theoretical analysis with regards to physical properties and reactivity of molecules based on molecular orbital calculations has not been so utilized among experimental researchers. One of the reasons is that molecular sizes computable by the theoretical method, e.g., molecular orbital calculations, greatly differ from molecular sizes actually handled in experiments. Other reasons reside in the absence of programs easy to handle and the problems with prices and speeds of computers.

Recently, phenomena that could not be explained with the known approaches have become observable with rapid progress of measuring equipment, and the amount of experiments to be conducted has drastically increased with an increasing level of researches. In parallel, experimental techniques have also been complicated. On the other hand, computer programs have made it possible to easily obtain various physical properties and reactivity through computations by entering information of molecule structures and computation keywords with no need of understanding the theory of the molecular orbital method. Further, the capability of recent personal computers is comparable to that of large-sized computers used several years ago. Effective combination of the personal computer with the programs has enabled the molecular orbital calculations to be realized with convenience and simplicity beyond the common knowledge in the past. Hence, a potentiality of noted development of researches is expected with the combination of experimental methods and theoretical calculations. In fact, papers pointing out errors in experimental results based on calculations have been publicized in many cases.

A semi-empirical molecular orbital method program package MOPAC was developed in 1983 by Dr. James J. P. Stewart as a package including Hamiltonians MINDO/3 and MNDO. Then, new Hamiltonians AM1 and PM3 have been introduced. Also, the structure optimization process was incorporated as DFP and BFGS in the initial stage and as EF in 1990. As a result, convergence has been improved in structure determination.

Data computable by the molecular orbital method (MOPAC97) is as follows:

1. Optimization structure (bonding distance, bonding angle and dihedral angle), energy, and electron density (base and excitation).
2. Structure, energy and electron density in transition state.
3. Structure, energy and electron density (absorption spectrum) in excitation state.
4. Prediction of reactivity (HOMO-LUMO interaction and energy division (weak bond)).
5. Track of potential hypersurface and reaction coordinates (IRC, DRC), and reaction rate constant.
6. Superpolarizability (nonlinear optical material).
7. Basic oscillation (infrared spectrum) and thermodynamic variables (such as entropy and enthalpy).
8. Dipole moment, polarizability, optical properties, distribution coefficients, and Young's modulus.
9. Eigenvalue and characteristic spectrum (ionization potential, electron affinity, frontier electron density, and charges).
10. Intermolecular interaction (hydrogen bond, hydrophobic interaction, aromatic ring, and complex).

11. Energy evaluation (between stable isomers, various stable structures, bond, and split).

2) Synthesis of Thiols by Replacement Reaction

Thiols have lower boiling points, but have stronger acidity than alcohols (generally alkyl thiol has pKa = 10.3 to 10.5, alcohol has pKa = 16 to 18, thiophenol has pKa = 7.0, and phenol has pKa = 10.0). Thiolate anions have strong nucleophilic forces, and an $\alpha$-site proton of a thiol group easily becomes carbanion by a strong base and is converted into various substitution thiols through reactions with electrophilic reagents. Thiols having double bonds, triple bonds, hydroxy groups, and other functional groups are important in organic synthesis. Synthesis methods utilizing substitution reactions include ones utilizing substitution reactions of primary and secondary alkyl halides and sulfonic acid esters with various sulfurizing agents. Several reaction examples are given below. In such a reaction, an intermediate is first isolated, and thiol is then produced with hydrolysis or reduction using lithium aluminum hydrido (LAH), etc.

$$RX + \text{sulfurizing agent} \rightarrow [\text{intermediate}] \rightarrow \text{thiol}$$

It is thought that the reaction mechanism progresses with $S_N2$. Recently, the concept of interphase transfer catalyst has been introduced in the field of organic chemistry. In thiol synthesis reactions, that concept has also been widely employed because of advantages in that reactions can be developed in two-phase systems, such as liquid - liquid and solid - liquid systems, reactions can be easily suppressed, and post treatment is simple. With the reaction of pyridine - hydrogen sulfide under the presence of trimethylsilyl chloride (TMS), aldehyde can be changed into O-silylated thiol at the room temperature. Oxidation by manganese dioxide provides disulfides and sulfides with addition to olefins. The reaction of tertiary nitroalkane with sodium sulfide - sulfur progresses with the reaction mechanism accompanying transfer of one electron and provides tertiary thiols at high yields. Benzyl alcohols react with hydrogen sulfides under the presence of a cobalt catalyst, thereby producing thiols. Ketones can also be converted into thiols through reactions with hydrogen sulfides under the presence of amine and sodium cyanide. Other synthesis methods include, for example, one utilizing addition reactions, one utilizing reduction reactions of disulfides, etc., and one for producing thiols having multi-functional groups.

3) Synthesis of Disulfides

The S-S bond of disulfide easily cleaves by attack of reducing agents and various nucleophilic agents. Also, the S-S bond is deeply related to important reactions, such as oxidation and reduction, in the living body. Many examples of reactions between disulfides and nucleophilic agents are usable for studying substitution reactions of sulfur atoms. Disulfides are grouped into symmetrical and asymmetrical types, which require different synthesis methods. However, because organic disulfide compounds used as electrode materials are of the symmetrical type, the synthesis methods of symmetrical disulfides will be described below.

Most of symmetrical disulfides are produced with oxidation of thiols. Easiness in oxidation of thiols is in order of benzene thiol > primary thiol > secondary thiol > tertiary thiol. While oxidation is progressed by oxygen in air, it is accelerated under the presence of alkali. Examples of oxidizing agents include iodine, hydrogen peroxide, potassium permanganate, copper sulfate, lead dioxide, $Fe^{3+}$ complex, and nitrogen oxides such as NO, $N_2O_4$ and $NO_2$. When oxidizing thiols by halogens, various oxidation products, such as sulphenyl halides, sulfinyl halides, and sulfonyl halides, are obtained. On the other hand, when using a halogen having relatively low reactivity, e.g., iodine, disulfides can be selectively produced.

By using thiolate salts [RSM (M: metal)] instead of thiols, the thiolate salts are more easily oxidized to disulfides. For synthesis in such a system, aqueous solutions of alcohol, acetic acid, KI and so on are often as solvents. However, because produced HI serves as a strong reducing agent in a nonpolar, non-proton solvent such as hydrocarbons, thiols cannot be satisfactorily oxidized in some cases. It is therefore known that the reaction becomes easier to progress and is completed with addition of a small amount of water and a polar solvent.

4) Synthesis of Polysulfides

Polysulfides mean compounds made up of bonds of sulfur atoms constituting tri- or more sulfides or compounds containing them. It is known that sulfur atoms are in a most stable state in which eight simple sulfur atoms are successively bonded in the form of a ring, and that most of usual polysulfides have a normal chain structure free from branches. Synthesis of polysulfides has been practiced by various methods for a long time. However, any of the synthesis methods faces a major problem in preventing random existence of the polysulfides (i.e., mixing of di-, tri-, tetra- or more polysulfides).

Conventional methods used in synthesis of polysulfides employ reactions of thios or polysulfides with thionyl chloride, simple sulfur, carbon disulfide, and copper chloride [15]). Those methods, however, produce random products of polysulfides. In consideration of that problem, this study utilizes reactions of thiols with sulfur dichloride ($SCl_2$) and sulfur chloride ($S_2Cl_2$), which have been generally used in synthesis of alkyls and allyl polysulfides.

Chemical Formula 3

$$2\ R\text{-}SH + S_xCl_2 \rightarrow R\text{-}S_x\text{-}R + 2\ HCl$$

Also, in oxidation reactions of thiols, the reactions are carried out in some examples under a basic atmosphere, such as pyridine or amines. Particularly, because alkyl amines are dissoluble in hydrocarbons, they serve as catalytic actions in the case of oxidizing thiols which are easy to dissociate with oxidation, aromatic thols. Although amines do not clearly produce salts with thiols, they have the function of helping dissociation to thiolates with formation of hydrogen bonded compounds and promoting oxidation.

<Computing of Electrochemical Windows by MOPAC calculations>

1) Computing of HOMO and LUMO Energy

HOMO is an abbreviation of Highest Occupied Molecular Orbital and represents an orbital having the highest energy, in which en electron exists as a result of considering an electron that moves under attraction forces from several atomic nuclei in a molecule and repulsion forces from other electrons, determining the state and orbital energy of the electron based on the molecular orbital method, and allocating each electron in order from the orbital having the lowest energy. The electron in such an orbital is most easily ionized. Also, according to the frontier electron theory, that electron takes a special role in electrophilic reactions, and is apt to cause a reaction in a position having a large electron distribution. LUMO is an abbreviation of Lowest Unoccupied Molecular Orbital) and represents an orbital having the lowest energy, in which any electron is not present as a result of determining energy bearable by each of electron in a molecule based on the molecular orbital method, allocating the electrons in units of two to each orbital in order from one having the lowest energy, and determining the electron arrangement in the molecule in the lowest energy state. This orbital is related to acceptance of electrons and, according to the frontier electron theory, it determines nucleophilic reactions. Then, these two orbitals HOMO and LUMO cooperatively form a frontier orbital that is deeply related to chemical and optical properties of the molecule.

The HOMO and LUMO energy thus defined were applied to electrochemical reduction and oxidation reactions of organic disulfide compounds and then reviewed. Assuming the case that one organic disulfide compound is dissolved in an electrolytic solution and the potential of a working electrode is gradually changed relative to a reference electrode, attention is first focused on the reaction in which an electron is withdrawn from a thiolate anion to form a radical, i.e., the oxidation reaction. (See Fig. 10) In the initial stage where the potential is at $E_1$, electrons are not transferred between the electrode and the molecule ($RS^-$), and therefore no current flows. When the potential is gradually increased and reaches $E_x$, an electron is withdrawn from the HOMO level of $RS^-$ to the electrode. Here, $RS^-$ is oxidized and a radical is created. In other words, the higher HOMO energy, the easier $RS^-$ is oxidized. Then, when the potential is further increased, the oxidation reaction of $RS^-$ is sustained. Also, the created sulfur radical produces a disulfide bond through a chemical reaction (coupling reaction). Next, let consider the reaction in which a disulfide bond accepts an electron and produces a thiolate anion, i.e., the reduction reaction. (See Fig. 11) When the potential is initially increased up to a sufficiently high value $E_2$ and is gradually scanned toward the negative side, the LUMO level of R-S-S-R starts to accept an electron from the electrode at a potential $E_x'$ that is not so different from the above potential $E_x$. Here, R-S-S-R is reduced. In other words, the lower LUMO energy, the easier R-S-S-R is reduced.

In short, the oxidation potential depends on the HOMO energy of the thiolate anion, and the reduction potential depends on the LUMO energy of the disulfide bond. In consideration of such a result, the oxidation and reduction potentials were estimated by computing them based on the MOPAC calculations. Further, because the difference between the HOMO level and the LUMO level does not so change depending on the kinds of compounds, it is general that more easily oxidized compounds are harder to reduce and more easily reduced compounds are harder to oxidize.

2) Computing Method of Electrochemical Window

Regarding various heterocyclic organodisulfide compounds, the HOMO energy of the thiolate anion in the reduction state and the LUMO energy of the disulfide bond in the reduction state were computed based on the MOPAC calculations. The HOMO energy and the LUMO energy are computed in unit of electron volt (eV). Therefore, the unit

was converted from eV to the potential relative to lithium by employing, as a basis, the difference between experimental values of the heterocyclic organodisulfide compound (reduction/oxidation potentials of MTT-2S relative to lithium in this Example), for which the reduction/oxidation potentials have been actually determined from experiments, and values obtained by the MOPAC calculations (i.e., the oxidation potential, the HOMO energy, the reduction potential, and the LUMO energy) (see Fig. 12). However, the energy unit "electron volt" of the values computed by the MOPAC calculations is defined as energy obtained when accelerating a particle having a charge of electric element e between two points with a potential difference of 1 V in vacuum, and these conditions are somewhat differs from the actual experiment conditions. Accordingly, the converted potentials relative to lithium is not exactly coincident with the experimental values, but it is thought that the experimental values are usable for comparing the positive and negative relationships of electrochemical windows of heterocyclic organodisulfide compounds having a variety of organic skeletons.

3) Relationship between Organic Skeleton and Electrochemical Window

To clarify the relationships between organic skeletons and electrochemical windows by employing the method of computing the electrochemical windows based on the MOPAC calculations described above, organic sites were changed in accordance with determination criteria given below, and the electrochemical windows were estimated.

1. The kind of a heteroatom in the organic skeleton
2. The number of heteroatoms in the organic skeleton
3. The positional relationships between heteroatoms and disulfide bond sites in the organic skeleton

First, Fig. 13 shows changes of the electrochemical window resulting from changing the kind of a heteroatom in the organic skeleton, in accordance with the above determination criterion 1. In three compounds having the same organic skeleton, the heteroatom in one certain identical position was changed from nitrogen (N) to sulfur (S) and then to oxygen (O). As a result, it was found that, as electron attraction of the heteroatom increased, the electrochemical window shifted toward the more positive potential side.

Next, Fig. 14 shows changes of the electrochemical window resulting from changing the organic sites in accordance with the above determination criterion 2. As seen from Fig. 14, as the number of heteroatoms (i.e., the number of N atoms in this case) increased from 2 to 3 and then to 4, the electrochemical window shifted toward the more positive side. Also, it was found that the width of the electrochemical window (peak separation) was narrowed at the same time as the number of heteroatoms increased.

Finally, Fig. 15 shows changes of the electrochemical window resulting from changing the organic sites in accordance with the above determination criterion 3. In the same organic skeleton, only the disulfide bond was changed. As a result, it was found that, as the disulfide bond site comes closer to the heteroatom, the electrochemical window shifted toward the more positive potential side. Thus, it is estimated that the electrochemical windows of heterocyclic organodisulfide compounds shift toward the more positive side because heteroatoms having strong electron attraction are present in larger number near the disulfide bond sites and therefore the electron density in the disulfide bonds is reduced. On the other hand, it is also estimated that the electrochemical window shifts toward the more negative side by designing the organic sites satisfying the conditions opposed to the above-described ones.

In addition to changing the organic sites according to the above determination criteria, changes of electrochemical windows were also estimated based on similar calculations for the case of converting the disulfide bond into tri- and tetra-bonds, as well as the case of converting the organic skeleton into a conducting polymer of a $\pi$-conjugated system. Resulting calculation results showed that the electrochemical window shifted toward the more positive side with an increase in the number of sulfur atoms in the case of polysulfidation and with an increase in length of the $\pi$-conjugated chain of the conducting polymer in the case of a main chain being the conducting polymer.

4) Selection of Heterocyclic Organodisulfide Compounds Expected to have Electrochemical Windows in More Positive Side

Fig. 16 shows not only the structures of four compounds expected to have electrochemical windows in the more positive side, but also the electrochemical windows obtained from the MOPAC calculations, in consideration of the relationships between the organic sites and the electrochemical windows resulting in accordance with the three determination criteria mentioned above. Those four electrochemical windows are expected to have the electrochemical windows shifted about 1.0 V to 1.2 V in the more positive side than the electrochemical window of simple sulfur, i.e., $S_8$. Further, it is expectable that those compounds have the working voltage of in the range of about 2.8 V to 3.1 V by using a lithium metal as the anode.

5) Selection of Heterocyclic Organodisulfide Compounds Expected to have Electrochemical Windows in More Negative Side

Contrary to the above, heterocyclic organodisulfide compounds having electrochemical windows in the more negative side were designed based on molecular design causing a so large number of heteroatoms having strong electron attraction not to be present in organic sites. The following point, however, must be noted here that, if the disulfide bond site and the heteroatom are designed to locate in positions away from each other, the reaction rates in creation and cleavage of the disulfide bond lower. Therefore, the design of heterocyclic organodisulfide compounds expected to have electrochemical windows in the more negative side was made by locating, near the disulfide bond site, an N atom which has the most negative side potential in Fig. 13, i.e., in the graph showing the relationship between the kinds of heteroatoms and the electrochemical windows, so that high electrode reaction rates are held. Fig. 17 shows the compounds designed in such a manner. Those four compounds expected to have the electrochemical windows in the more negative side are estimated to have potentials shifted 0.5 V to 1.2 V toward the more negative side as compared with the compounds expected to have the electrochemical windows in the more positive side.

<Synthesis Method>

1) Reagents

2,2'- Dibenzothiazolyl disulfide (DBTD), 2-mercaptobenzothiazole, 2-mercaptobenzoxazole, 2-mercaptobenzoimidazole, 2-mercaptopyrimidine (these five being made by Tokyo Chemical Industries, Inc.), 2-amino-4,6-dichloropyrimidine, sodium hydrosulfide - n hydrates, sodium methoxide, iodine (these four being made by Wako Pure Chemical Industries, Ltd.), and sulfur disulfide (made by High Purity Reagent Laboratory Co., Ltd.) were used in the form just available from the respective makers. Also, organic solvents, such as methanol (Kishida Chemical Co., Ltd.), N,N-dimethylformamide, dichloromethane, hexane, dimethylsulfoxide-$d_6$ (these four being made by Wako Pure Chemical Industries, Ltd.), and triethylamine (made by Kanto Kagaku Corporation), were purchased from high purity products and were used as they were.

2) Equipment

Synthesized compounds were identified by using nuclear magnetic resonance spectra (NMR) and Raman spectrometry. The nuclear magnetic resonance spectra were measured in heavy DMSO by using FX-200 (200 MHz) (made by JEOL Co.) to confirm a proton of the mercapto group. Also, the Raman spectrometry was carried out by using System 2000 (made by Perkin Elmer Co.) with a research-grade Nd:YAG (excited at 1.064 μm) laser used as an excitation light source and the incident angle of excitation light set to 180 degrees. InGaAs was employed as a detector. Further, a sample was measured by using an auxiliary powder cell.

3) Synthesis of Thiol

Sodium hydrosulfide - n hydrates (NaSH) (8.4 g, 5 equivalents vs. 2-amino-4,6-dichloropyrimidine) was dissolved in dimethylformamide (DMF) (60 ml) and was heated in an oil bath up to 50 °C while being stirred by a stirrer. After the temperature has become constant at 50 °C, a solution of 2-amino-4,6-dichloropyrimidine (4.92 g) / DMF (90 ml) was dripped for about 2 hours under stirring, and the mixture was stirred for 1 hour. The above reactions were all performed under a nitrogen atmosphere.

The resulting solution was added to 500 ml of pure water and was neutralized by using 1 N - HCl. After cleaning with ether and dichloromethane, 2-amino-4,6-dichloropyrimidine not yet reacted was removed. Subsequently, only a water layer portion was sampled. Then, by adding 1 N - HCl so as to create an acidic condition, 2-amino-4,6-dichloropyrimidine (ADMP) was sedimented as a product. On the product was taken out through filtering and was cleaned with pure water, followed by vacuum drying.

4) Synthesis of Heterocyclic Organodisulfide Compounds

Sodium methoxide (0.89 g, 1.1 equivalents vs. thiol) was dissolved in methanol (10 ml). After adding 2-mercaptobenzoxazole (2.27 g), the solution was stirred for 1 hour and a sodium salt was produced. Subsequently, a solution (60 ml) of iodine (1.9 g, 0.5 equivalent vs. thiol) / methanol was dripped and the mixture was stirred for 24 hours by using a stirrer. The above reactions were all performed under a nitrogen atmosphere. After evaporating the reaction solution to expel out the solvent to some extent, a product was taken out through filtering and was cleaned with pure water and hexane, followed by vacuum drying. As to ADMP, because it has two mercapto groups, a disulfide polymer

was synthesized through similar operations except for that sodium methoxide and iodine were used in amounts twice those used in the above.

5) Synthesis of Heterocyclic Organotrisulfide Compounds

2-Mercaptobenzothiazole (1.67 g) was dissolved in acetonitrile, and triethylamine was dripped at equivalent mol (1.01 g) into the resulting monomer solution. After stirring the mixture for 2 hours at the room temperature by using a stirrer, it was cooled down to 0 °C. A solution of sulfur dichloride (1/2 equivalent vs. monomer) / dichloromethane (100 ml) was dripped into the above mixture and was strongly stirred for 24 hours for maintaining the temperature at 0 °C. The above reactions were all performed under a nitrogen atmosphere. After evaporating the reaction solution to expel out the solvent, hexane was added for cleaning and a product was sedimented and then taken out through filtering. The cleaning with hexane was repeated to remove sulfur that otherwise might be mixed in the product by decomposition of sulfur dichloride. Then, after vacuum drying for 24 hours, a final product was obtained. As to 2-mercaptobenzoxazole, a trisulfide polymer was synthesized through similar operations. As to ADMP, triethylamine and sulfur dichloride were used in amounts twice those used in the above.

<Results and Review>

1 ) ADMP Monomer

As to 2-amino-4,6-dimercaptopyrimidine (ADMP), since ADMP was not commercially available in the form of a monomer, it was synthesized from 2-amino-4,6-dichloropyrimidine (ADCP) by using the method described above. ADCP was white powder, but it was turned to deep yellow powder upon conversion into ADMP. Fig. 18 shows NMR spectra of ADCP and ADMP for comparison. First, looking at the NMR spectrum of ADCP, two peaks can be confirmed, i.e., one at 7.6 ppm depending on a proton of the amino group and the other at 6.9 ppm depending on a proton of C-H in the position b. Next, looking at the NMR spectrum of ADMP having the mercapto groups substituted using NaSH, two peaks depending on protons in positions *c* and *d* identical to the positions a and b in ADCP shifted toward the higher magnetic field side. Further, a new third peak was detected at 11.0 ppm. This third peak is presumably dependent on the mercapto groups. An integral ratio of the third peak is also coincident with that of an ADMP proton estimated. Accordingly, it is thought that ADMP could be synthesized from ADCP and NaSH.

2) Disulfides

Dibenzoxazolyl disulfide (DBOD) selected as one of the compounds expected to have the electrochemical windows in the more positive side was obtained as light yellow powder by the above-mentioned synthesis method using iodine as an oxidizing agent. Another dibenzothiazolyl disulfide (DBTD) used here was a commercially available one. Fig. 19 shows Raman spectra of DBOD and DBTD. For both of (a) DBOD and (b) DBTD, a stretching vibration peak of the S-S bond is detected near 520 $cm^{-1}$. Thus, production of the disulfides can be confirmed. In addition, a stretching vibration peak of the C-S bond is also detected in the range of 700 to 780 $cm^{-1}$ for both of the compounds.

The Raman spectrum of a disulfide polymer of ADMP selected as one of the compounds expected to have the electrochemical windows in the more negative side will be described later in Example 4.

3) Trisulfides

Aiming at an even higher specific capacity of DBTD and DBOD, trisulfides, i.e., dibenzothiazolyl trisulfide (DBTT) and dibenzoxazofyl trisulfide (DBOT), were synthesized. Obtained crystals were light yellow for DBTT and deep yellow for DBOT. Further, similarly to the disulfides, a stretching vibration peak of the S-S bond in each trisulfide is confirmed at 492 $cm^{-1}$ with the Raman measurement. This can be regarded as suggesting that DBTT and DBOT are synthesized because a stretching vibration peak of the S-S bond in commercially available benzyl trisulfide is confirmed at 486 $cm^{-1}$.

Example 3

Electrochemistry of Sulfur Compounds

Several papers regarding electrochemical behaviors of simple sulfur ($S_8$) have been reported. A sulfur atom is reduced in DMF and DMSO to produce a blue species. This is a characteristic of $S_3^{-\cdot}$ (anion radical). This anion radical is very reactive and exhibits a complicated reaction mechanism in multiple stages. Reactions in the mechanism

have different values of the equilibrium constant from each other depending on the kinds and concentrations of solvents. The reduction mechanism of sulfur ($S_8$) in acetonitrile and DMSO has been studied. Hojo et al. report based on voltammograms that sulfur reduces in two stages.

In the case of using a platinum electrode in acetonitrile, it is confirmed that reactions expressed as the following mathematical formula 5 and 6 occur:

Mathematical Formula 5

$$S_8 + 2^{e-} \rightarrow S_8^{2-}$$

Mathematical Formula 6

$$S_8^{2-} + 2^{e-} \rightarrow S_4^{2-}$$

However, these species change to more stable ones in a bulk solution through the following chemical reactions (mathematical formulae 7 and 8):

Mathematical Formula 7

$$S_8^{2-} \xrightarrow{K} S_4^{2-} + 1/4\ S_8 \quad (K = 1.6 \times 10^{2-})$$

Mathematical Formula 8

$$S_6^{2-} \xrightarrow{K} S_3^{-m} \quad (K = 1.2 \times 10^{-2})$$

The species produced by the EC reaction (E: electron transfer process, C: chemical reaction process) are stably present in acetonitrile and are confirmed by ESR.

Also, Park et al. measured electrochemical reduction of sulfur in DMSO in combination with in-situ spectrometry. According to this report, a sulfur atom reduces in two stages. In this two-stage reduction, the diffusion process is a rate-determining step in the first reduction reaction and the electron transfer process is a rate-determining step in the second reduction reaction. In the first reduction reaction, sulfur ($S_8$) is subjected to 2-electron reduction to produce $S_8^{2-}$, which changes to various forms (such as $S_8^{2-}$, $S_4^{2-}$ and $S_3^{-}\cdot$) through the electron transfer homogeneous reaction. Those species are further subjected to 1- or 2-electron reduction in the second reduction reaction. Although various sulfur dianions and anion radicals are produced in such a way, the reactions producing the anion radicals, in particular, is thought as being difficult to identify because the presence time of the anion radicals is short. In addition, it is reported that the above-mentioned reduction products finally return to the most stable $S_8$ through oxidation reactions in two stages.

Further, Guillanton et al. report that, by scanning the potential applied to the sulfur atom up to 2.3 V (vs. SCE) in the oxidation side, the reaction expressed by the following mathematical formula 9 occurs and a cation of sulfur is produced.

However, that reaction is not general and has a substantial difference in several stages and the oxidation of sulfur in a molten salt to produce the cation. According to the report, the reason is that the activation energy for withdrawing an electron in an organic solvent is much higher than that in a molten salt, and therefore the oxidation reaction after cleavage of the $S_8$ ring is so rapid as allowing detection of $S^{2+}$ in the final state. Guillanton et al. also study the reduction reaction from $S^{2+}$ to $S_0$ and confirm that only a proton is reduced and $S^{2+}$ is not reduced under the condition of trichloro acetate being present in excessive amount. In other words, it is reported that the reduction of $S^{2+}$ can be suppressed by creating the acidic condition.

As to the oxidation of disulfides, the oxidation mechanism of the disulfide bond is reported in connection with, for example, the process in which polyparaphenylene sulfide (PPS) is produced by anode-oxidizing diphenyl disulfide in an organic solvent, and synthesis of N-tert-butyl-amide through anode oxidation of di-tert-butyl disulfide.

As to the electrode oxidation of normal chain polysulfides, according to a report[5)] by Guillanton et al., the polysulfides have different oxidation potentials depending on the degree of polysulfides and the degree of the polysulfide, which has been relatively difficult to identify in the past, can be determined with electrochemical measurements such as CV. Then, it is confirmed that, as the length of a polysulfide chain increases, the oxidation potential shifts toward the positive side, i.e., 1.3 to 1.5 V vs. SCE for the disulfide bond, 1.6 to 1.8 V vs. SCE for the trisulfide bond, and 1.9 to 2.1 V vs. SCE for the tetrasulfide bond. In addition, Guillanton et al. report that $S^{2+}$ created by anode electrolysis of sulfur using a carbon electrode react with thiols to form disulfides, trisulfides and polysulfides.

In this Example, electrochemical characteristics in a non-aqueous solution were evaluated for DBTD and DBOD expected to have the electrochemical windows in the more positive side and trisulfides thereof, as well as for ADMP, MBI and MP expected to have the electrochemical windows in the more negative side, those samples being synthesized in Example 2.

<Experiments>

1) Reagents and Apparatus

Battery-graded gamma butyrolactone (made by Mitsubishi Chemical Corporation) was used as the solvent, and lithium trifluoromethane sulfonate ($LiCF_3SO_3$) (made by Tomiyama Pure Chemical Industries, Ltd.) and tetra-n-butylammonium perchlorate ($n\text{-}BuNClO_4$) (made by Tokyo Chemical Industries, Inc.) were used as the support electrolytes. Heterocyclic organosulfur compounds, such as dibenzothiazolyl disulfide (DBTD), 2-mercaptobenzoimidazole (MBI), and 2-mercaptopyrimidine (MP), used here were the same as those used in 3.3.1. Further, dibenzoxazolyl disulfide (DBOD) and 2-amino-4,6-dimercaptopyrimidine (ADMP) used here were those produced by the synthesis method described in Example 2.

The CV measurement was carried out by using, as a 3-electrode potentiostat, an electrochemical analyzer (Model 660 made by ALS Co.) or an electrochemical workstation commercially available as BAS 100B/W. For the compounds (DBTD and DBOD) discussed in Example 2 as being expected to have the electrochemical windows in the more positive side and trisulfides thereof, evaluation was made for use as a cathode material of lithium polymer batteries by using glassy carbon (same as that used in Example 1) as the working electrode, a lithium metal foil as the reference electrode, a platinum winding as the counter electrode, and 0.1 M $LiCF_3SO_3$/GBL as the electrolytic solution. Because of employing the lithium metal, the measurement was carried out in a globe box (MO-40M made by VAC Co.) under an argon atmosphere. On the other hand, for the compounds (MBI, MP and ADMP) expected to have the electrochemical windows in the more negative side, evaluation was made for use as an anode material of non-lithium high-energy storage devices by using glassy carbon as the working electrode, Ag/AgCl as the reference electrode, a platinum winding as the counter electrode, and 0.1 M tetra-n-butylammonium perchlorate (hereinafter referred to as "TBAP") / GBL as the electrolytic solution. Furthermore, oxygen dissolved in the sample to be measured was purged out by using nitrogen gas before the start of measurement, following which the measurement was carried out at the room temperature in the atmosphere.

A GC electrode used here was prepared by polishing a purchased electrode using polishing-purposed alumina (particle size: 0.06 μm, made by Maruto Kogyo Co., Ltd., ultrasonically cleaning it by distilled water, and then ultrasonically degreasing it using acetone (Reagent Grade, made by Kanto Kagaku Corporation). The platinum winding for the counter electrode was used after baking it with a gas burner.

2) Measuring Method

The CV measurement of DBTD and DBOD expected to have the electrochemical windows in the more positive side was carried out by dissolving 5 mM of DBTD or DBOD in the electrolytic solution of 0.1 M $LiCF_3SO_3$ / GBL. On the other hand, the CV measurement of ADMP, MBI and MP expected to have the electrochemical windows in the more negative side was carried out as follows because the oxidation reaction serves as a discharge reaction unlike the above-mentioned compounds DBTD and DBOD. After preparing the solution of 0.1 M $LiCF_3SO_3$ / GBL containing 5 mM of the active substance, 1 equivalent of diethylamine (2 equivalents of ADMP) was added and the solution was caused to be put under a basic atmosphere so that the respective mercapto groups were present in a state close to thiolate anions. The measurement was then started. By starting the measurement in such a manner, the oxidation reaction from the thiolate anion to the disulfide bond can be evaluated.

Chemical kinetics parameters were calculated with linear sweep voltammetry using a rotary electrode. After drawing a Tafel plot based on a voltammogram resulting from scanning the potential at a scan rate of 1 mV $cm^{-1}$, an

exchange current density $i_0$ was computed from a segment and a transfer coefficient $\alpha$ was computed from a slope. Then, based on those parameters, a value of the electrode reaction rate constant $k^{0'}$ was computed by using the Allen-Hickling equation. A manner of computing $k^{0'}$ will be described in detail in <Results and Review> given below.

<Results and Review>

1) Electrochemical Characteristics of Heterocyclic Organic Di- and Tri-Sulfide Compounds Expected to have Electrochemical Windows in More Positive Side

Review from Standpoint of Thermodynamics

Fig. 20 shows cyclic voltammograms of DBTD and DBOD obtained at a scan rate of 50 mV $s^{-1}$. As shown, voltammograms having relatively good symmetry were obtained for both DBTD and DBOD. The reduction potential was + 2.88 V vs. $Li/Li^+$ for DBTD and + 3.05 V vs. $Li/Li^+$ for DBOD. These values were almost equal to those of the reduction potentials resulting from the MOPAC calculations. Comparing the potentials between those two disulfides and other various heterocyclic organodisulfide compounds, shown in Fig. 21, which have been so far studied by the laboratory to which the inventors belong, it is understood that both DBTD and DBOD have the electrochemical windows in the more positive side. Particularly, DBOD exhibited the highest reduction potential, i.e., + 3.05 V vs. $Li/Li^+$, among dimers of the heterocyclic organodisulfide compounds having been studied so far.

Review from Standpoint of Chemical Kinetics

Next, the electrode reaction rate constant $k^0$ was computed for each of DBTD and DBOD which had been proved to have higher reduction potentials. At that time, a rotary electrode was employed and the scan rate was slowed down to 1 mV $s^{-1}$ for the purpose of minimizing an influence of the substance transfer process. Fig. 21 shows the cyclic voltammograms obtained by the linear sweep voltammetry. When the potential is scanned toward the negative side from the equilibrium, a current abruptly starts to flow from the vicinity of an overvoltage of - 0.1 V and reaches a limiting current near - 0.3 V. Because the rotary electrode was employed and the scan rate was slowed down to 1 mV $s^{-1}$, the limiting current can be regarded as depending on the charge transfer rate-determining step. A Tafel plot was drawn based on the voltammogram. Then, as shown in Fig. 22, an exchange current density $i_0$ was computed from a segment and a transfer coefficient $\alpha$ was computed from a slope. Subsequently, by putting the computed values of $i_0$ and $\alpha$ in the Allen-Hickling equation (expressed as eq. 1 in Fig. 22), a value of the electrode reaction rate constant $k^{0'}$ during the reduction/oxidation of the disulfide bond was computed.

Fig. 23 shows respective values of the electrode reaction rate constant $k'^0$ of DBTD and DBOD computed as mentioned above in comparison with the $k^{0,}$ values of the heterocyclic organodisulfide compounds having been studied as far. DBTD has $k^{0'}$ of $4.40 \times 10^{-9}$ cm $s^{-1}$ and DBOD has $k^{0'}$ of $9.80 \times 10^{-9}$ cm $s^{-1}$. Comparing with the electrode reaction rate constants $k^{0'}$ of the other compounds, it can be confirmed that the DBTD's value is comparable, but the DBOD's value is about two to three times. Also, comparing $k^{0'}$ of DBOD with that of poly(DTDA) having a conducting polymer as a main chain, the former is slightly smaller than the latter. However, $k^{0'}$ of DBOD is increased in about three orders of magnitude as compared with that of DMcT which has been a typical example of the organodisulfide compounds in the past. Thus, it was proved that DBOD had a maximum value of $k^{0'}$ among the dimers of the heterocyclic organodisulfide compounds.

Electrochemical Characteristics of Trisulfides

Aiming at an even higher specific capacity of DBTD and DBOD having electrochemical characteristics described above, the disulfide bonds were further sulfidated to form trisulfides, of which electrochemical characteristics were evaluated by the CV measurement. Fig. 24 shows cyclic voltammograms of 2,2'-dibenzothiazolyl trisulfide (DBTT) and 2,2'-dibenzoxazolyl trisulfide (DBOT) obtained at a scan rate of 50 mV $s^{-1}$ in comparison with the respective disulfides. In each of the cyclic voltammograms of DBTT and DBOT, two new reduction peaks (second and third peaks counted from the higher potential side) were detected in the more negative side (near 2.4 V, 2.2 V for DBTT and near 2.2 V, 2.0 V for DBOD) than a first reduction peak which is located substantially at the same potential as the reduction peak of the corresponding disulfide. Then, the discharge (reduction) capacity was computed for each of the cyclic voltammograms. As a result, the discharge capacity was 939 $\mu$C for DBTT and 1077 $\mu$C for DBOT. These values were increased 1.19 times for DBTT and 1.23 times for DBOT as compared with those of the corresponding disulfides. The values of those increase rates were comparable to those resulting from conversion of MTT from disulfides to trisulfides. Further, comparing the discharge capacity between DBTT and DBOT, it is seen that DBOT has a value about 1.15 times as large as that of DBTT. As in the case of the disulfides, the reason is presumably in that DBOT has a higher

electrode reaction rate. In the oxidation reaction, however, oxidation peaks corresponding to the second and third reduction peaks were hardly detected in each of the two compounds, and only one oxidation peak corresponding to the first reduction peak was detected near 3.7 to 3.8 V. As with the trisulfides of MTT, the reason is presumably in that a sulfur dianion produced at the third reduction peak reacts with a lithium ion and comes into an electrochemically passive state.

2) Electrochemical Characteristics of Heterocyclic Organic Di- and Tri-Sulfide Compounds Expected to have Electrochemical Windows in More Negative Side

Review from Standpoint of Thermodynamics

Fig. 25 shows cyclic voltammograms of MBI and MP each having one mercapto group, and of ADMP having two mercapto groups, these compounds being selected and synthesized as ones expected to have electrochemical windows in the more negative side. As mentioned above, in order to evaluate the oxidation reaction from the thiolate anion to the disulfide bond, i.e., the oxidation (discharge) reaction after reduction of dimers (charge) for MBI and MP and the oxidation (discharge) reaction after reduction of an oligomer (charge) for ADMP, diethylamine was added to each solution in equivalent mol to the mercapto group(s) of the corresponding active substance and the solution was caused to be put under a basic atmosphere so that the respective compounds were present in a state close to thiolate anions. For MBI and MP each having one mercapto group, a pair of reduction/oxidation peaks appeared in the stationary state. Comparing the oxidation peak potentials, MBI had 0.59 V and MP had 0.68 V. In other words, the oxidation peak of MBI was slightly in the more negative potential side than that of MP. ADMP having two mercapto groups is thought as being present in the solution such that the state in which one thiol group having a smaller value of pKa has turned to a thiolate anion and the state in which both thiol groups have turned to thiolate anions are mixed with each other at equilibrium. For ADMP, therefore, two oxidation peaks were confirmed at 0.27 V and 0.53 V by the CV measurement. The reason is presumably in that the two mercapto groups of ADMP have different values of pKa. Thus, the following process is estimated to occur. First, the thiolate aniton produced from one mercapto group having a smaller value of pKa is oxidized at the first oxidation peak (0.27 V) to form a dimer. Then, at the second oxidation peak, the other thiolate ion or the thiol is oxidized to form an oligomer or a polymer. Comparing at the oxidation peak potentials of those three compounds, it is confirmed that the first and second oxidation peaks of ADMP are both present in the most negative side among them.

Next, it was tried to form a network polymer in combination of ADMP having two mercapto groups and MBI or MP having one mercapto group. A mixing ration was set to ADMP : MBI or MP = 1 : 2. Here, MBI and MP are basic compounds. Accordingly, when MBI or MP is mixed with ADMP in the reduction state, it is thought that a proton transfers between one mercapto group of ADMP having a smaller value of pKa and the nitrogen site in MBI or MP, and a thiolate anion and quaternized MBI or MP are present in the solution in a state forming an ion pair (see Fig. 26). Hence, a shift of the oxidation potential toward the more negative side is also expectable in a diethylamine free system. Fig. 27 shows cyclic voltammograms of ADMP having two thiol groups and respective composite network polymers. It is seen that, in any of the composite network polymers, the first oxidation peak potential at which the ADMP dimer is produced shifts toward the more negative side. Particularly, in the composite network system of ADMP and MP, a shift of about 100 mV was confirmed. These results support that an ion pair is formed between ADMP and MBI or MP, and suggest that a proton transfers more easily in the composite network system of ADMP and MP. Furthermore, comparing the cyclic voltammograms of the respective composite systems with that of ADMP present in the form of a thiolate anion, their first oxidation peak potentials are comparable with each other (see Fig. 28). However, it is seen that the second oxidation peak appears in the more positive side in each of the composite systems. The reason is presumably in that, since it is difficult for the mercapto group of ADMP having a larger value of pKa and MBI or MP to form an ion pair, the form of the mercapto group and the form of the thiolate anion are mixedly present in the solution and hence the second oxidation peak of each composite system appears in the more positive side than that of $ADMP^{2-}$. The above-mentioned review from the standpoint of thermodynamics suggests that the simple ADMP system under a basic atmosphere has the oxidation potential in the most negative side.

Review from Standpoint of Chemical Kinetics

Next, in the same manner as for DBTD and DBOD, a value of the electrode reaction rate constant $k^{0\prime}$ was calculated for ADMP, MBI and MP, as well as of ADMP + MBI and ADMP + MP which were composite systems. Fig. 29 shows respective $k^{0\prime}$ values of the simple systems and the composite systems. Comparing $k^{0\prime}$ between ADMP and $ADMP^{2-}$ under a basic atmosphere, the value of $ADMP^{2-}$ is larger in four orders of magnitude. Thus, the effect resulting from establishing the basic atmosphere can be clearly confirmed. It can also be confirmed that, under the same basic atmosphere, $k^{0\prime}$ of $ADMP^{2-}$ is $7.16 \times 10^{-4}$, i.e., in three orders of magnitude larger than those of $MBI^{-1}$ and $MP^{-1}$. This

may be because the equilibrium state of the mercapto group and the thiolate anion is shifted in $ADMP^{2-}$ closer to the thiolate anion side than in $MBI^-$ and $MP^-$. Further, the respective $k^{0\prime}$ values of the composite systems was increased about one order of magnitude as a result of the effect of ion-pair formation in comparison with that of ADMP with no addition of diethylamine, but they are still in three orders of magnitude smaller than that of $ADMP^{2-}$. The above-mentioned effect in chemical kinetics suggests that $ADMP^{2-}$ is a compound most expectable as a high power density material.

<Concluding Remarks>

In this Example, electrochemical characteristics were evaluated for DBTD and DBOD selected as the compounds expected to have the electrochemical windows in the more positive side and to exhibit a higher electrode reaction rate, and for ADMP, MBI and MP selected as the compounds expected to have the electrochemical windows in the more negative side and to exhibit a higher electrode reaction rate.

First, as for the compounds expected to have the electrochemical windows in the more positive side, particularly DBOD showed the reduction potential (+ 3.05 V vs. $Li/Li^+$) in the highest potential side and a maximum value of the electrode reaction rate constant, i.e., $9.80 \times 10^{-9}$ as compared with the various heterocyclic organodisulfide compounds having been studied so far by the laboratory to which the inventors belong. It is therefore conceivable to develop cathode materials of lithium polymer batteries by using DBOD as a design motif base. One practicable example is an application as a three-dimensional network polymer resulting from increasing the number of disulfide bonds of DBOD and polymerizing them. In such a case, the working voltage is about 3.0 V vs. $Li/Li^+$, i.e., lower than those of currently prevailing lithium ion batteries. By adding three reaction sites to DBOD, however, DBOD is expected to have a very high specific capacity of 379 Ah $kg^{-1}$ and to exhibit an energy density of 1000 Wh $kg^{-1}$. Further, as the number of reaction sites increases, the frequency of creation of the disulfide bond is increased. Accordingly, an increase in the reaction rate during charge is especially expected. Moreover, a further increase in the specific capacity is expectable by polysulfidating a disulfide into tri- and tetra-sulfides. In that case, it is thought that satisfactory cycle characteristic is not expected as seen from the cyclic voltammograms of DBTT and DBOT. Even with the disulfide bond, however, DBOD can serve as a design motif base expected to provide a vary high energy density in comparison with the cathode materials which have been employed in the past.

Next, as for the compounds expected to have the electrochemical windows in the more negative side, particularly ADMP with no addition of diethylamine showed the electrochemical window in the most negative side and a value of the electrode reaction rate constant which was about three orders of magnitude larger as compared with the other selected compounds. It is therefore conceivable to develop anode materials of non-lithium high-energy storage devices by using ADMP as a design motif base. By using, as the active substance, poly(ADMP) obtained with polymerization of the disulfide bond and using a non-lithium electrolyte, poly(ADMP) is present in the state of a thiolate anion during charge (reduction). Hence, it is expected to provide the discharge (oxidation) potential and the electrode reaction rate comparable to those of ADMP with no addition of diethylamine. In addition, since ADMP has a very high electrode reaction rate as compared with the heterocyclic organodisulfide compounds which have been studied in the past, ADMP is also expectable as a design motif base for developing high power density materials.

Example 4

<Battery Characteristics of Di- Tri- and Tetra-Sulfide Compounds>

Up to now, organic disulfide compounds have been studied as cathode materials of lithium secondary batteries, and reports regarding their charge/discharge characteristics have also been publicized. When utilizing the reduction/oxidation reactions of the disulfide bond in batteries, the charge/discharge mechanisms take place in the form of 2-electron reactions as expressed by Mathematical Formula 9. Fig. 30 shows respective reaction mechanisms in an organic disulfide cathode and a lithium metal anode during discharge and charge. In the case of using the organic disulfide compound as the cathode material, the most serious problem resides in, as described above, that a thiolate anion produced during discharge is dissolved into the electrolyte from the cathode (eq. 2 in Fig. 30), thus resulting in deterioration of both cycle characteristic and battery capacity. With the view of overcoming that problem, S. Visco and Koyama et al. report construction of secondary batteries using high-molecular solid electrolytes and gel electrolytes, and studies on charge/discharge characteristics of the secondary batteries. As one example, according to a report publicized from Poly Plus Co., a thin-layer and full-solid battery was manufactured in combination of a lithium anode and an in-house polymer $[P(EO)_8\text{-}LiCF_3SO_3]$, 700 Wh $kg^{-1}$ was obtained under conditions of 90 °C and C/10, and a nominal capacity of 100 Wh $kg^{-1}$ was obtained on the basis of a discharge characteristic of 3.1 C. Also, the cycle characteristic of 350 charge/- discharge cycles was achieved at DOD of 14 % with 100 Wh $kg^{-1}$ at 3.1 C, i.e., 700 Wh $kg^{-1}$ at C/10.

As other examples, there are a report regarding charge/discharge results of a cell fabricated by using a DMcT polymer and a mixed electrolytic solution of propylene carbonate (PC) / 1,2-dimethoxyethane (DME) or a high-molecular solid electrolyte, and a report regarding a laminated battery using amorphous polyethyleneoxide as a high-molecular solid electrolyte in which the performance does not deteriorate even after repeating about 100 cycles of overcharge/ overdischarge and an output of 30 Wh $l^{-1}$ can be taken out as a continuous output.

Aiming at a higher specific capacity, Naoi et al. synthesized poly(DMcT-trisulfide) and poly(DMcT-tetrasulfide) by converting poly(DMcT-disulfide) into the trisulfide and tetrasulfide forms, and conducted discharge tests on them by using a screwed cell. Fig. 31 shows discharge curves measured at the current density of 0.1 mA $cm^{-2}$ and the end-point voltage of 2.0 V with a lithium metal used as an anode. The discharge curve of poly(DMcT-disulfide) includes one flat region, while additional two flat regions can be confirmed for each of poly(DMcT-trisulfide) and poly(DMcT-tetrasulfide). This result is reported as being attributable to multi-stage reduction reactions of the trisulfide bond and the tetrasulfide bond. Comparison of energy density shows that poly(DMcT-disulfide) has 385 Wh $kg^{-1}$, while poly (DMcT-trisulfide) has 590 Wh $kg^{-1}$ and poly(DMcT-tetrasulfide) has 700 Wh $kg^{-1}$. Thus, an increase of the energy density with polysulfidation is achieved.

<Purpose>

In this Example, attention was focused on ADMP that was confirmed as having the electrochemical window in the most negative side and the maximum electrode reaction rate constant in the above Example 3, and a potentiality of ADMP being used as anode materials of non-lithium high-energy storage devices was evaluated by synthesizing poly(ADMP) resulting from polymerization with disulfide bonds and then conducting charge/discharge tests. Because organic sulfur compounds have been considered as cathode materials in the past, their applications as anode materials are thought as being a new approach.

<Experiments>

1) Reagents and Apparatus

Synthesized Poly(ADMP) was obtained in accordance with the synthesis method described in Chapter 3 by using 2-amino-4,6-dichloro-pyrimidine as a start material. The initial capacity was measured by using, as a 3-electrode potentiostat, an electrochemical analyzer (Model 660 made by ALS Co.). The working electrode used here was prepared by mixing a carbon paste and poly(ADMP), coating the mixture over an Indium-Thin-Oxide (ITO) electrode, and drying it for 24 hours by vacuum drying. A platinum winding and Ag/AgCl were used as the counter electrode and the reference electrode, respectively, similarly to the case described in Chapter 4. TBAP was used as the support electrolyte and GBL was used as the solvent. Furthermore, oxygen dissolved in the sample to be measured was purged out by using nitrogen gas before the start of measurement, following which the measurement was carried out at the room temperature in the atmosphere.

2) Experimental Method

When evaluating a potentiality of poly(ADMP) being used as anode materials, selection of cathode materials becomes an issue. As compounds expected to have a relatively high working voltage in this stage, there are conducting polymers (such as poly-1,5-diamino-anthraquinone and poly-5-cyanoindol) having the electrochemical windows in the more positive side. By combining those conducting polymers with poly(ADMP), the working voltage of 0.8 to 1.3 V is expectable. However, since the capacity of poly(ADMP) is much smaller than those of the organic disulfide compounds, it is inappropriate to evaluate the initial capacity of poly(ADMP-2S) in this Chapter. Hence, in this Chapter, a 3-electrode cell was employed and the evaluation was made on a single electrode in the solution. Also, poly(ADMP-2S) is initially in the discharge (oxidation) state and hence it is discharged (oxidized) after being charged (reduced). Since the test is carried out here in the solution, it is thought that migration of reductants created during charge (reduction) more largely affects the discharge capacity than in the case of using an ordinary cell and it is difficult to accurately evaluate the discharge capacity. Accordingly, a potentiality of poly(ADMP) being used as anode materials of high-energy storage devices was evaluated here based on the initial charge capacity. The evaluation was made at the depth of charge of 40 % under three conditions of C-rate dependency, i.e., 0.5, 1.0 and 5.0 C. Further, the end-point voltage was set to - 1.1 V vs. Ag/AgCl. All the charge capacity was calculated starting from the measured result in the first cycle.

<Synthesis and Characterization>

ADMP (see Example 2) obtained by reacting 2-amino-4,6-dichloro-pyrimidine as a start material with NaSH

was reacted with sodium methoxide to form a sodium salt, which was then chemically oxidized by using iodine as an oxidizing agent (see Example 3), thereby synthesizing poly(ADMP) polymerized with disulfide bonds. A crystal thus obtained was deep yellow. Fig. 32 shows a Raman spectrum of poly(ADMP-2S) for comparison. Similarly to DBTD and DBOD, a peak depending on the S-S bond was confirmed near 530 $cm^{-1}$. This result suggested that poly(ADMP) polymerized with disulfide bonds could be synthesized.

<Results and Review>

Fig. 33 shows respective charge curves in the first cycle at the depth of charge (DOC) of 40 % under conditions of 0.5 C, 1.0 C and 5.0 C. Under the condition of 0.5 C, a flat region appeared near - 0.8 V vs. Ag/AgCl and the charge capacity showed a value of 136 Ah $kg^{-1}$ that is a theoretical specific capacity (capacity development rate: 100 %) at the depth of charge (DOC) of 40 %. Then, the capacity development rate was gradually reduced with an increase of the C rate to 1.0 C and then to 5.0 C. Under the condition of 5.0 C, however, a relatively high value, i.e., 88.4 Ah $kg^{-1}$ (capacity development rate: 65 %) was still obtained. The reason is presumably in that the electrode reaction constant of ADMP was about three orders of magnitude larger than those of MP and MBI. Because evaluation for battery materials is generally made in consideration of values under the condition in the range of 0.1 C to 1.0 C, the above value (88.4 Ah $kg^{-1}$) under the condition of 5 C can be said as being an interesting value.

For comparison with other energy devices, the energy density and the power density were calculated on an assumption that the cathode was made of the above-mentioned conducting polymer and the working voltage was set to 1.0 V. Fig. 34 shows a Lagone plot in comparison with general energy devices. Poly(ADMP) exhibited the energy density of 136 Wh $kg^{-1}$ and the power density of 680 W $kg^{-1}$ under a condition at DOC of 40 %. This value of the energy density is comparable to the value of a lithium ion battery and it is at a level not yet achieved with electrochemical capacitors. Also, the power density is about one order of magnitude larger than those of general battery materials. Thus, it was suggested that poly(ADMP) had a potentiality expectable as an energy storage anode material having a high energy density and a high power density.

Further, it is preferable to select a cathode material that is able to sufficiently utilize the specific capacity and the power density of poly(ADMP). Because the evaluation was made on a single electrode in this Example of the present invention, the resulting specific capacity, etc. may change depending on the combination with the cathode and the electrolyte. As candidates for cathode materials, conducting polymers and heterocyclic organosulfur compounds having the electrochemical windows in the more positive side, which are employed in Examples of the present invention, are considered. It is desired that the initial discharge capacity and the cycle characteristic are also taken into account in combination of those candidates with the cell.

## Claims

1. A method of designing a novel compound wherein, when designing an energy storage device material from a heterocyclic organosulfur compound, an increase in disulfide part and polysufidation are combined for an increase in theoretical specific capacity.

2. A method of designing a novel compound according to Claim 1, wherein increasing of electron attraction of an organic part and decreasing of electron density in disulfide bonds are combined for an increase in electrode reaction rate.

3. A method of designing a novel compound according to Claim 1 or 2, wherein a concept of producing a supramolecule is employed to increase a specific capacity and power density.

4. An energy storage device material obtained from a heterocyclic organosulfur compound designed by a method according to Claim 1, 2 or 3.

Fig.1

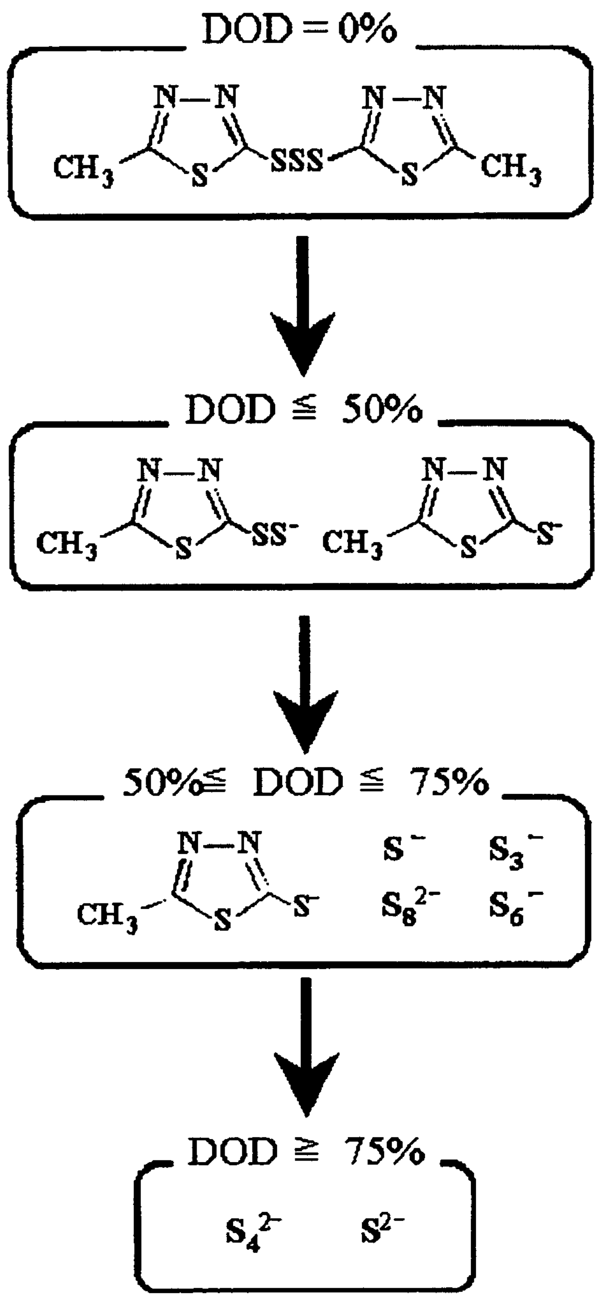

Fig.2

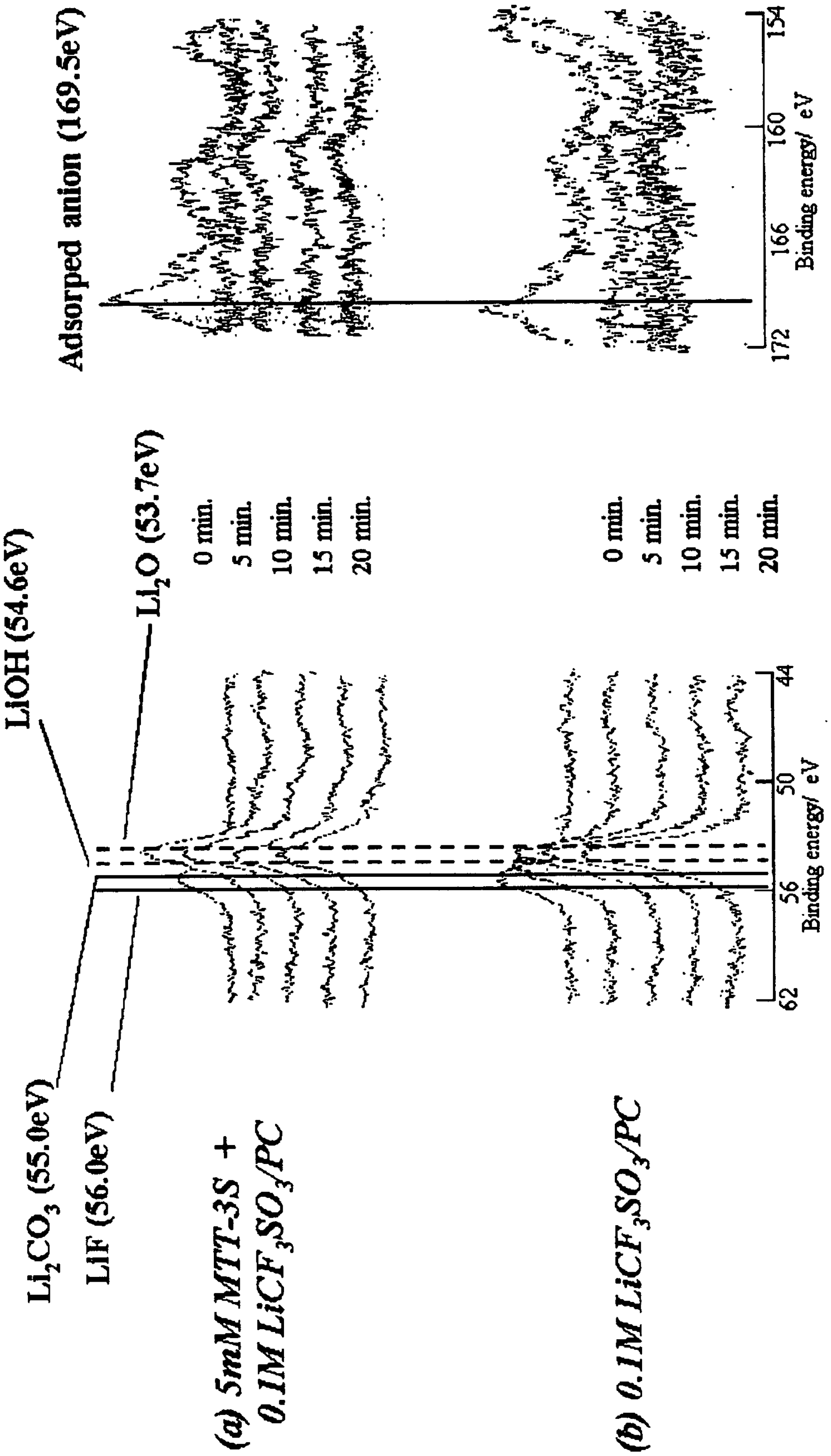
Li 1S
S 2P
Adsorped anion (169.5eV)
LiOH (54.6eV)
Li2O (53.7eV)
Li2CO3 (55.0eV)
LiF (56.0eV)
(a) 5mM MTT-3S + 0.1M LiCF3SO3/PC
(b) 0.1M LiCF3SO3/PC
0 min.
5 min.
10 min.
15 min.
20 min.
62
56
50
44
Binding energy/ eV
172
166
160
154
Binding energy/ eV

Fig.3

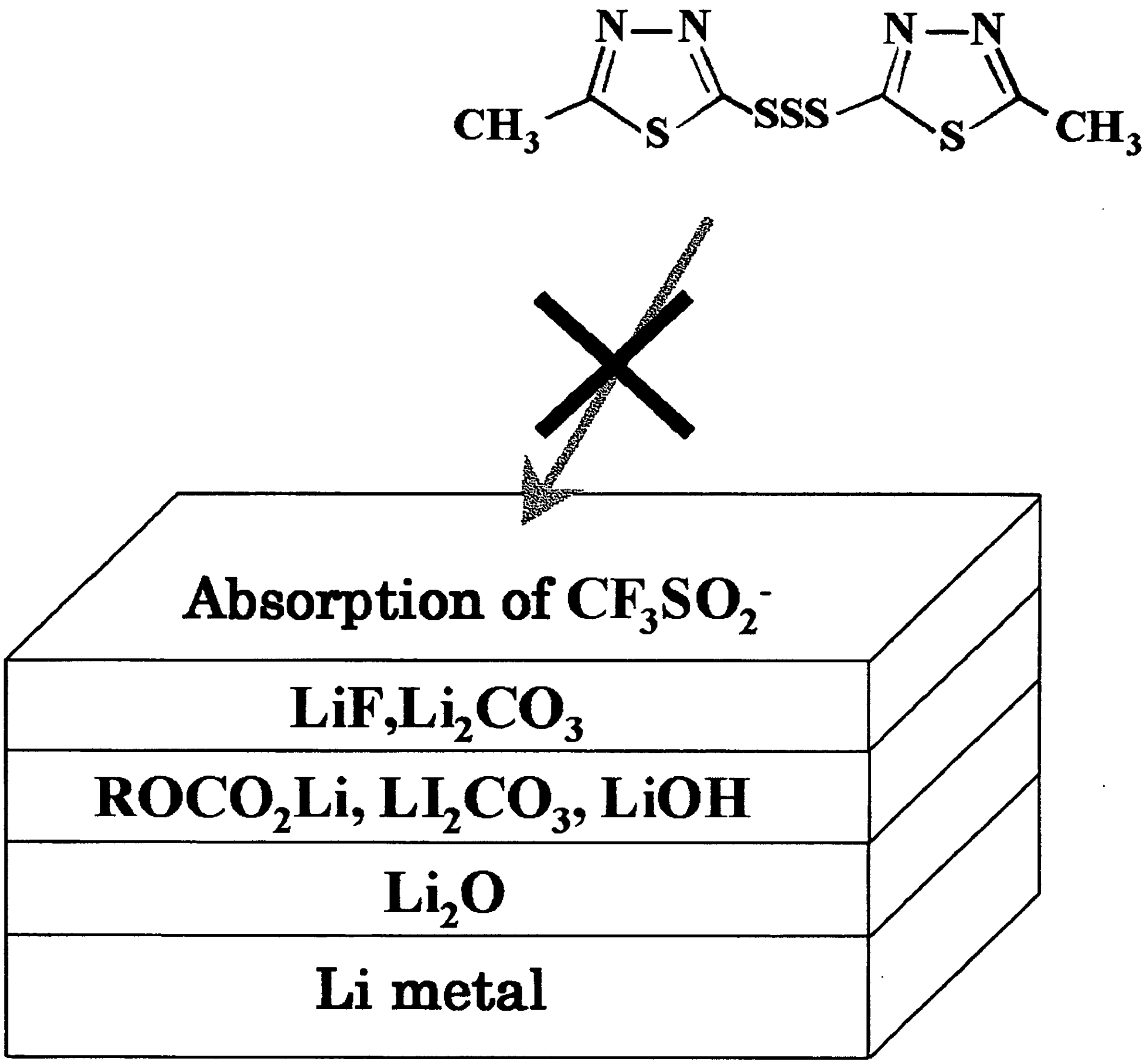
Absorption of $CF_3SO_2^-$
$LiF, Li_2CO_3$
$ROCO_2Li$, $LI_2CO_3$, LiOH
$Li_2O$
Li metal

# Fig.4

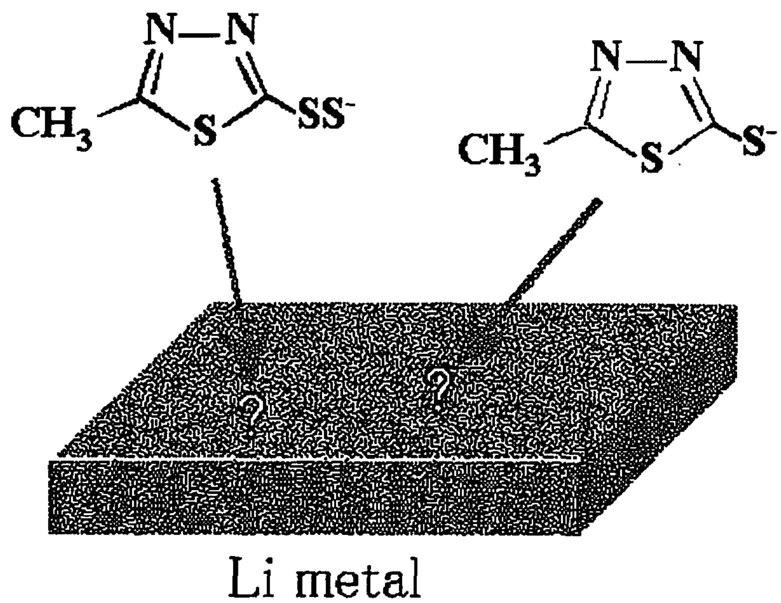


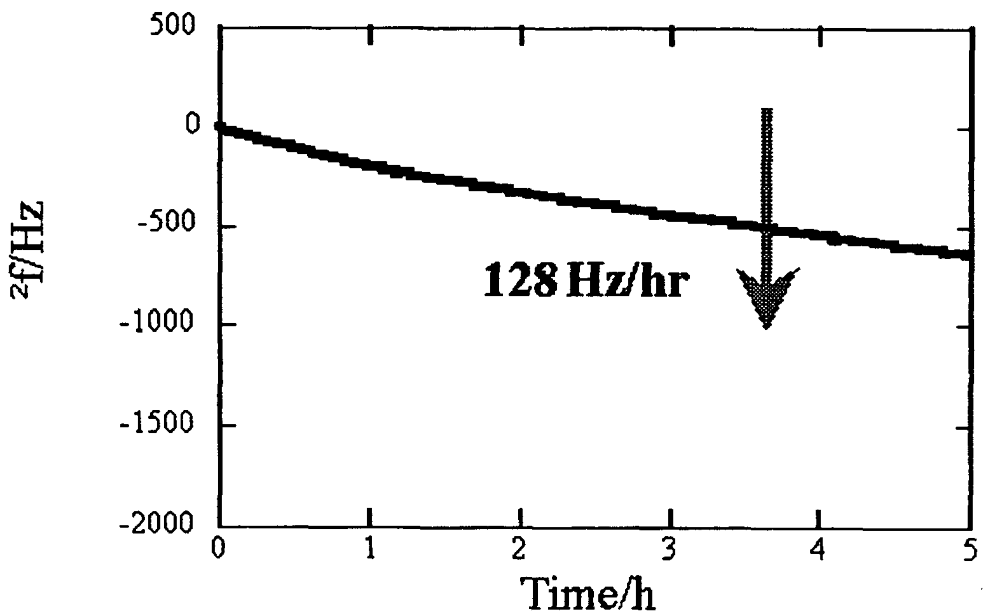

Fig.5

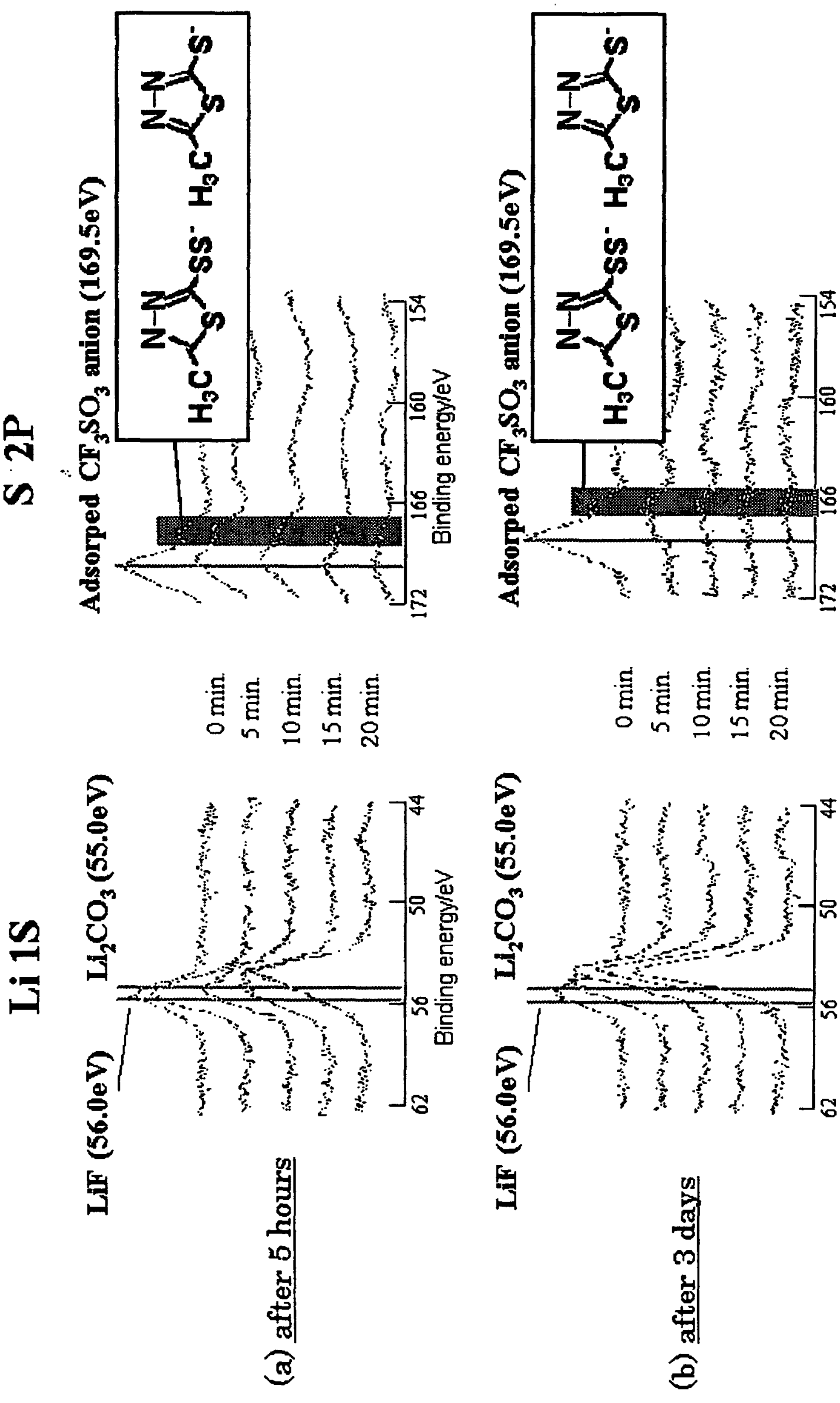
Li 1S
S 2P
LiF (56.0eV)
$Li_2CO_3$ (55.0eV)
Adsorped $CF_3SO_3$ anion (169.5eV)
0 min.
5 min.
10 min.
15 min.
20 min.
Binding energy/eV
62
56
50
44
172
166
160
154
(a) after 5 hours
(b) after 3 days

Fig.6

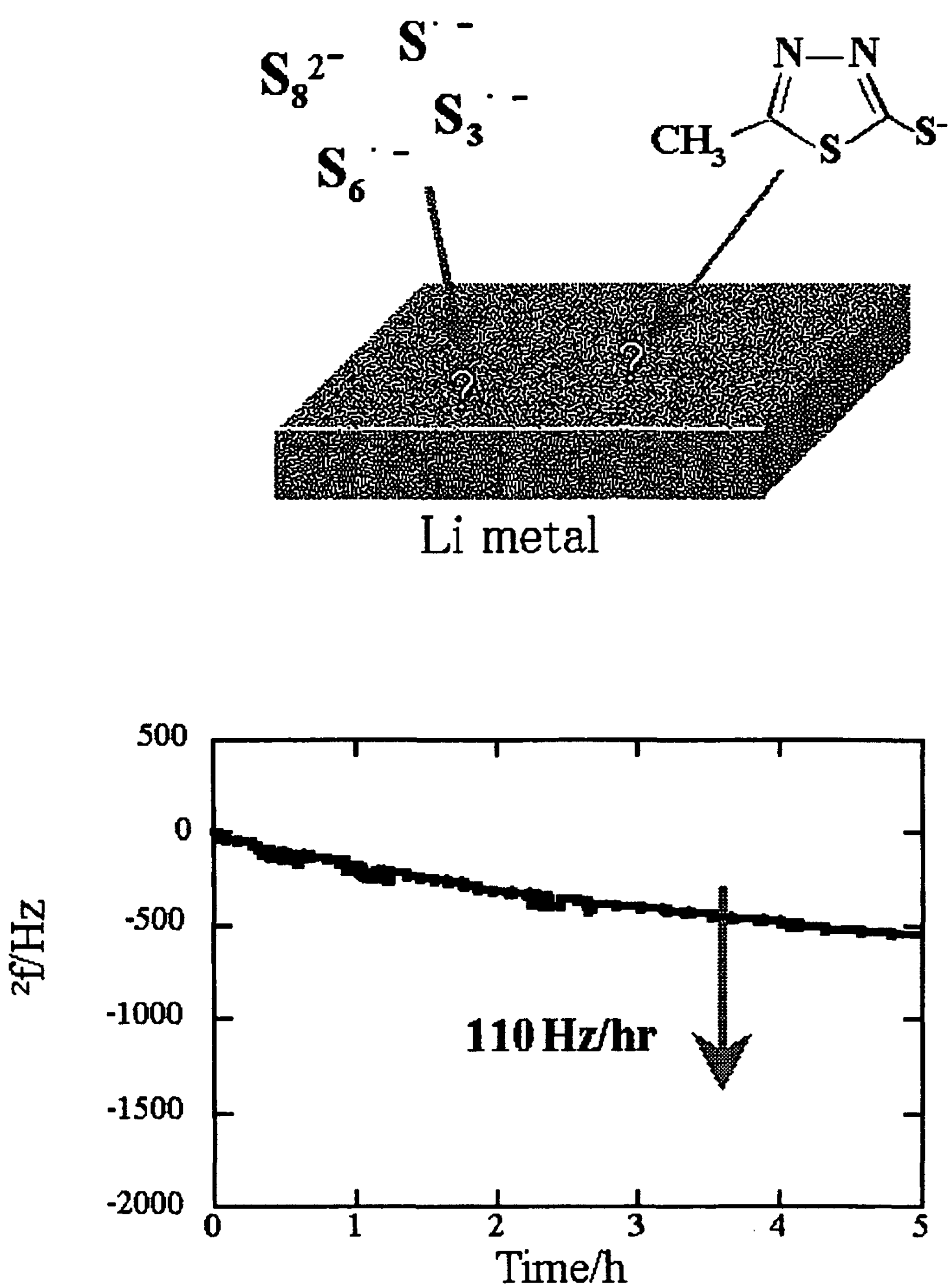

Fig.7

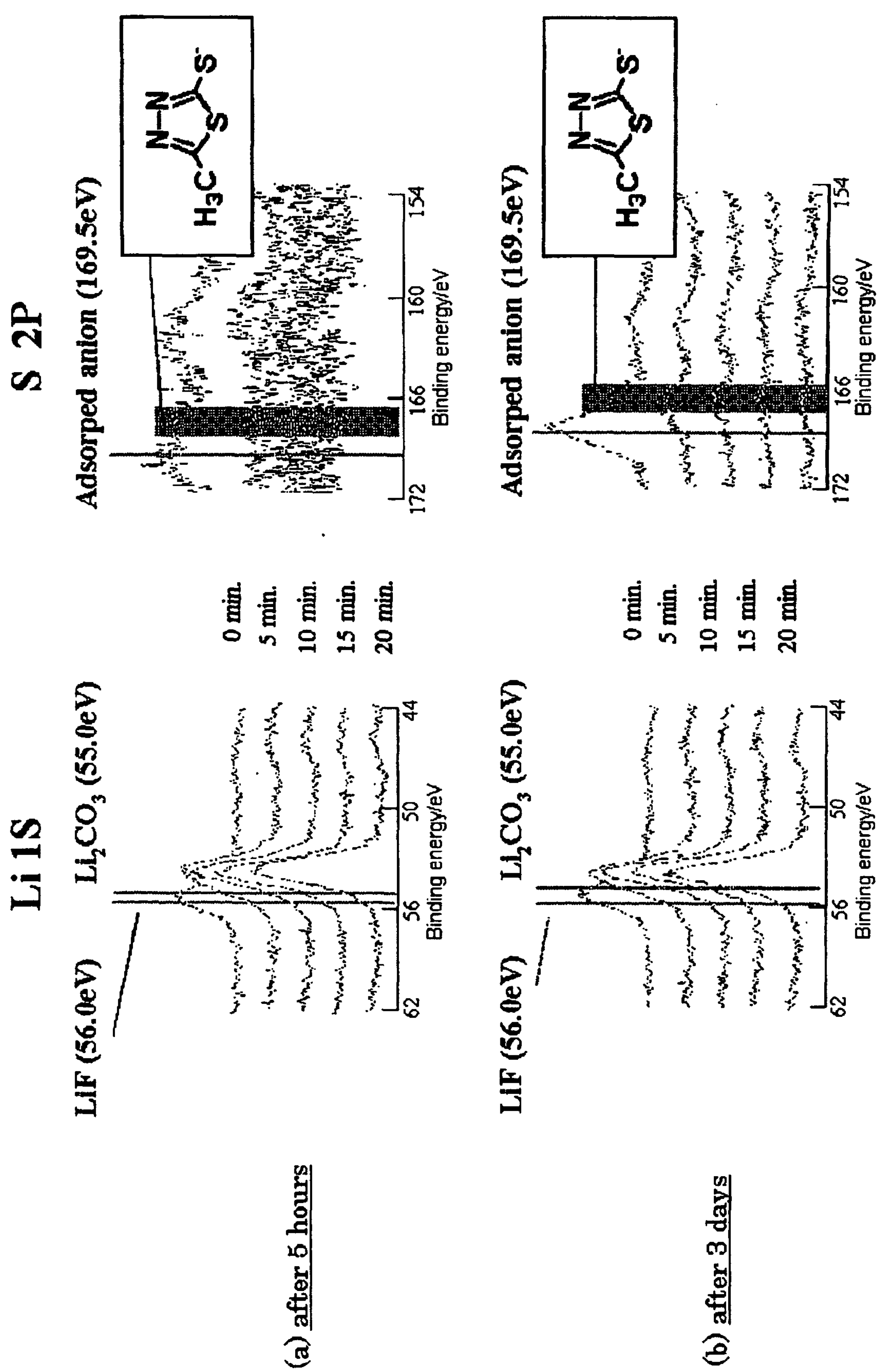
Li 1S
S 2P
LiF (56.0eV)
$Li_2CO_3$ (55.0eV)
Adsorped anion (169.5eV)
0 min.
5 min.
10 min.
15 min.
20 min.
Binding energy/eV
(a) after 5 hours
(b) after 3 days

Fig.8

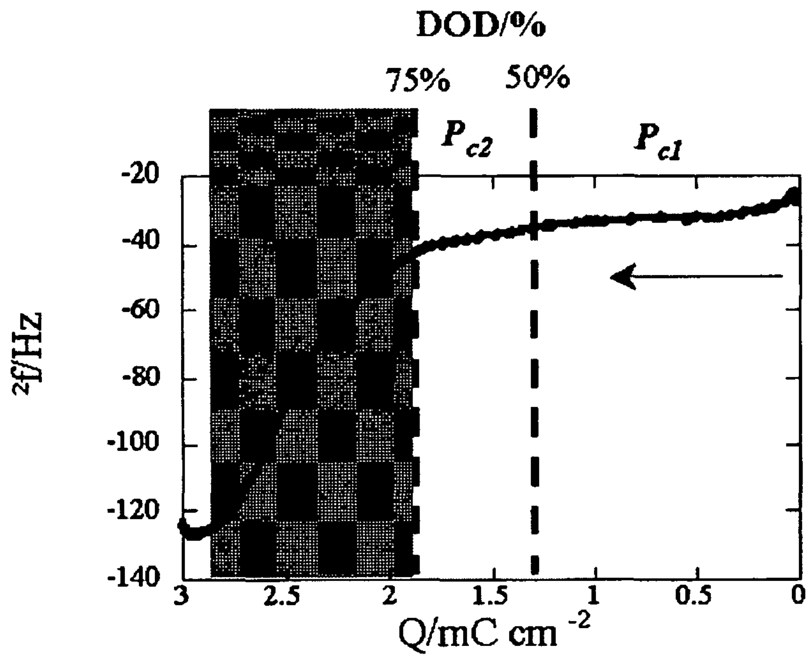


**Meq=-FCfΔ f/Q**

Meq : Mass change per equivalent charge [g/mol]
F : Faraday's constant [96485 C/mol]
Δ f : Frequency change [Hz]
Cf : Mass sensitivity [1,07 x $10^9$ g/Hz]
Q : Charge passed [C]

**46.7** g/mol → $Li_2S$

# Fig.9

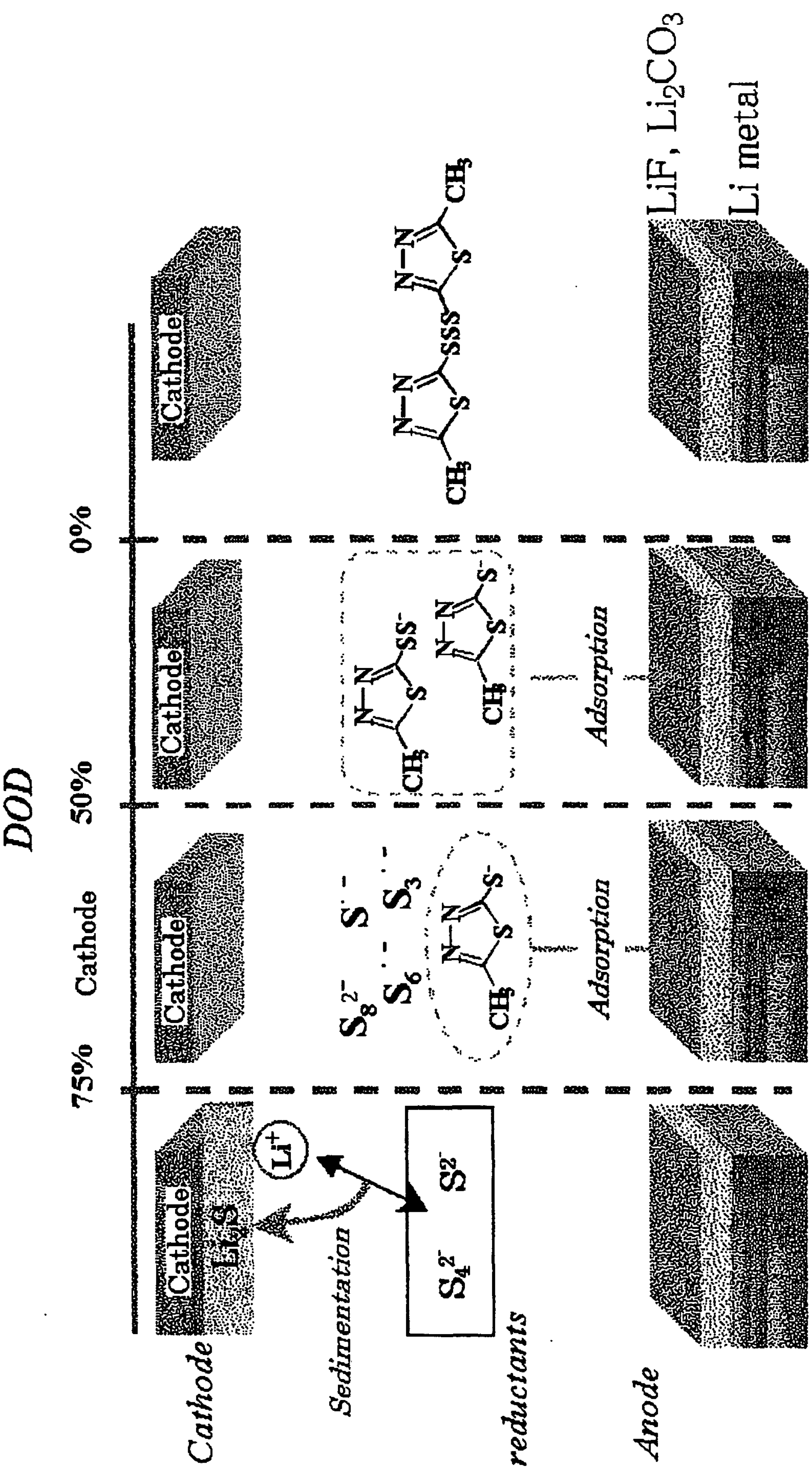

DOD
75%
Cathode
50%
0%
Cathode
Sedimentation
reductants
Anode
Adsorption
Adsorption
LiF, Li2CO3
Li metal

Fig.10

< Oxidation >

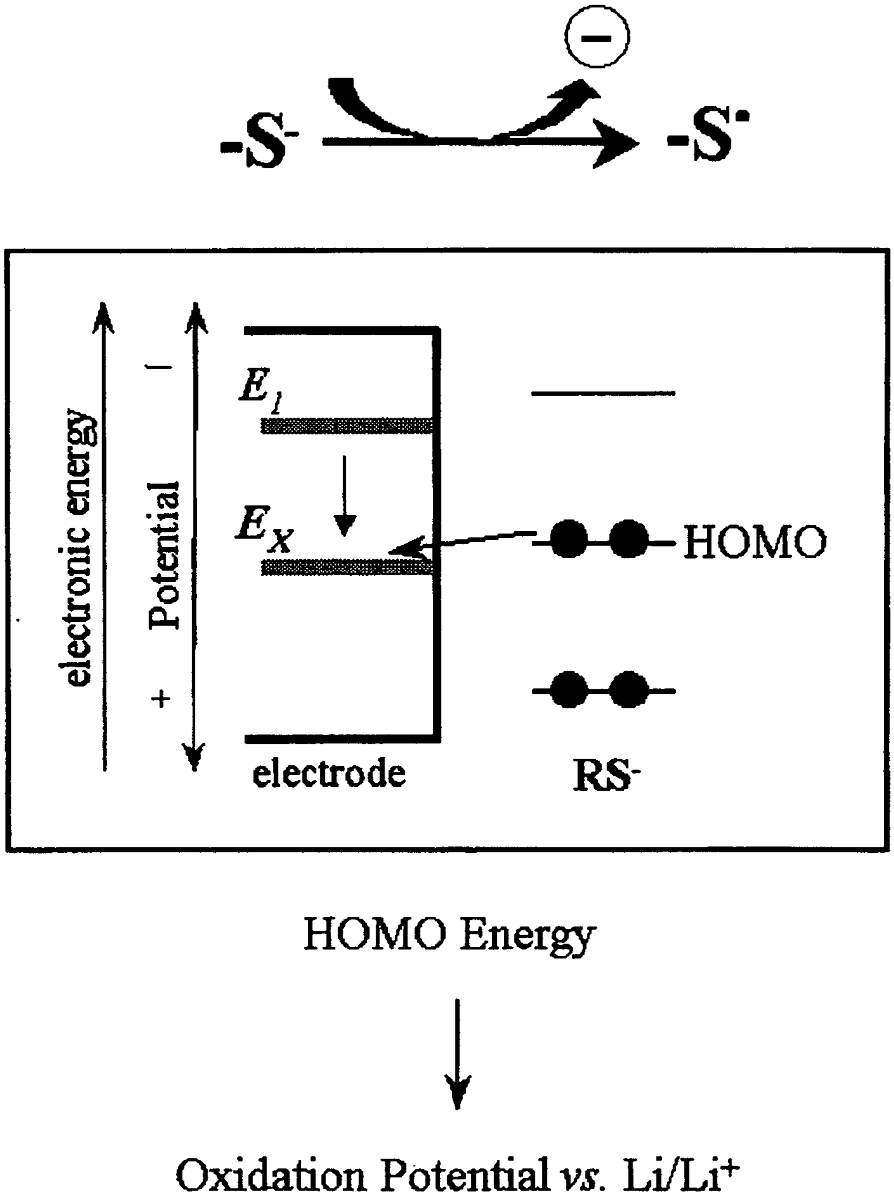

Fig.11

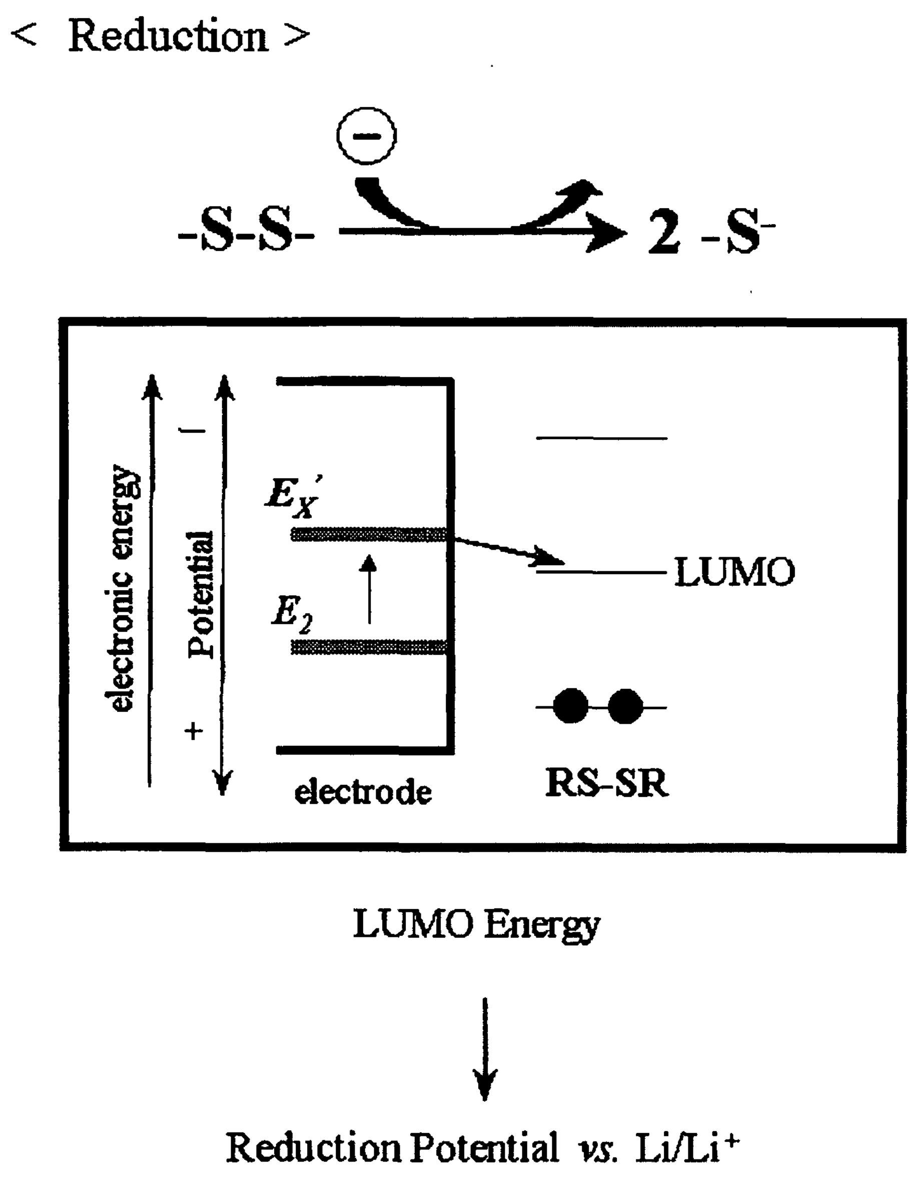
< Reduction >
-S-S-
2 -S-
electronic energy
Potential
−
+
E_X'
E_2
LUMO
electrode
RS-SR
LUMO Energy
Reduction Potential vs. Li/Li+

Fig.12

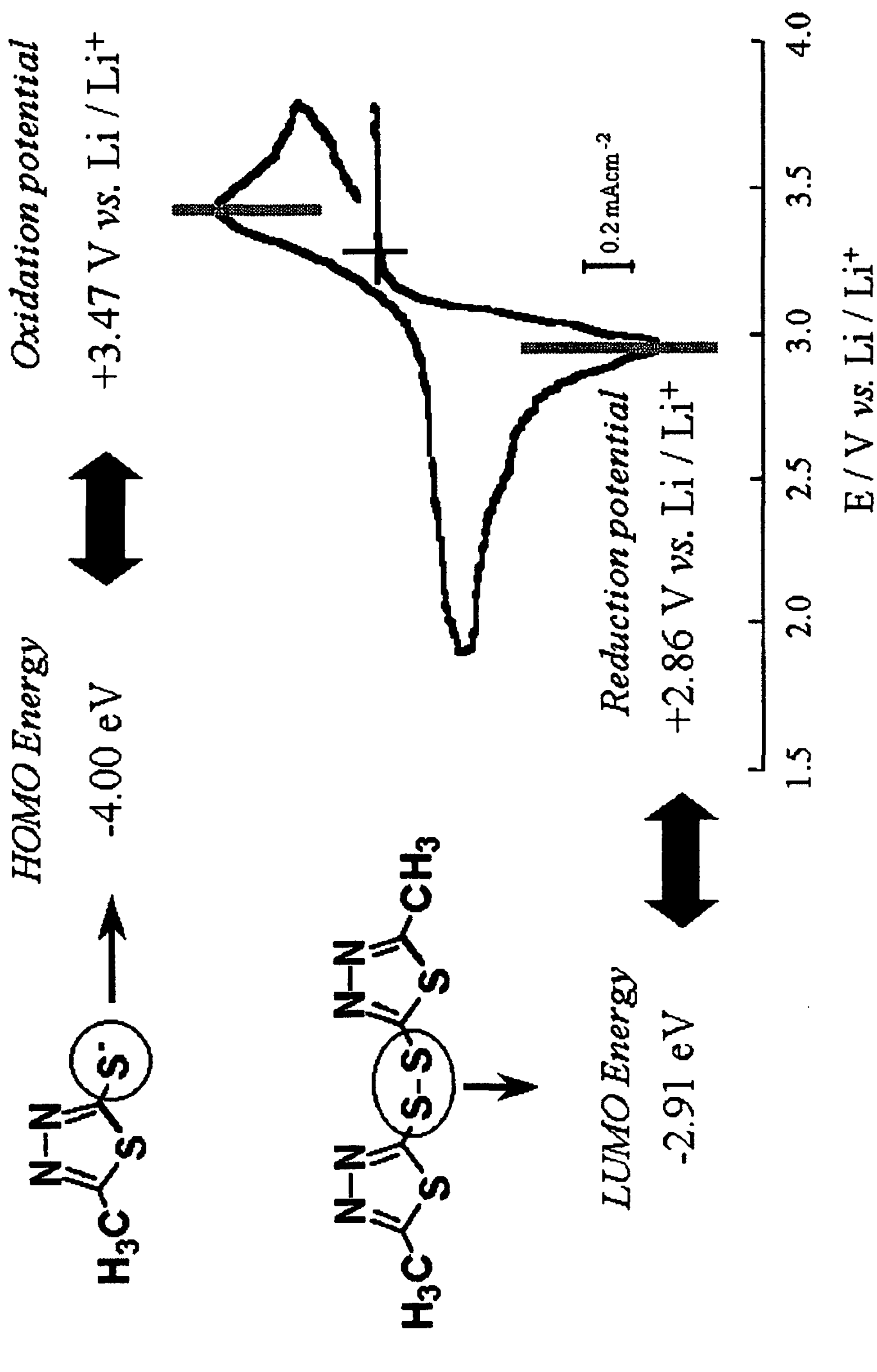
Oxidation potential
+3.47 V vs. Li / Li+
HOMO Energy
-4.00 eV
Reduction potential
+2.86 V vs. Li / Li+
LUMO Energy
-2.91 eV
0.2 mAcm-2
1.5
2.0
2.5
3.0
3.5
4.0
E / V vs. Li / Li+

Fig.13

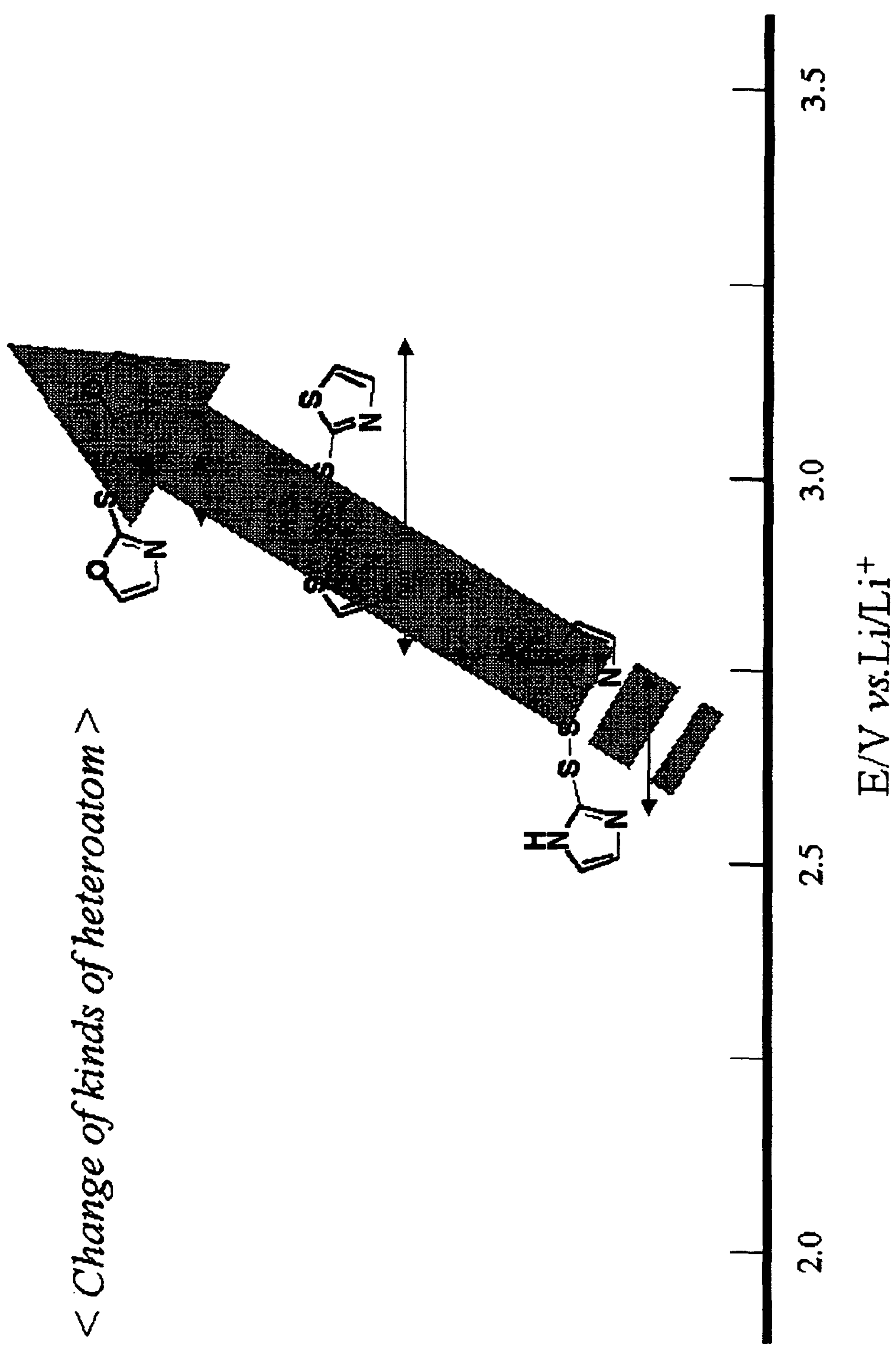

Fig.14

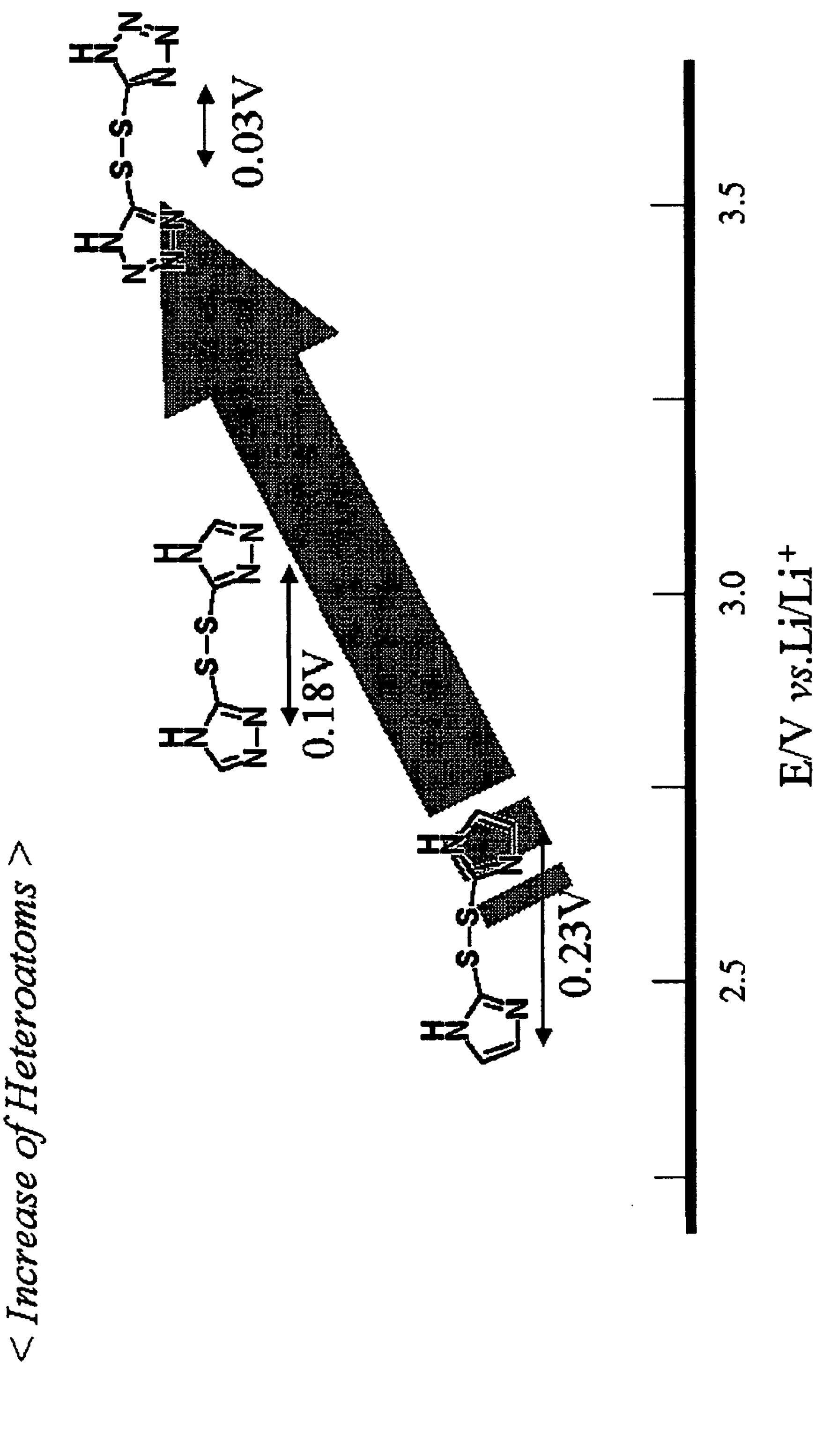

Fig.15

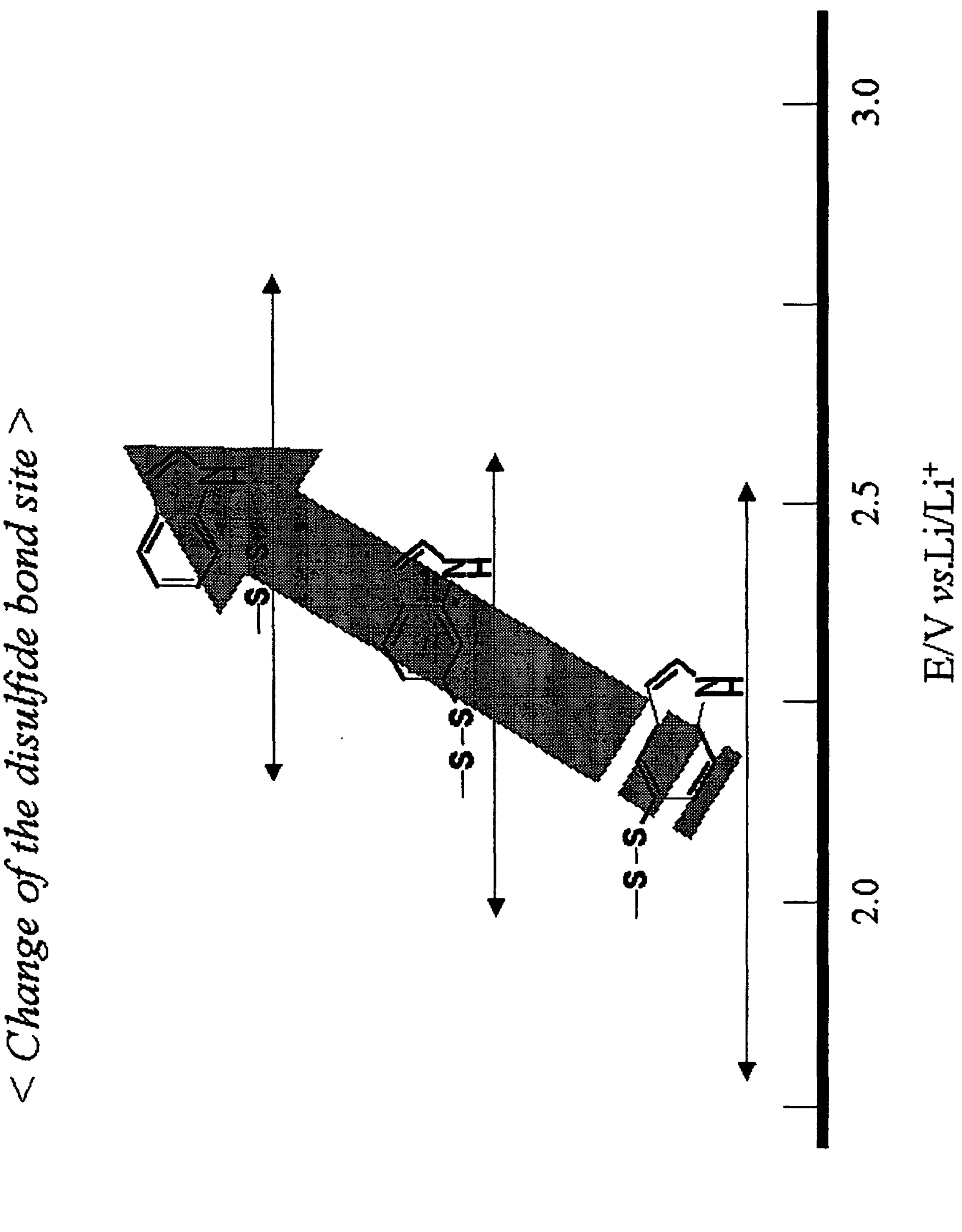

Fig.16

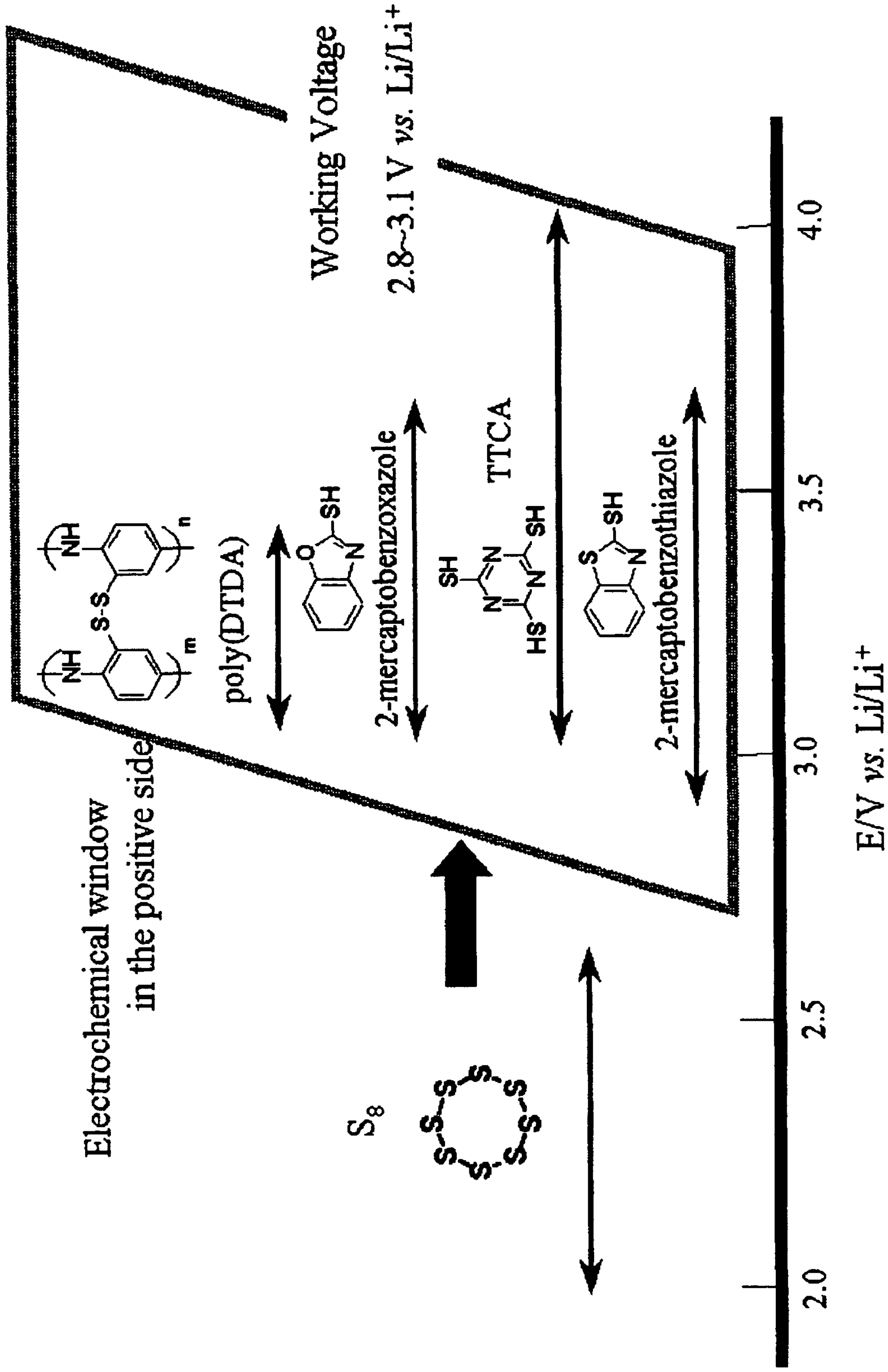
Electrochemical window
in the positive side
Working Voltage
2.8~3.1 V vs. Li/Li+
poly(DTDA)
2-mercaptobenzoxazole
TTCA
2-mercaptobenzothiazole
S8
2.0
2.5
3.0
3.5
4.0
E/V vs. Li/Li+

# Fig.17

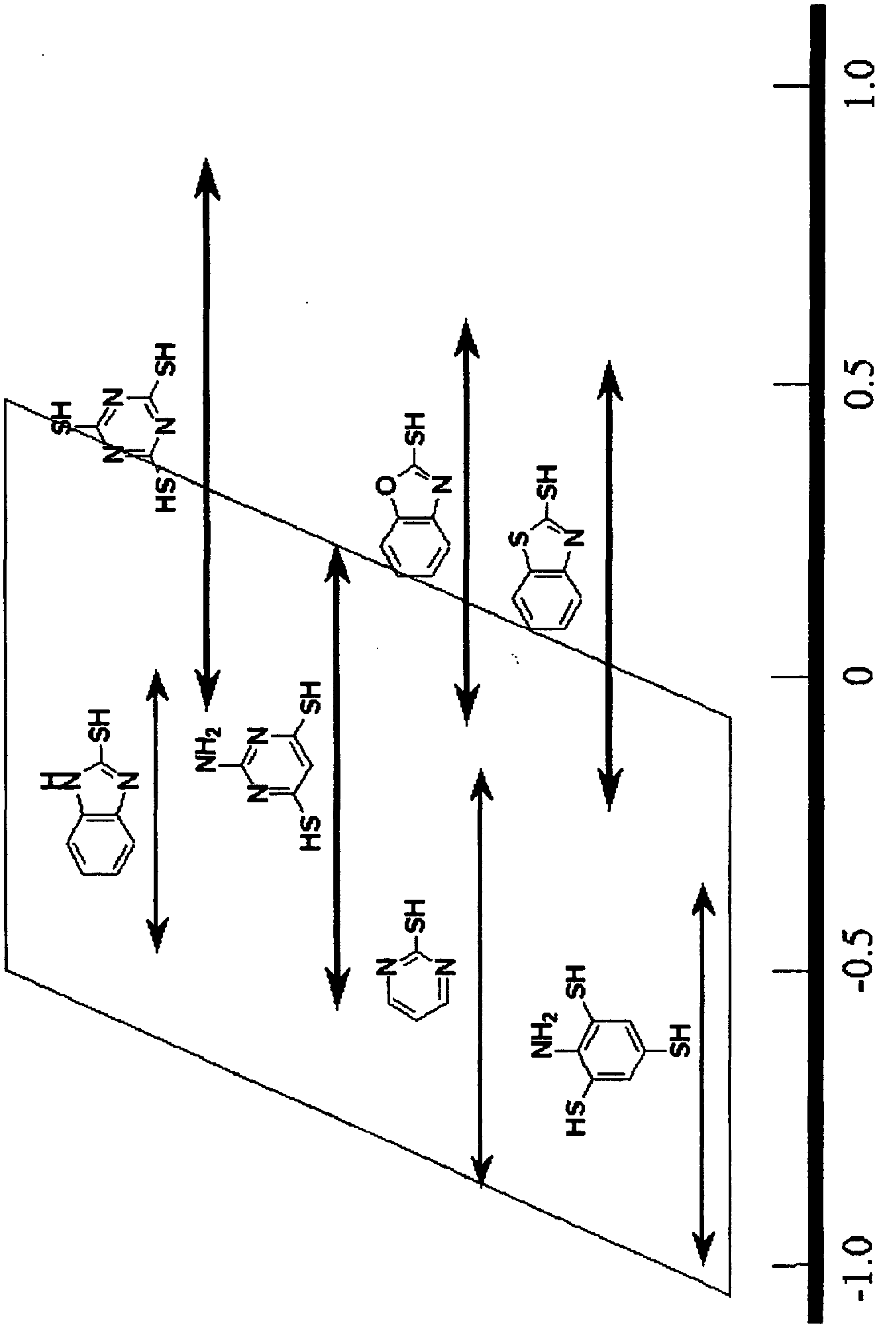

Fig.18

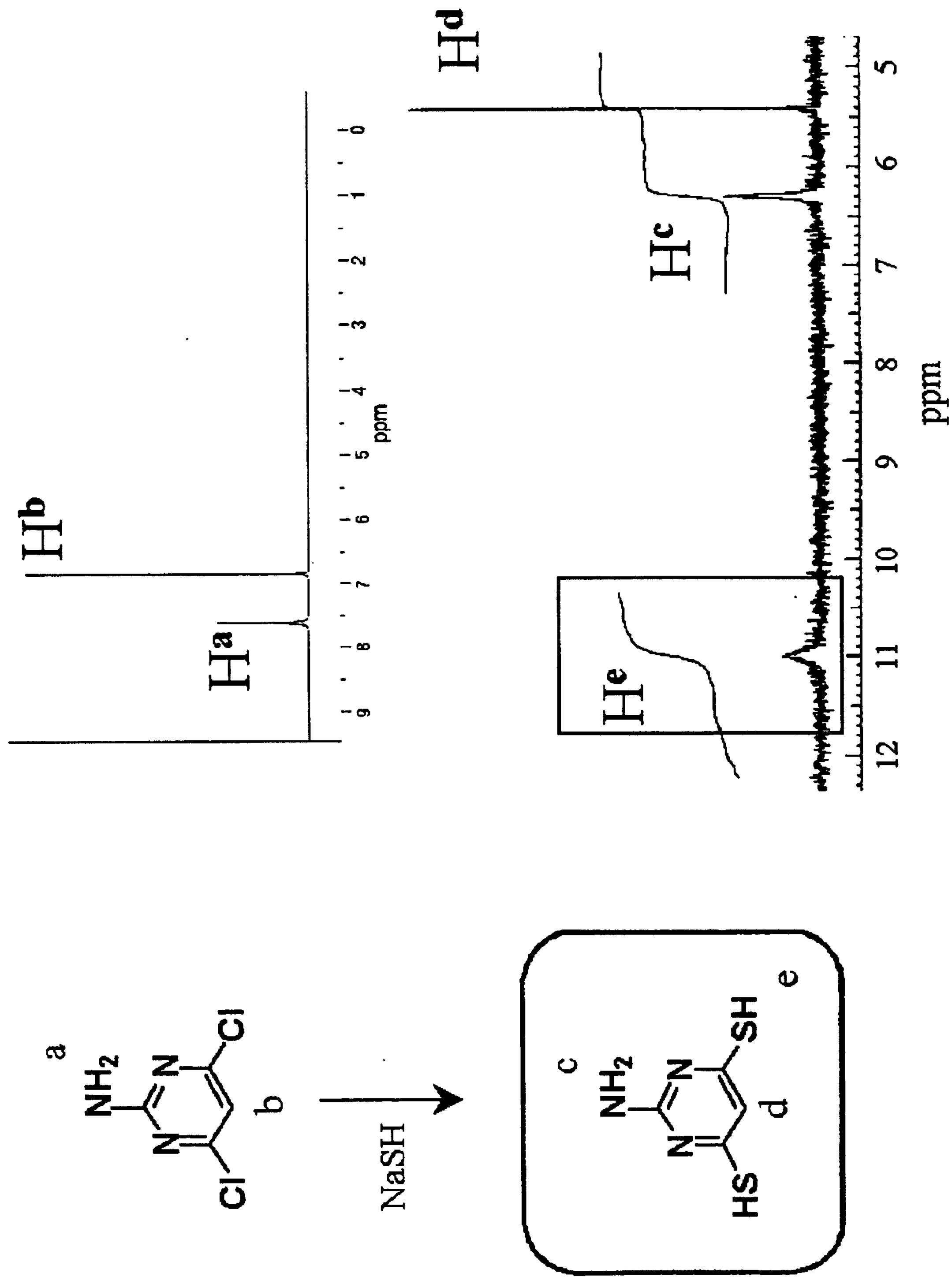

Fig.19

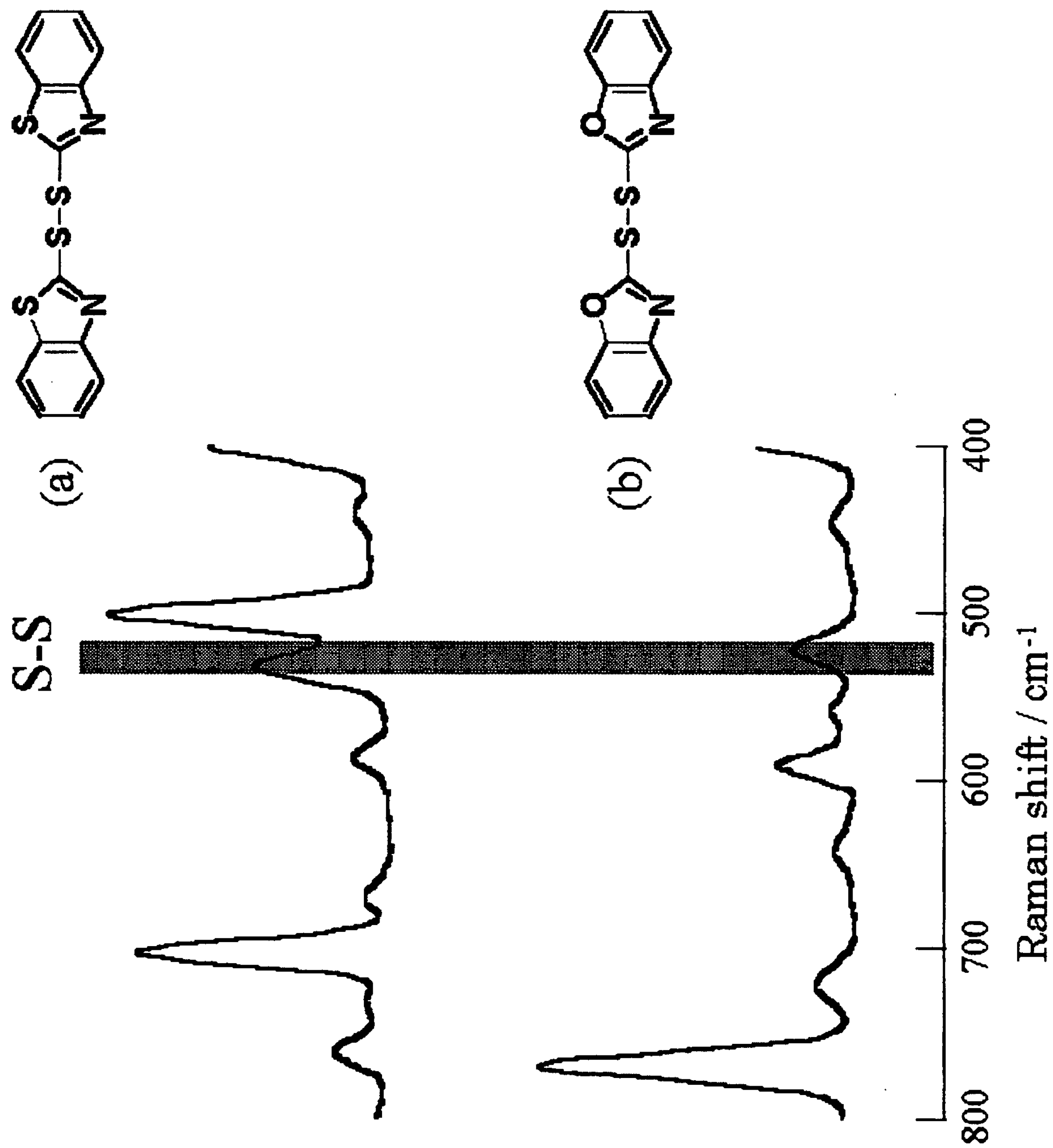

# Fig.20

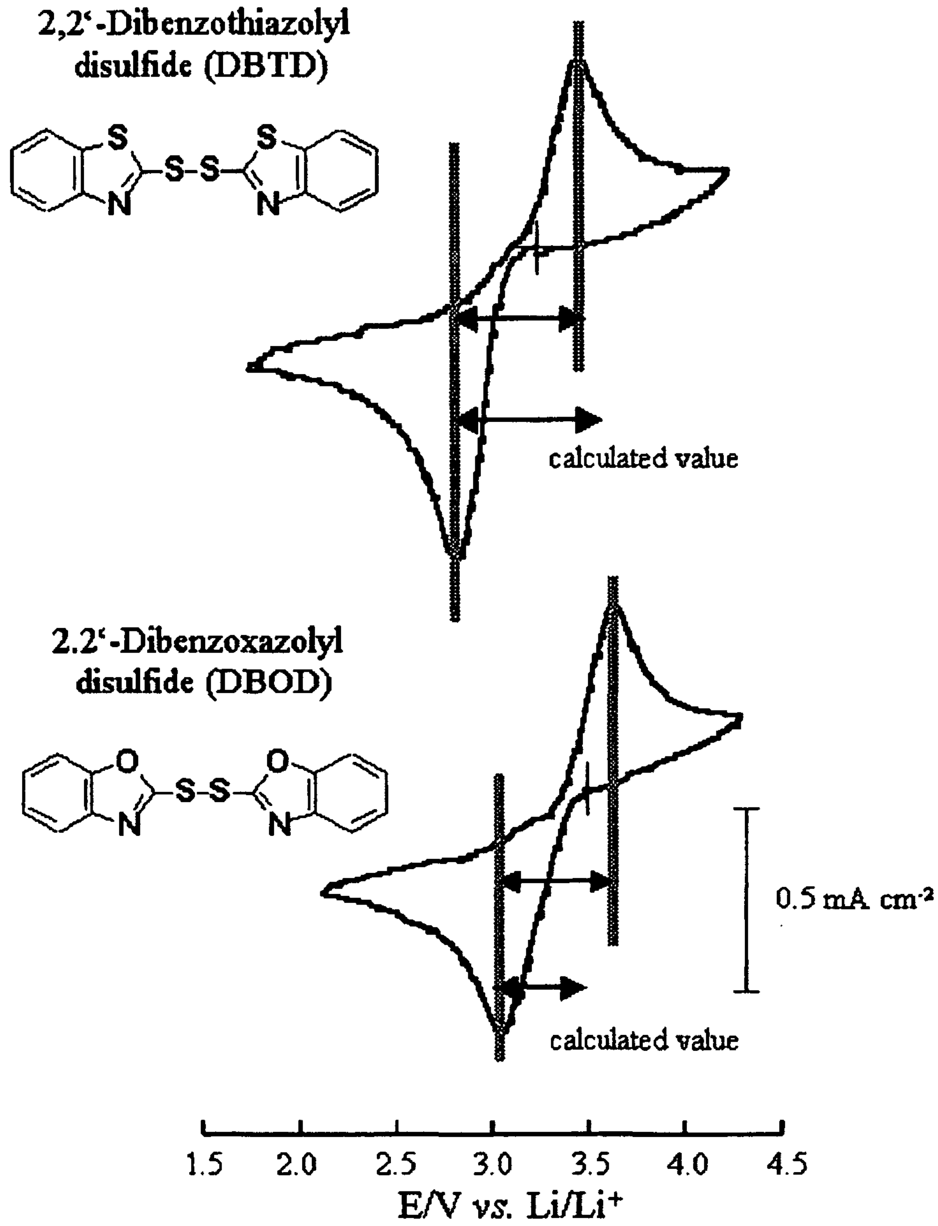

2,2'-Dibenzothiazolyl disulfide (DBTD)
calculated value
2.2'-Dibenzoxazolyl disulfide (DBOD)
0.5 mA cm-2
calculated value
1.5 2.0 2.5 3.0 3.5 4.0 4.5
E/V vs. Li/Li+

Fig.21

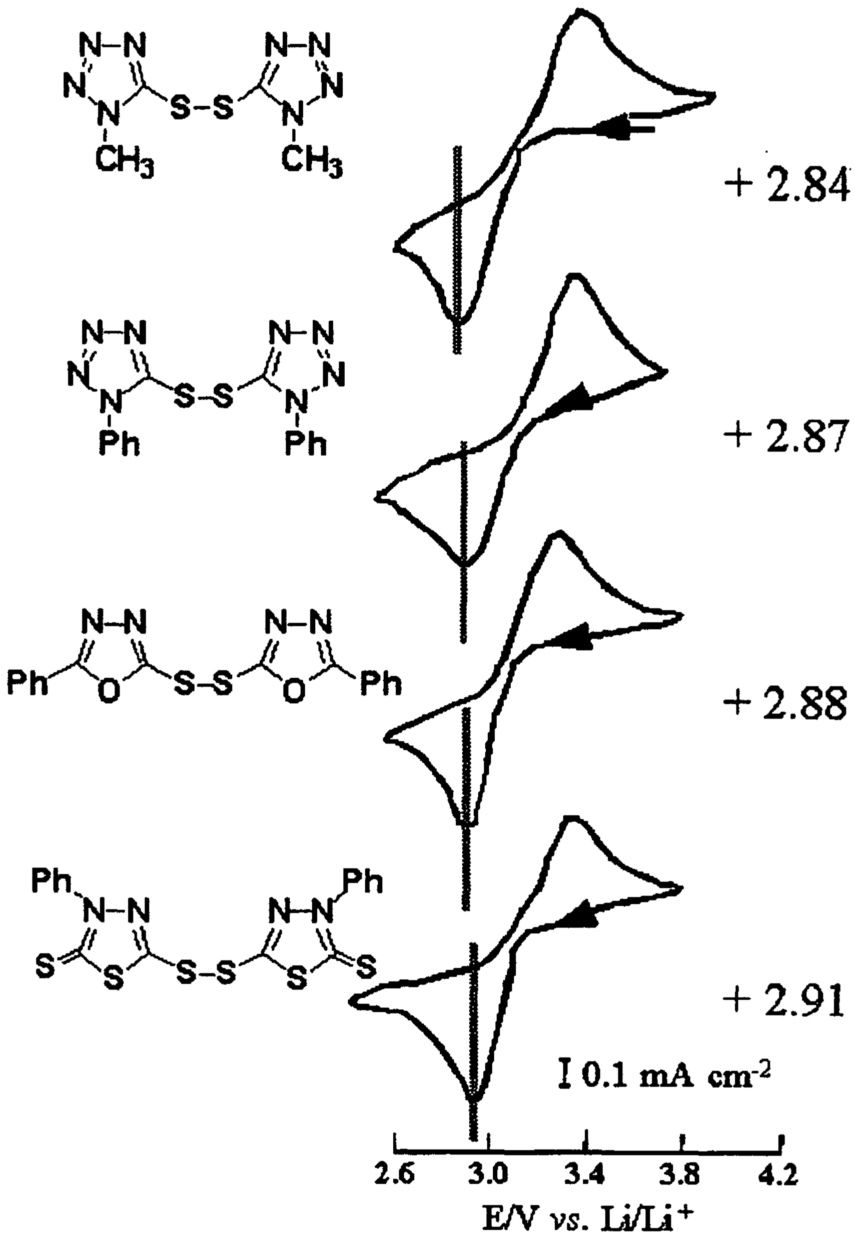

Fig.22

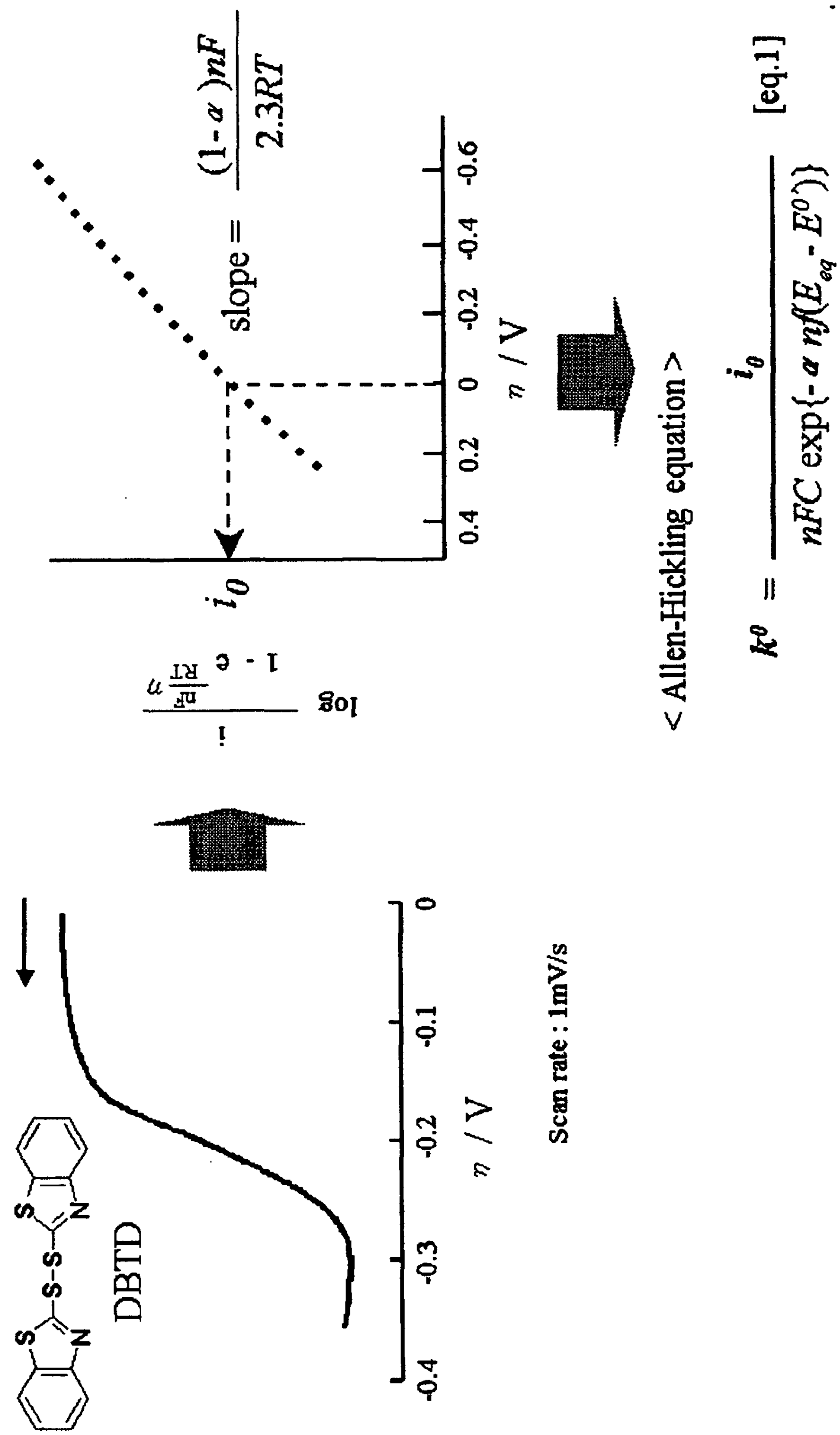

DBTD
η / V
Scan rate : 1mV/s
< Tafel plot >
slope = (1-α)nF / 2.3RT
i0
η / V
< Allen-Hickling equation >
k0 = i0 / nFC exp{-α nf(Eeq - E0)}
[eq.1]

# Fig.23

| *Organosulfur compounds* | $k^{0'}$ *(cm s$^{-1}$)* |
|---|---|
| 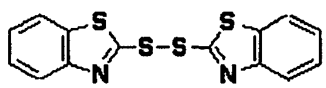 | **4.40 × $10^{-9}$** |
| 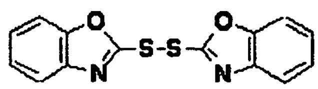 | **9.80 × $10^{-9}$** |
| 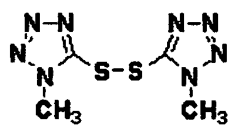 | 1.98 × $10^{-9}$ |
| 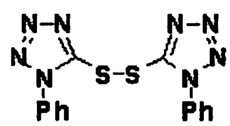 | 2.61 × $10^{-9}$ |
| 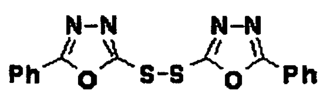 | 3.50 × $10^{-9}$ |
| 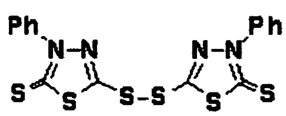 | 5.05 × $10^{-9}$ |
| 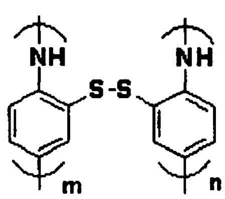 | 1.07 × $10^{-8}$ |
| 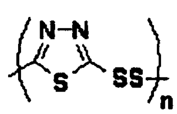 | 1.75 × $10^{-11}$ |

# Fig.24

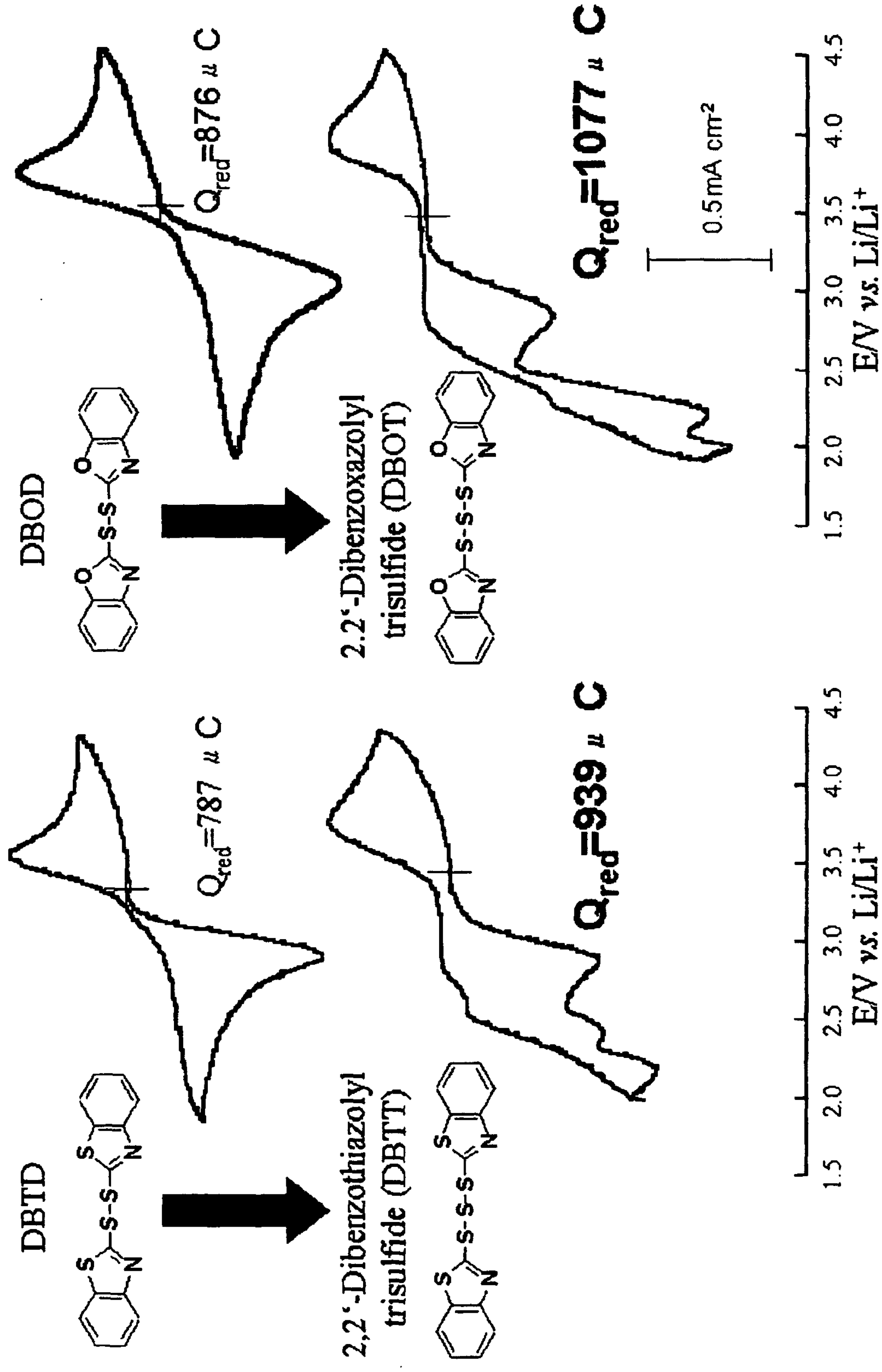
DBOD
2,2'-Dibenzoxazolyl trisulfide (DBOT)
Q_red=876 μC
Q_red=1077 μC
0.5 mA cm^-2
DBTD
2,2'-Dibenzothiazolyl trisulfide (DBTT)
Q_red=787 μC
Q_red=939 μC
1.5 2.0 2.5 3.0 3.5 4.0 4.5
E/V vs. Li/Li+

Fig.25

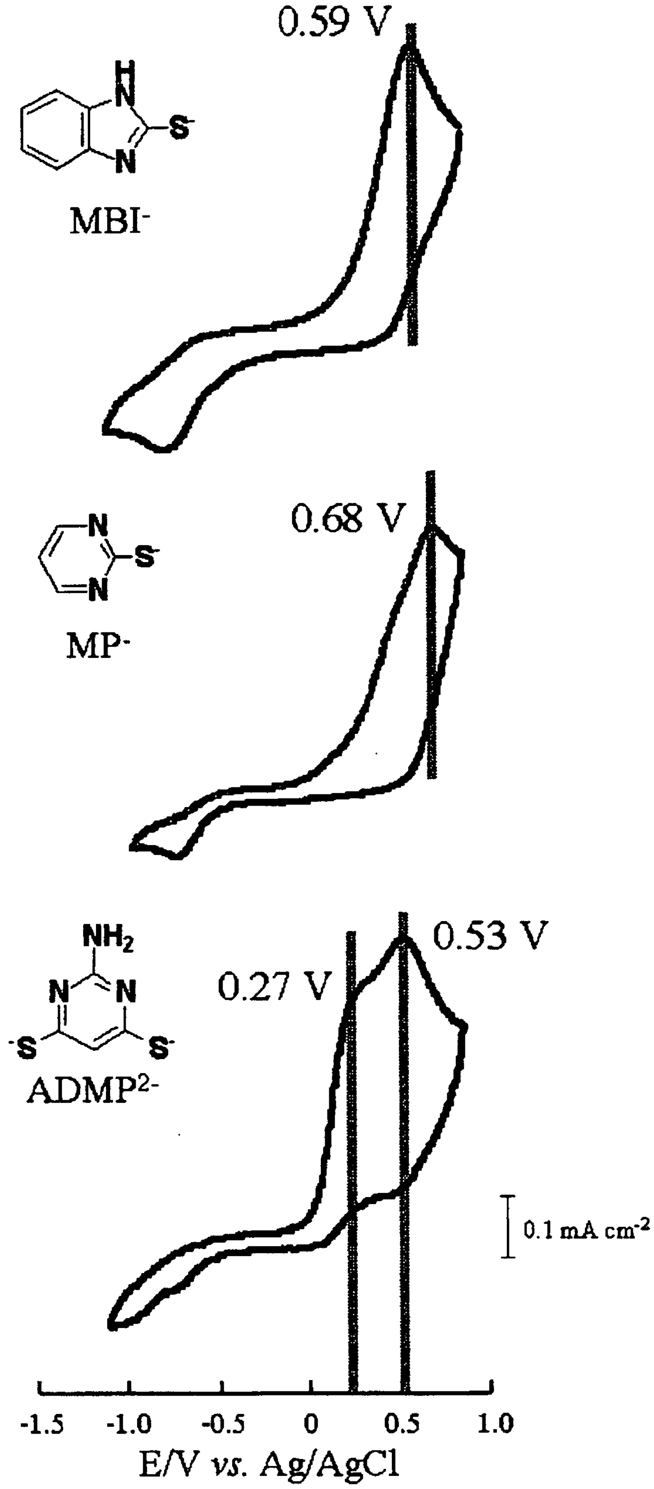
0.59 V
MBI⁻
0.68 V
MP⁻
0.53 V
0.27 V
ADMP2-
0.1 mA cm-2
-1.5
-1.0
-0.5
0
0.5
1.0
E/V vs. Ag/AgCl

# Fig.26

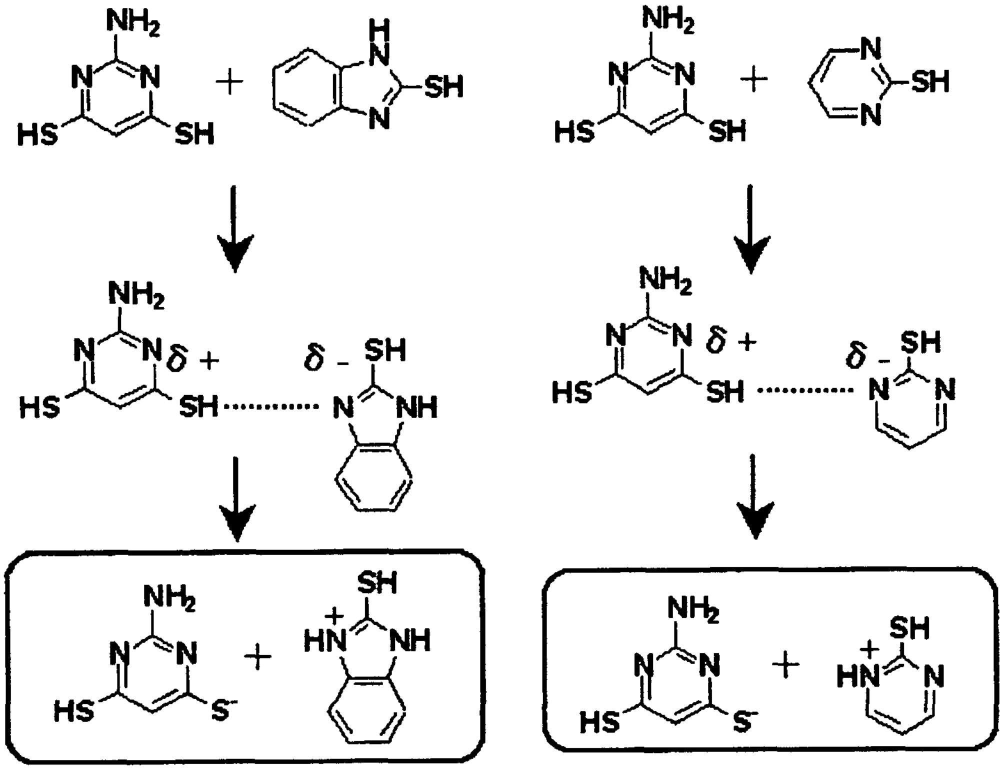

# Fig.27

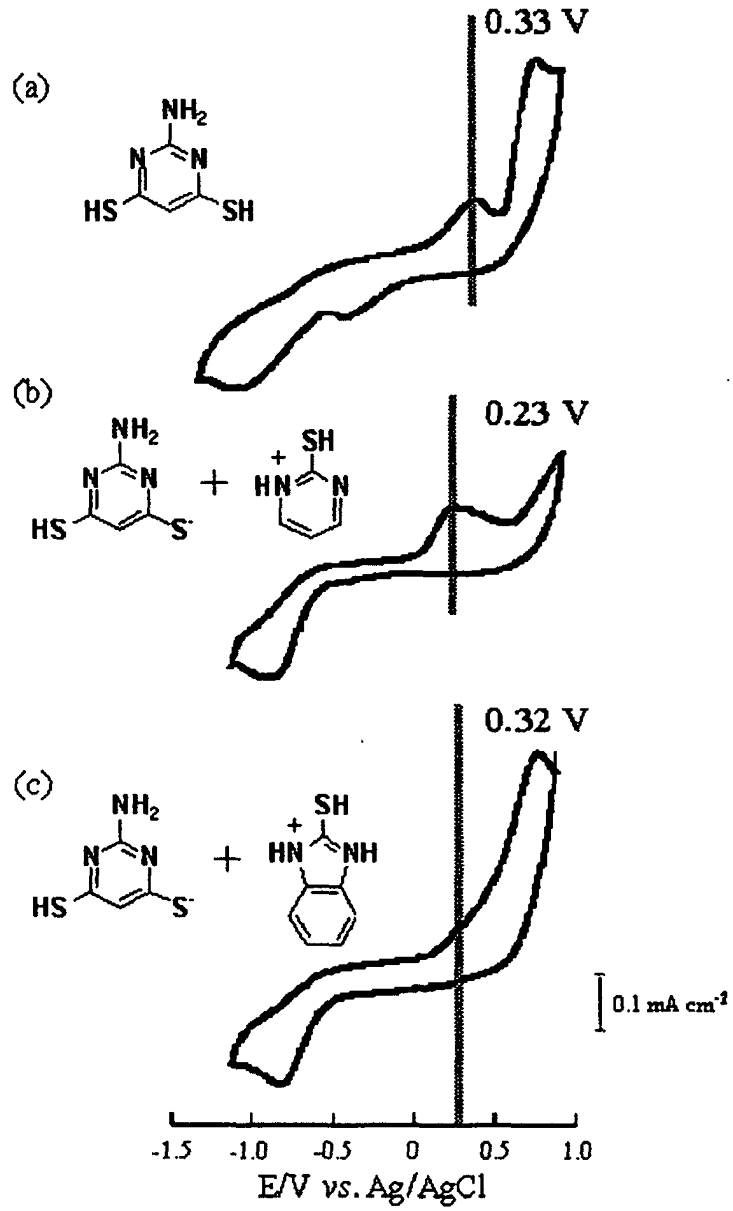

# Fig.28

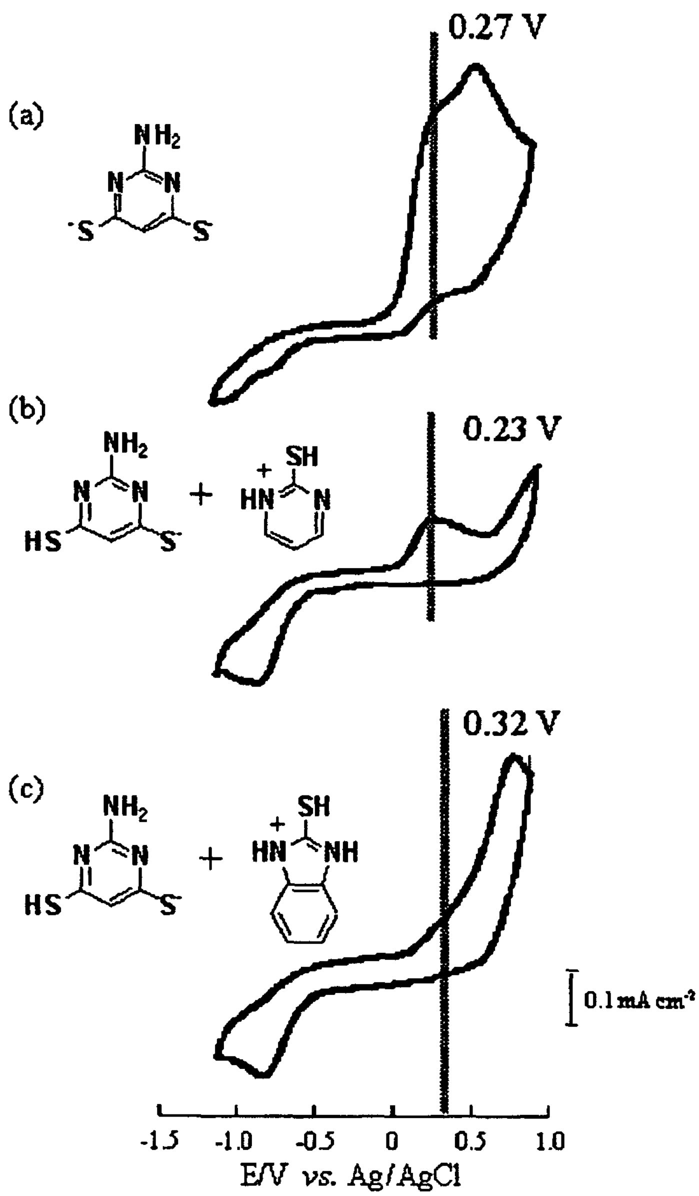

# Fig.29

| *Organosulfur compounds* | $k^0 (cm\ s^{-1})$ |
|---|---|
| 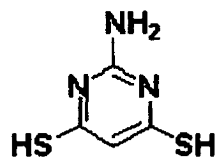 | $2.24 \times 10^{-8}$ |
| 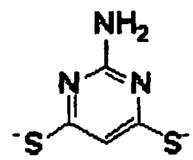 | $7.16 \times 10^{-4}$ |
| 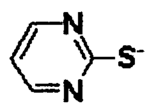 | $2.66 \times 10^{-7}$ |
| 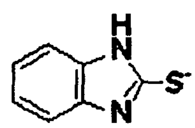 | $8.93 \times 10^{-7}$ |
| 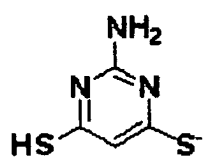 + 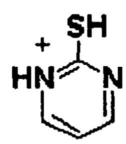 | $1.03 \times 10^{-7}$ |
| 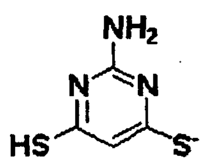 + 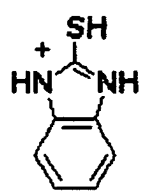 | $5.62 \times 10^{-8}$ |

Fig.30

***Discharge***

Anode $2n\,Li \longrightarrow 2n\,Li^{+} + 2n\,e^{-}$ (eq. 1)

Cathode $-(S\text{-}R\text{-}R)_n- + 2n\,e^{-} \longrightarrow n\,({}^{-}S\text{-}R\text{-}S^{-})$ (eq. 2)

***Charge***

Anode $2n\,Li^{+} + 2n\,e^{-} \longrightarrow 2n\,Li$ (eq. 3)

Cathode $n\,({}^{-}S\text{-}R\text{-}S^{-}) \longrightarrow -(S\text{-}R\text{-}R)_n- + 2n\,e^{-}$ (eq. 4)

Fig.31

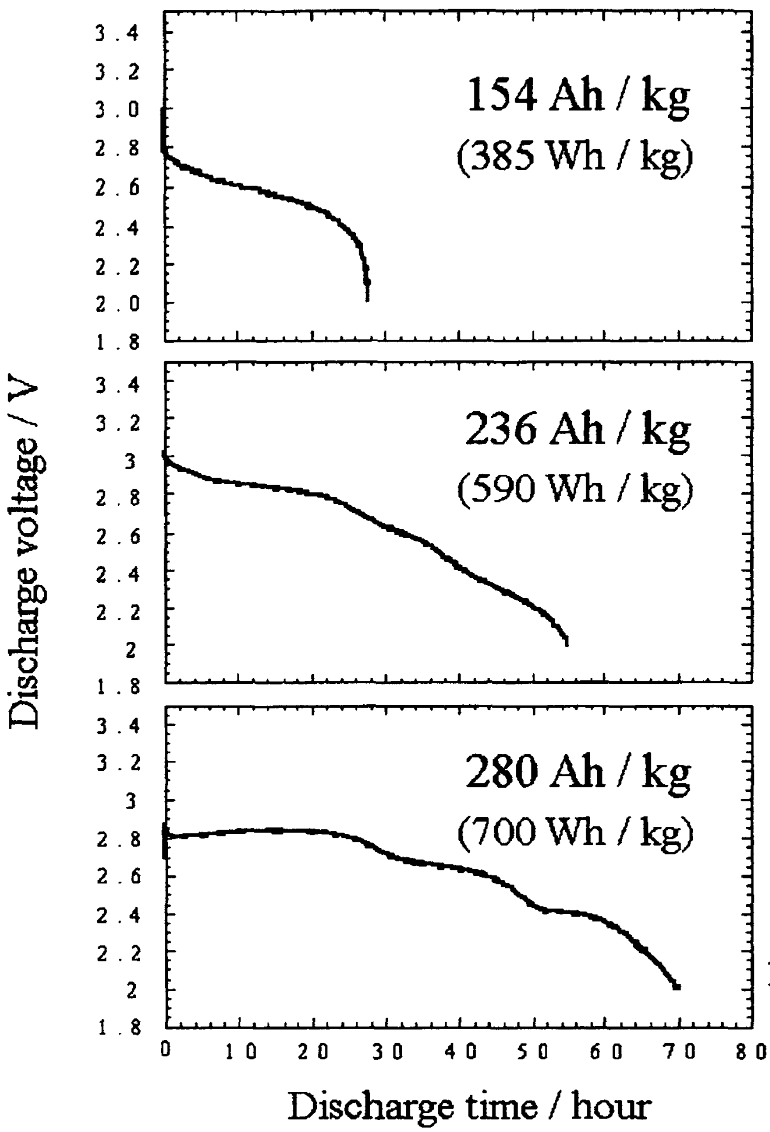


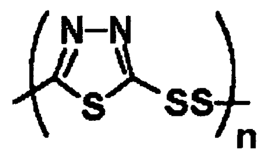

poly(DMcT-disulfide)

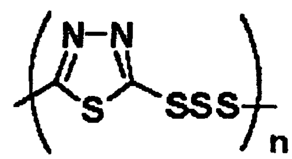

poly(DMcT-trisulfide)

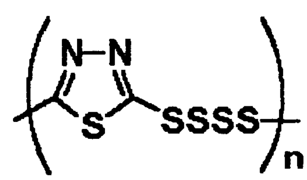

poly(DMcT-tetrasulfide)

Fig.32

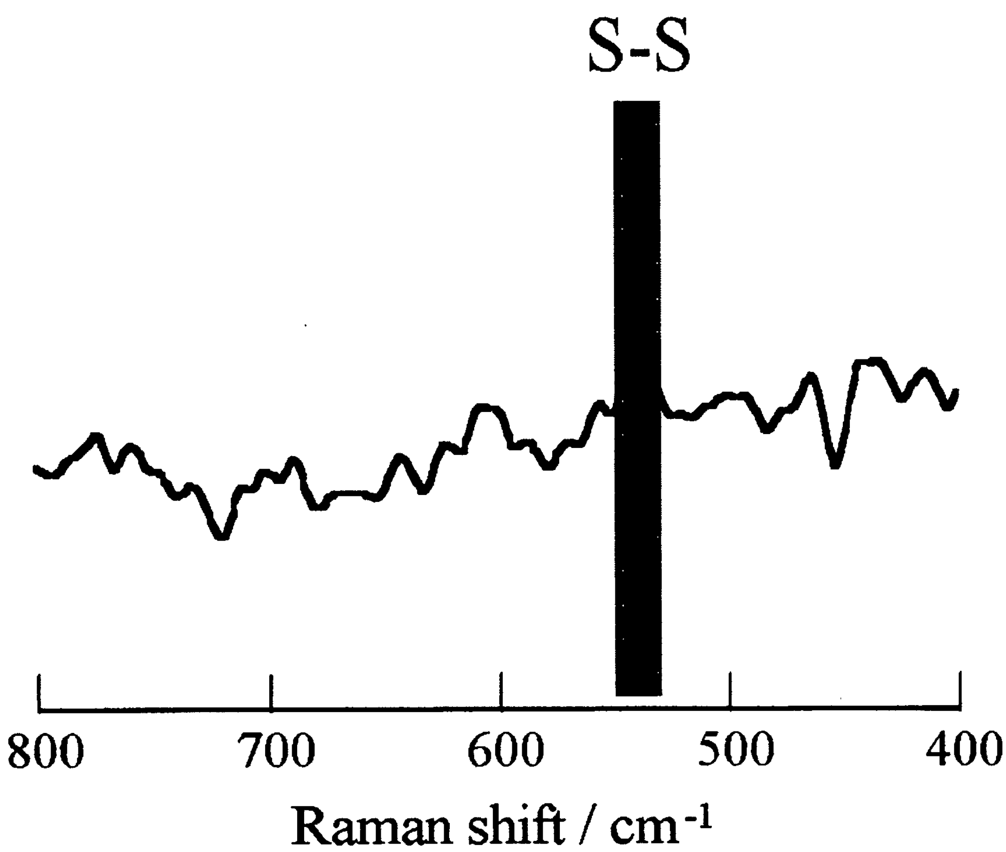

Fig.33

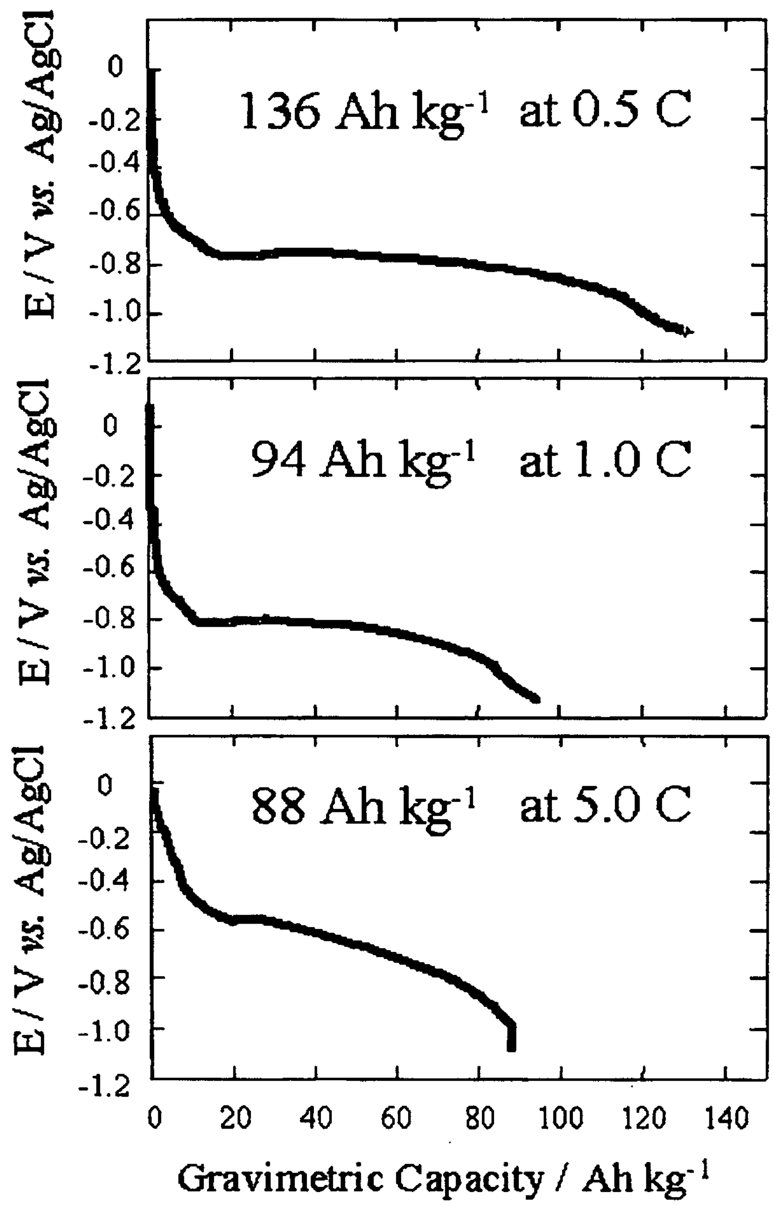
136 Ah kg-1 at 0.5 C
94 Ah kg-1 at 1.0 C
88 Ah kg-1 at 5.0 C
E / V vs. Ag/AgCl
0
-0.2
-0.4
-0.6
-0.8
-1.0
-1.2
0
20
40
60
80
100
120
140
Gravimetric Capacity / Ah kg-1

Fig.34

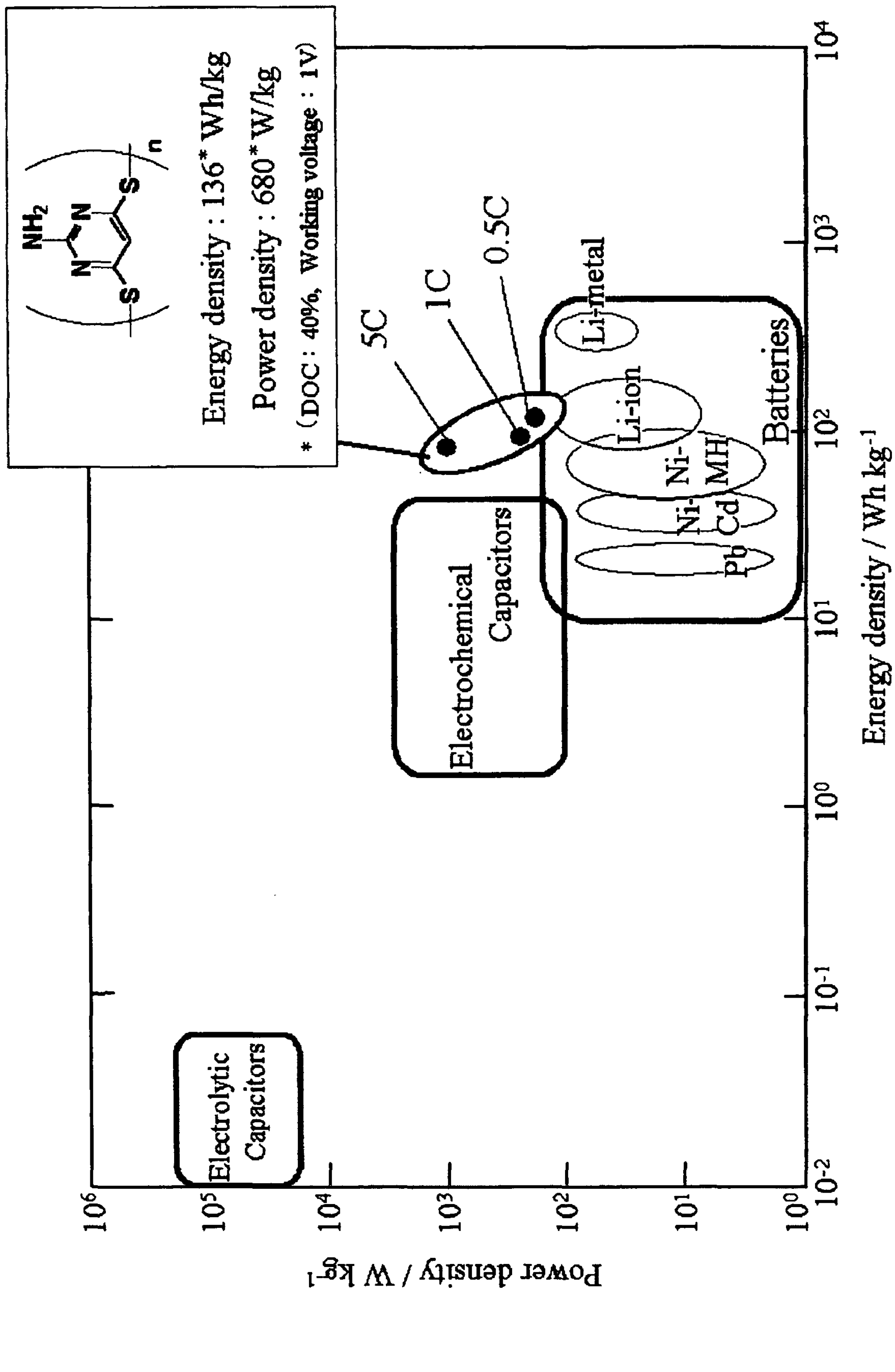
Energy density : 136* Wh/kg
Power density : 680* W/kg
* (DOC : 40%, Working voltage : 1V)
5C
1C
0.5C
Li-metal
Li-ion
Ni-MH
Ni-Cd
Pb
Batteries
Electrochemical Capacitors
Electrolytic Capacitors
Energy density / Wh kg-1
Power density / W kg-1

Fig.35

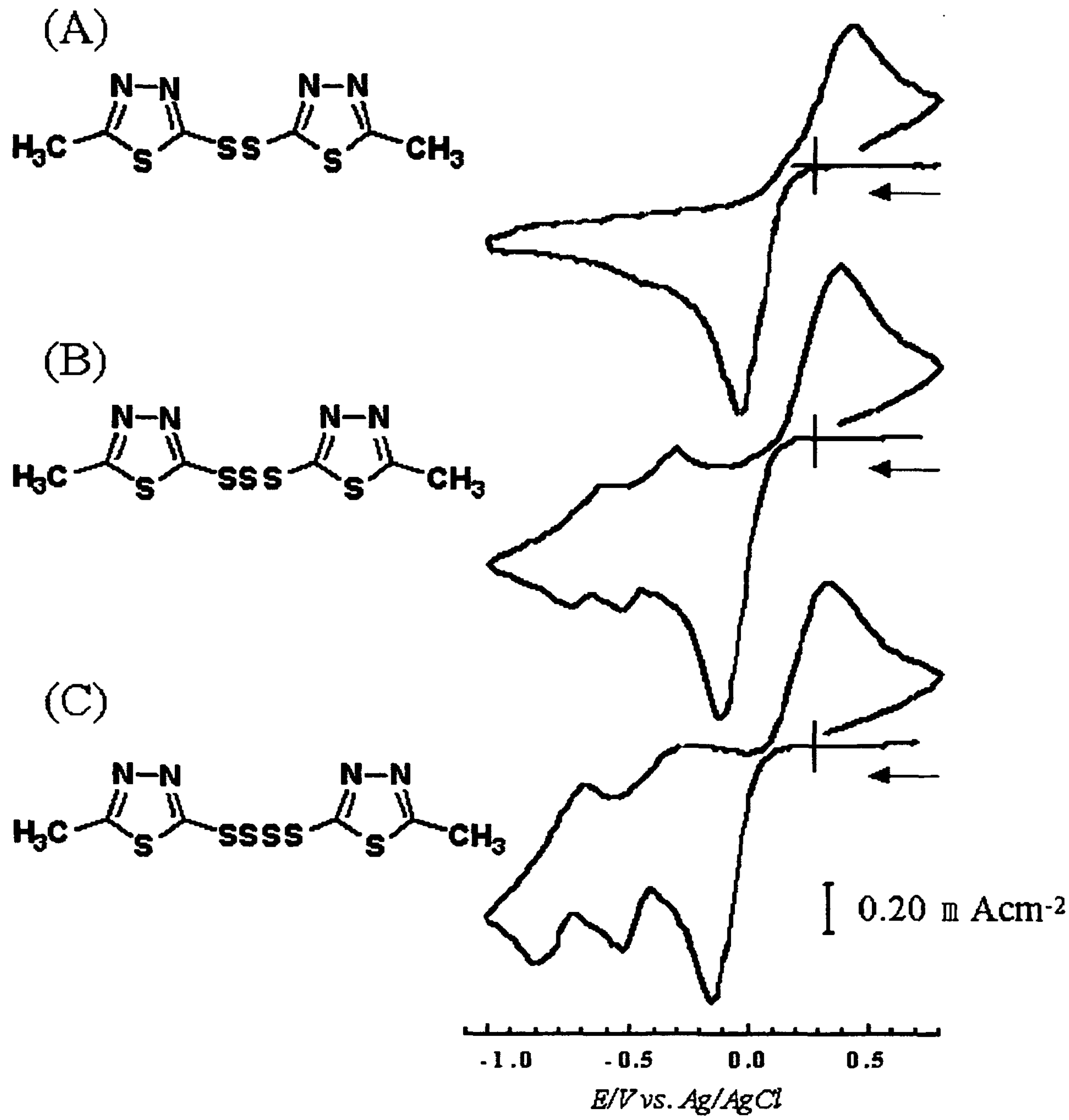

Fig.36

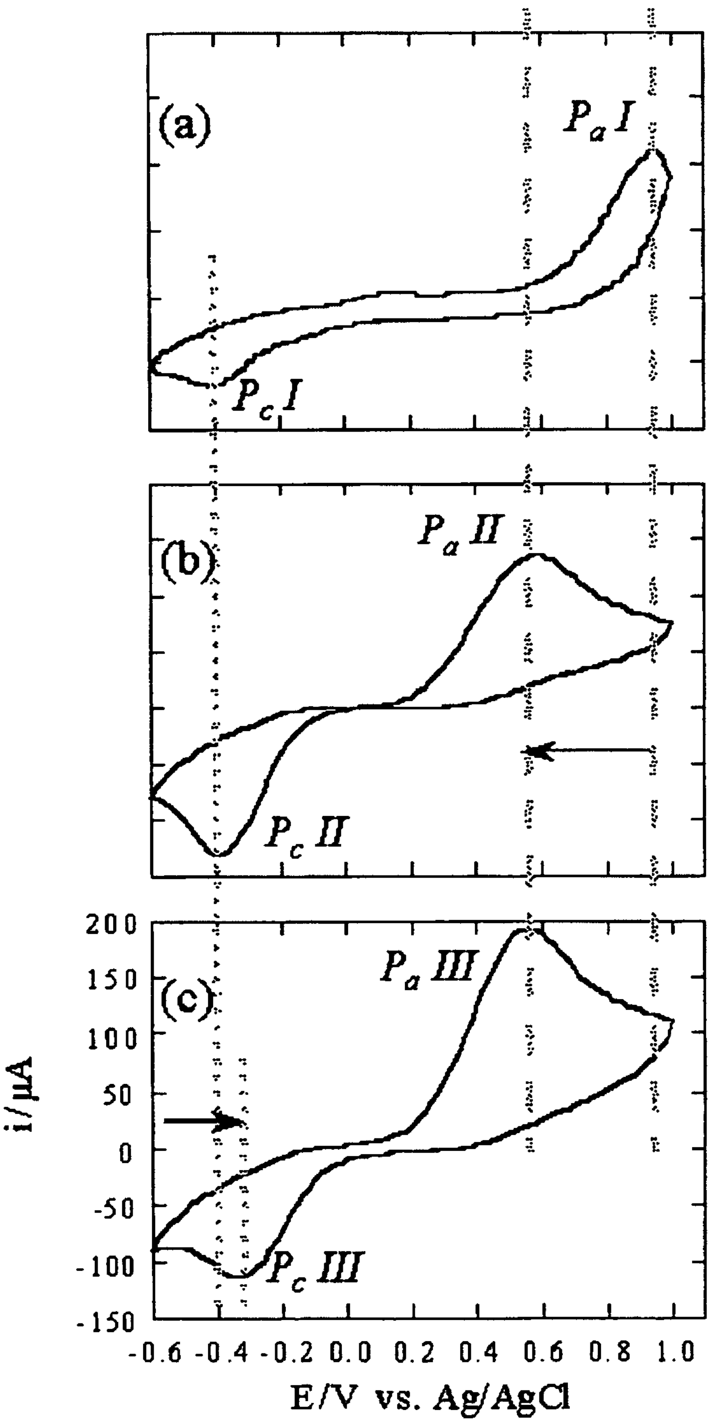
(a)
$P_a$ I
$P_c$ I
(b)
$P_a$ II
$P_c$ II
(c)
$P_a$ III
$P_c$ III
200
150
100
50
0
-50
-100
-150
i/μA
-0.6 -0.4 -0.2 0.0 0.2 0.4 0.6 0.8 1.0
E/V vs. Ag/AgCl

# Fig.37

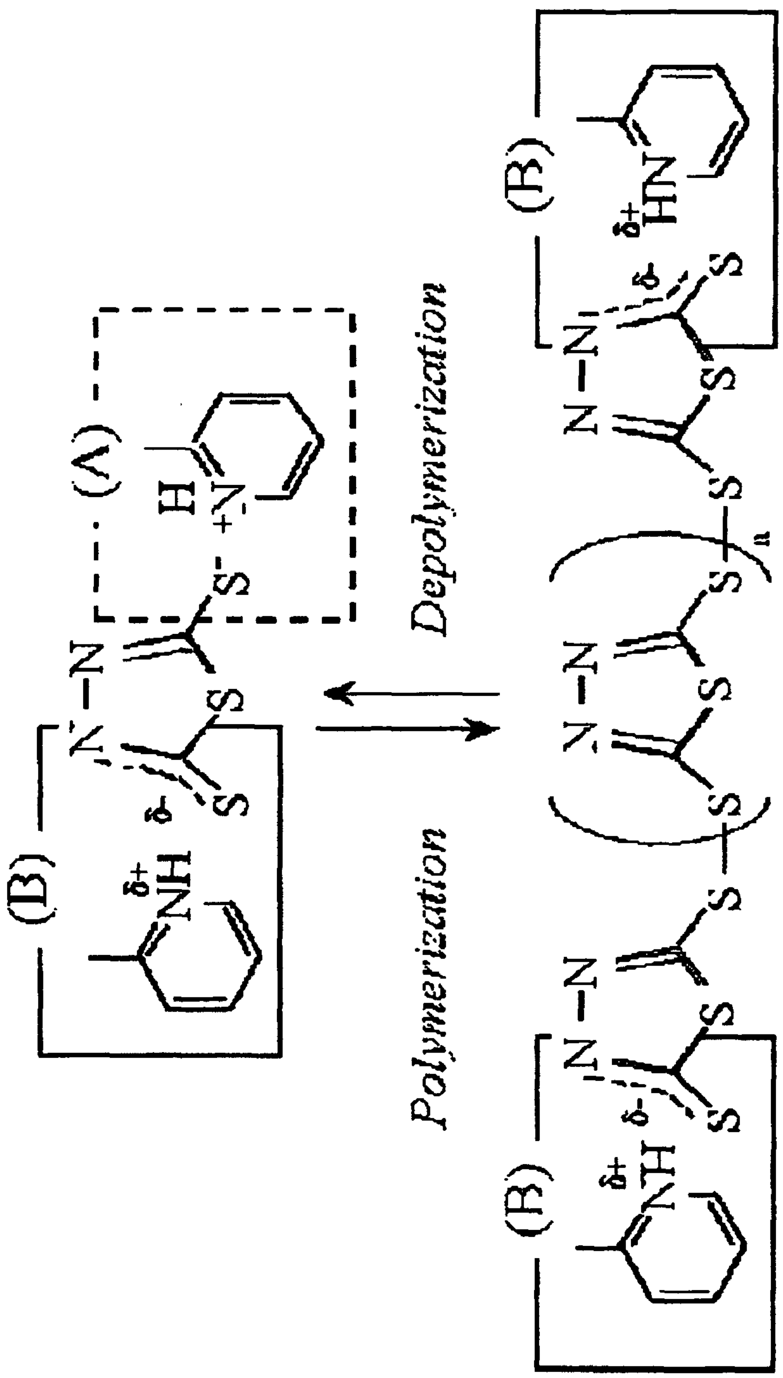

## INTERNATIONAL SEARCH REPORT

International application No.
PCT/JP0203053

**A. CLASSIFICATION OF SUBJECT MATTER**

Int.Cl[7] H01M4/60, H01M10/40, C08G75/14

According to International Patent Classification (IPC) or to both national classification and IPC

**B. FIELDS SEARCHED**

Minimum documentation searched (classification system followed by classification symbols)

Int.Cl[7] H01M4/60, H01M10/40, C08G75/14

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

JICST FILE 010, 011(JOIS)
JISURUFIDO, SURUFIDO, SS, S-S, KW:DENCHI (in Japanese) etc.

**C. DOCUMENTS CONSIDERED TO BE RELEVANT**

| Category* | Citation of document, with indication, where appropriate, of the relevant passages | Relevant to claim No. |
|---|---|---|
| X | US 5723230 A (Katsuhiko NAOI), 03 March, 1998 (03.03.98), Column 1, line 45 to column 2, line 9 & JP 9-139213 A | 1-4 |
| X | US 5882819 A (Katsuhiko NAOI), 16 March, 1999 (16.03.99), Column 2, line 41 to column 3, line 41 & JP 9-153362 A | 1-4 |
| X | JP 9-293513 A (Yazaki Corp.), 11 November, 1997 (11.11.97), Par. Nos. [0008], [0013] (Family: none) | 1-4 |

[X] Further documents are listed in the continuation of Box C.   [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June, 2002 (19.06.02) | 02 July, 2002 (02.07.02) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP02/03053

C (Continuation). DOCUMENTS CONSIDERED TO BE RELEVANT

| Category* | Citation of document, with indication, where appropriate, of the relevant passages | Relevant to claim No. |
|---|---|---|
| A | US 5882819 A (Katsuhiko NAOI), 16 March, 1999 (16.03.99), Column 2, line 64 to column 5, line 20 & JP 10-265567 A | 1-4 |
| A | JP 9-153363 A (Yazaki Corp.), 10 June, 1997 (10.06.97), Par. No. [0008] (Family: none) | 1-4 |
| A | JP 11-273729 A (Yazaki Corp.), 08 October, 1999 (08.10.99), Par. Nos. [0006] to [0012] (Family: none) | 1-4 |
| A | Toshiki WAKABAYASHI et al., "Fukusokanshiki Yuki Polysulfide Kagobutsu no Denki Kagakuteki Kyodo to Energy Chozo Zairyo to shiteno Kanosei (2)", 41th Battery Symposium in Japan, The Committee of Battery Technology, The Electrochemical Society of Japan, 20 November, 2000 (20.11.00), pages 482 to 483 | 1-4 |
| A | Noboru KOYAMA, "Io'u kei Seikyoku Zairyo", Kogyo Zairyo, Vol.48, No.4, The Nikkan Kogyo Shinbun, Ltd., 01 April, 2000 (01.04.00), pages 41 to 44 | 1-4 |

Form PCT/ISA/210 (continuation of second sheet) (July 1998)